(19) Europäisches Patentamt
European Patent Office
Office européen des brevets

(11) EP 4 791 082 A1

(12) EUROPEAN PATENT APPLICATION
published in accordance with Art. 153(4) EPC

(43) Date of publication:
**12.08.2026 Bulletin 2026/33**

(21) Application number: **24884971.3**

(22) Date of filing: **01.11.2024**

(51) International Patent Classification (IPC):
***H04W 36/16*** *(2009.01)*

(52) Cooperative Patent Classification (CPC):
**H04W 36/00; H04W 36/16; H04W 48/08**

(86) International application number:
**PCT/CN2024/129352**

(87) International publication number:
**WO 2025/092974 (08.05.2025 Gazette 2025/19)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **02.11.2023 CN 202311455326**
**16.11.2023 CN 202311541640**

(71) Applicant: **HUAWEI TECHNOLOGIES CO., LTD.**
**Shenzhen 518129 (CN)**

(72) Inventors:
- **SHA, Tong**
  **Shenzhen, Guangdong 518129 (CN)**
- **WANG, Rui**
  **Shenzhen, Guangdong 518129 (CN)**
- **LI, Bingzhao**
  **Shenzhen, Guangdong 518129 (CN)**
- **LIU, Nannan**
  **Shenzhen, Guangdong 518129 (CN)**

(74) Representative: **MERH-IP Matias Erny Reichl Hoffmann**
**Patentanwälte PartG mbB**
**Paul-Heyse-Straße 29**
**80336 München (DE)**

# (54) COMMUNICATION METHOD AND COMMUNICATION APPARATUS

(57) This application provides a communication method and a communication apparatus. A terminal device may report, while sending wireless network access capability information of the terminal device to a network device, indication information indicating whether a first band combination supports fallback of an uplink transmit channel switching capability. Based on the indication information, the network device may quickly and effectively determine an uplink transmit channel switching capability of a fallback band combination of the first band combination. This helps improve efficiency of configuring and/or scheduling the terminal device by the network device, and helps reduce complexity of the network device. In a process of performing communication by using the communication method and the communication apparatus, data transmission efficiency and reliability are high.

Terminal device
Network device
S201: First capability query message
S202: First capability information

FIG. 4

EP 4 791 082 A1

## Description

This application claims priority to Chinese Patent Application No. 202311455326.9, filed with the China National Intellectual Property Administration on November 2, 2023, and entitled "COMMUNICATION METHOD AND COMMUNICATION APPARATUS", which is incorporated herein by reference in its entirety.
This application claims priority to Chinese Patent Application No. 202311541640.9, filed with the China National Intellectual Property Administration on November 16, 2023, and entitled "COMMUNICATION METHOD AND COMMUNICATION APPARATUS", which is incorporated herein by reference in its entirety.

## TECHNICAL FIELD

This application relates to the field of communication, and specifically, to a communication method and a communication apparatus.

## BACKGROUND

In a wireless communication scenario, a quantity of transmit channels used by a terminal device for communication is limited. Switching a transmit channel between a plurality of uplink bands can improve transmission efficiency of communication data transmission performed by the terminal device, and also help improve utilization efficiency of communication resources such as frequency domain resources.
A switching period for uplink transmit channel switching is an important factor that affects reliability of data transmission between the terminal device and a network device. When the terminal device needs to perform uplink transmit channel switching between band pairs in a fallback band combination, how to efficiently determine the switching period is a problem worth considering.

## SUMMARY

This application provides a communication method. A terminal device may send, to a network device, indication information indicating whether a first band combination supports fallback of an uplink transmit channel switching capability. The indication information helps the network device determine an uplink transmit channel switching capability of a fallback band combination of the first band combination, and helps the terminal device and the network device have consistent understanding of an uplink transmit switching capability of the fallback band combination, to ensure data transmission reliability. In addition, this also helps improve implementation flexibility of the terminal device, to be specific, the terminal device is allowed to support an uplink transmit channel switching capability different from that of a parent band combination in the fallback band combination and indicate the uplink transmit channel switching capability to the network device, and helps reduce complexity of configuring and scheduling the terminal device by the network device.
According to a first aspect, a communication method is provided. The method is applied to a terminal device and includes: receiving a capability query message; and sending capability information, where the capability information includes first information, and the first information indicates whether a first band combination supports fallback of an uplink transmit channel switching capability.
In some scenarios, whether the first band combination supports the fallback of the uplink transmit channel switching capability may alternatively be understood as: whether an uplink transmit channel switching capability of a second band combination is the same as the uplink transmit channel switching capability of the first band combination, whether the uplink transmit channel switching capability of the second band combination can be determined based on the uplink transmit channel switching capability of the first band combination, whether a switching period for uplink transmit channel switching in the second band combination is the same as a switching period for uplink transmit channel switching in the first band combination, or whether the switching period for the uplink transmit channel switching in the second band combination can be determined based on the switching period for the uplink transmit channel switching in the first band combination. The second band combination is a fallback band combination of the first band combination.
In some scenarios, a switching period for uplink transmit channel switching in a band combination may be understood as a switching period for uplink transmit channel switching in one or more band pairs included in the band combination.
In a possible implementation, the capability information herein may indicate a radio access capability of the terminal device. In some scenarios, the capability information may also be referred to as capability information (UE Capability information) or radio access capability information of the terminal device.
Indication information that may indicate whether the first band combination supports the fallback of the uplink transmit channel switching capability is reported to a network device, so that the network device may determine, based on the information, whether the first band combination and the fallback band combination of the first band combination have

different uplink transmit channel switching capabilities. Therefore, different configuration solutions are separately performed when the first band combination and the fallback band combination of the first band combination have different uplink transmit channel switching capabilities and when the first band combination and the fallback band combination of the first band combination have a same uplink transmit channel switching capability. This helps the network device determine the uplink transmit channel switching capability of the fallback band combination of the first band combination, and helps improve efficiency and reliability of data transmission between the terminal device and the network device.

With reference to the first aspect, in some implementations of the first aspect, the first information further indicates whether the uplink transmit channel switching capability of the second band combination is the same as the uplink transmit channel switching capability of the first band combination, the uplink transmit channel switching capability includes a switching period for uplink transmit channel switching, and the second band combination is the fallback band combination of the first band combination.

The network device may determine, based on the first information, that the uplink transmit channel switching capability of the fallback band combination of the first band combination cannot be determined based on the uplink transmit channel switching capability of the first band combination. The technical solution helps the network device determine the uplink transmit channel switching capability of the fallback band combination of the first band combination, to reduce running complexity of the network device and improve applicability of the technical solution.

With reference to the first aspect, in some implementations of the first aspect, the capability information further includes the second band combination and the uplink transmit channel switching capability of the second band combination.

The capability information reported by the terminal device may directly indicate the second band combination and the uplink transmit channel switching capability that is of the second band combination and that is different from an uplink transmit channel switching capability of a parent band combination of the second band combination. The network device may directly schedule and configure the terminal device based on the uplink transmit channel switching capability of the second band combination. Implementation of the technical solution helps the network device determine the uplink transmit channel switching capability of the fallback band combination of the first band combination, and improves data transmission reliability and transmission efficiency of the terminal device.

With reference to the first aspect, in some implementations of the first aspect, the first information further includes index information, and the index information indicates a position of the second band combination in at least one band combination that is for uplink transmit channel switching and that is supported by the terminal device.

The index information indicates the second band combination, and a data amount of the index information is small. Implementation of the technical solution helps reduce network signaling overheads. The index information is included in capability information of the first band combination. Therefore, the network device may determine a position of the second band combination based on the capability information of the first band combination. This helps reduce, to a specific extent, complexity of configuring, by the network device, uplink transmit channel switching in the fallback band combination of the first band combination.

With reference to the first aspect, in some implementations of the first aspect, the capability information includes the capability information of the first band combination, the capability information of the first band combination indicates the uplink transmit channel switching capability of the first band combination, and the capability information of the first band combination includes the first information.

In some scenarios, the foregoing technical solution may also be understood as that the first information may be reported in a dimension of each band combination.

The first information is included in the capability information of the first band combination for sending, so that an association between the first information and the first band combination is improved, and the network device may correspondingly obtain the first information when reading the capability information of the first band combination. The network device may determine, based on the first band combination, whether a capability of the first band combination can be used to determine a configuration and scheduling manner of uplink transmit channel switching in the fallback band combination with a small quantity of bands. Implementation of the technical solution helps the network device determine the uplink transmit channel switching capability of the fallback band combination of the first band combination, and reduces running complexity of the network device.

With reference to the first aspect, in some implementations of the first aspect, the first information indicates that the first band combination does not support the fallback of the uplink transmit channel switching capability. The capability information includes capability information of the first band combination, the capability information of the first band combination includes second information and third information, the second information indicates the uplink transmit channel switching capability of the first band combination, and the third information indicates the uplink transmit channel switching capability of the second band combination. The second band combination is the fallback band combination of the first band combination, and the uplink transmit channel switching capability of the first band combination is different from the uplink transmit channel switching capability of the second band combination.

In a possible implementation, the first information indicates that the first band combination supports the fallback

of the uplink transmit channel switching capability, and the capability information of the first band combination does not include the third information, in other words, the third information is empty.

This technical solution provides another possible implementation of the first information. When the terminal device supports different uplink transmit channel switching capabilities in the fallback band combination, the terminal device reports uplink transmit channel switching capabilities of different fallback band combinations in the parent band combination of the fallback band combination, and does not need to additionally report another fallback band combination entry, so that signaling overheads for capability reporting can be reduced, and network implementation complexity can be reduced. To be specific, when a network configures a carrier aggregation/dual connectivity combination, the network device does not need to traverse all band combinations reported by the terminal device to find the fallback band combination of the first band combination, may configure the fallback band combination of the first band combination based on only one parent band combination, and does not need to perform a configuration based on capabilities of a plurality of band combinations.

With reference to the first aspect, in some implementations of the first aspect, the first information indicates that the first band combination does not support the fallback of the uplink transmit channel switching capability. The first information further indicates that the switching period for the uplink transmit channel switching in the second band combination is a target switching period, the second band combination is the fallback band combination of the first band combination, and the target switching period is a longest switching period for uplink transmit channel switching in all band pairs included in the first band combination or the second band combination.

In a possible implementation, the first information indicates that the first band combination supports the fallback of the uplink transmit channel switching capability, and the capability information may not include the first information, in other words, the first information is empty.

This technical solution provides another possible implementation of the first information. A switching period for uplink transmit channel switching is directly indicated in the capability information, so that the network device may configure uplink transmit channel switching in the fallback band combination based on the indication information. This helps the network device determine the uplink transmit channel switching capability of the fallback band combination of the first band combination, helps keep a switching period for uplink transmit channel switching in the fallback band combination of the first band combination supported by the terminal device to be consistent with a switching period that is for uplink transmit channel switching in the fallback band combination of the first band combination and that is determined by the network device, helps avoid a switching period ambiguity problem, and helps improve reliability of communication between the network device and the terminal device.

In addition, the network device may not need to perform a complex information traversal operation due to the indication information. This helps reduce complexity of scheduling and configuring the terminal device by the network device.

With reference to the first aspect, in some implementations of the first aspect, a quantity of bands included in the second band combination is less than a quantity of bands included in the first band combination.

In a possible implementation, the first band combination includes four bands, and the second band combination includes three bands.

For detailed explanations and descriptions of beneficial effects in the following technical solutions, refer to related content in the first aspect. For brevity, details are not described below.

According to a second aspect, a communication method is provided. The method is applied to a network device and includes: sending a capability query message; and receiving capability information, where the capability information includes first information, and the first information indicates whether a first band combination supports fallback of an uplink transmit channel switching capability.

With reference to the second aspect, in some implementations of the second aspect, the first information further indicates whether an uplink transmit channel switching capability of a second band combination is the same as the uplink transmit channel switching capability of the first band combination, the uplink transmit channel switching capability includes a switching period for uplink transmit channel switching, and the second band combination is a fallback band combination of the first band combination.

With reference to the second aspect, in some implementations of the second aspect, the capability information further includes the second band combination and the uplink transmit channel switching capability of the second band combination.

With reference to the second aspect, in some implementations of the second aspect, the first information further includes index information, and the index information indicates a position of the second band combination in at least one band combination that is for uplink transmit channel switching and that is supported by a terminal device.

With reference to the second aspect, in some implementations of the second aspect, the capability information includes capability information of the first band combination, the capability information of the first band combination indicates the uplink transmit channel switching capability of the first band combination, and the capability information of the first band combination includes the first information.

With reference to the second aspect, in some implementations of the second aspect, the first information indicates that the first band combination does not support the fallback of the uplink transmit channel switching capability. The capability information includes capability information of the first band combination, the capability information of the first band combination includes second information and third information, the second information indicates the uplink transmit channel switching capability of the first band combination, and the third information indicates an uplink transmit channel switching capability of a second band combination. The second band combination is a fallback band combination of the first band combination, and the uplink transmit channel switching capability of the first band combination is different from the uplink transmit channel switching capability of the second band combination.

With reference to the second aspect, in some implementations of the second aspect, the first information indicates that the first band combination does not support the fallback of the uplink transmit channel switching capability. The first information further indicates that a switching period for uplink transmit channel switching in a second band combination is a target switching period, the second band combination is a fallback band combination of the first band combination, and the target switching period is a longest switching period for uplink transmit channel switching in all band pairs included in the first band combination or the second band combination.

With reference to the second aspect, in some implementations of the second aspect, a quantity of bands included in the second band combination is less than a quantity of bands included in the first band combination.

According to a third aspect, a communication apparatus is provided. The apparatus includes a transceiver unit. The transceiver unit is configured to: receive a capability query message; and send capability information, where the capability information includes first information, and the first information indicates whether a first band combination supports fallback of an uplink transmit channel switching capability.

With reference to the third aspect, in some implementations of the third aspect, the first information further indicates whether an uplink transmit channel switching capability of a second band combination is the same as the uplink transmit channel switching capability of the first band combination, the uplink transmit channel switching capability includes a switching period for uplink transmit channel switching, and the second band combination is a fallback band combination of the first band combination.

With reference to the third aspect, in some implementations of the third aspect, the capability information further includes the second band combination and the uplink transmit channel switching capability of the second band combination.

With reference to the third aspect, in some implementations of the third aspect, the first information further includes index information, and the index information indicates a position of the second band combination in at least one band combination that is for uplink transmit channel switching and that is supported by a terminal device.

With reference to the third aspect, in some implementations of the third aspect, the capability information includes capability information of the first band combination, the capability information of the first band combination indicates the uplink transmit channel switching capability of the first band combination, and the capability information of the first band combination includes the first information.

With reference to the third aspect, in some implementations of the third aspect, the first information indicates that the first band combination does not support the fallback of the uplink transmit channel switching capability. The capability information includes capability information of the first band combination, the capability information of the first band combination includes second information and third information, the second information indicates the uplink transmit channel switching capability of the first band combination, and the third information indicates an uplink transmit channel switching capability of a second band combination. The second band combination is a fallback band combination of the first band combination, and the uplink transmit channel switching capability of the first band combination is different from the uplink transmit channel switching capability of the second band combination.

With reference to the third aspect, in some implementations of the third aspect, the first information indicates that the first band combination does not support the fallback of the uplink transmit channel switching capability. The first information further indicates that a switching period for uplink transmit channel switching in a second band combination is a target switching period, the second band combination is a fallback band combination of the first band combination, and the target switching period is a longest switching period for uplink transmit channel switching in all band pairs included in the first band combination or the second band combination.

With reference to the third aspect, in some implementations of the third aspect, a quantity of bands included in the second band combination is less than a quantity of bands included in the first band combination.

According to a fourth aspect, a communication apparatus is provided. The apparatus includes a transceiver unit. The transceiver unit is configured to: send a capability query message; and receive capability information, where the capability information includes first information, and the first information indicates whether a first band combination supports fallback of an uplink transmit channel switching capability.

With reference to the fourth aspect, in some implementations of the fourth aspect, the first information further indicates whether an uplink transmit channel switching capability of a second band combination is the same as the uplink transmit channel switching capability of the first band combination, the uplink transmit channel switching capability

includes a switching period for uplink transmit channel switching, and the second band combination is a fallback band combination of the first band combination.

With reference to the fourth aspect, in some implementations of the fourth aspect, the capability information further includes the second band combination and the uplink transmit channel switching capability of the second band combination.

With reference to the fourth aspect, in some implementations of the fourth aspect, the first information further includes index information, and the index information indicates a position of the second band combination in at least one band combination that is for uplink transmit channel switching and that is supported by a terminal device.

With reference to the fourth aspect, in some implementations of the fourth aspect, the capability information includes capability information of the first band combination, the capability information of the first band combination indicates the uplink transmit channel switching capability of the first band combination, and the capability information of the first band combination includes the first information.

With reference to the fourth aspect, in some implementations of the fourth aspect, the first information indicates that the first band combination does not support the fallback of the uplink transmit channel switching capability. The capability information includes capability information of the first band combination, the capability information of the first band combination includes second information and third information, the second information indicates the uplink transmit channel switching capability of the first band combination, and the third information indicates an uplink transmit channel switching capability of a second band combination. The second band combination is a fallback band combination of the first band combination, and the uplink transmit channel switching capability of the first band combination is different from the uplink transmit channel switching capability of the second band combination.

With reference to the fourth aspect, in some implementations of the fourth aspect, the first information indicates that the first band combination does not support the fallback of the uplink transmit channel switching capability. The first information further indicates that a switching period for uplink transmit channel switching in a second band combination is a target switching period, the second band combination is a fallback band combination of the first band combination, and the target switching period is a longest switching period for uplink transmit channel switching in all band pairs included in the first band combination or the second band combination.

With reference to the fourth aspect, in some implementations of the fourth aspect, a quantity of bands included in the second band combination is less than a quantity of bands included in the first band combination.

According to a fifth aspect, a communication apparatus is provided. The apparatus includes a processor. The processor is coupled to a memory, and may be configured to execute instructions in the memory, to implement the method according to any one of the first aspect, the second aspect, and the possible implementations of the first aspect and the second aspect. Optionally, the apparatus further includes the memory. The memory and the processor may be separately deployed, or may be deployed in a centralized manner. Optionally, the apparatus further includes a communication interface, and the processor is coupled to the communication interface.

In an implementation, the communication interface may be a transceiver or an input/output interface.

In another implementation, the apparatus is a terminal device or a network device, or a chip configured in the terminal device or the network device, or may be a logic module or software that can implement all or a part of functions of the terminal device or the network device. When the apparatus is a chip, the communication interface may be an input/output interface, an interface circuit, an output circuit, an input circuit, a pin, a related circuit, or the like on the chip or a chip system. The processor may alternatively be embodied as a processing circuit or a logic circuit.

Optionally, the transceiver may be a transceiver circuit. Optionally, the input/output interface may be an input/output circuit.

During specific implementation, the processor may be one or more chips, the input circuit may be an input pin, the output circuit may be an output pin, and the processing circuit may be a transistor, a gate circuit, a trigger, any logic circuit, or the like. An input signal received by the input circuit may be received and input by, but not limited to, a receiver, and a signal output by the output circuit may be output to, but not limited to, a transmitter and transmitted by the transmitter. In addition, the input circuit and the output circuit may be a same circuit, and the circuit is used as the input circuit and the output circuit at different moments. Specific implementations of the processor and the various circuits are not limited in embodiments of this application.

According to a sixth aspect, a communication apparatus is provided. The apparatus includes a logic circuit and an input/output interface, and the logic circuit is configured to: be coupled to the input/output interface, and transmit data through the input/output interface, to perform the method according to any one of the first aspect, the second aspect, and the possible implementations of the first aspect and the second aspect.

In an implementation, the apparatus is a terminal device or a network device, or a chip configured in the terminal device or the network device, or may be a logic module or software that can implement all or a part of functions of the terminal device or the network device. When the apparatus is a chip, the communication interface may be an input/output interface, an interface circuit, an output circuit, an input circuit, a pin, a related circuit, or the like on the chip or a chip system. The processor may alternatively be embodied as a processing circuit or a logic circuit.

According to a seventh aspect, this application provides a chip system, including a processor. The processor is configured to execute a computer program or instructions in a memory, so that the chip system implements the method according to any one of the first aspect, the second aspect, and the possible implementations of the first aspect and the second aspect.

According to an eighth aspect, this application provides a communication system, including a network device and a terminal device. The network device is configured to perform the method according to any one of the first aspect and the possible implementations of the first aspect. The terminal device is configured to perform the method according to any one of the second aspect and the possible implementations of the second aspect.

According to a ninth aspect, a computer-readable storage medium is provided. The computer-readable storage medium stores a computer program (which may also be referred to as code or instructions). When the computer program is run on a computer, the computer is enabled to perform the method according to any one of the first aspect, the second aspect, and the possible implementations of the first aspect and the second aspect.

According to a tenth aspect, a computer program product is provided. The computer program product includes a computer program (which may also be referred to as code or instructions). When the computer program is run, a computer is enabled to perform the method according to any one of the first aspect, the second aspect, and the possible implementations of the first aspect and the second aspect.

## BRIEF DESCRIPTION OF DRAWINGS

FIG. 1 is a diagram of a system architecture applicable to an embodiment of this application;
FIG. 2 is a composition diagram of a network device according to an embodiment of this application;
FIG. 3 is a diagram of a communication method according to an embodiment of this application;
FIG. 4 is a diagram of another communication method according to an embodiment of this application;
FIG. 5 is a diagram of another communication method according to an embodiment of this application;
FIG. 6 is a diagram of another communication method according to an embodiment of this application;
FIG. 7 is a diagram of another communication method according to an embodiment of this application;
FIG. 8 is a diagram of another communication method according to an embodiment of this application;
FIG. 9A and FIG. 9B are diagrams of a CG according to an embodiment of this application;
FIG. 10 is a diagram of another communication method according to an embodiment of this application;
FIG. 11 is a diagram of another communication method according to an embodiment of this application;
FIG. 12 is a diagram of another communication method according to an embodiment of this application;
FIG. 13 is a diagram of another communication method according to an embodiment of this application;
FIG. 14 is a diagram of a communication apparatus according to an embodiment of this application;
FIG. 15 is a diagram of another communication apparatus according to an embodiment of this application; and
FIG. 16 is a diagram of a chip system according to an embodiment of this application.

## DESCRIPTION OF EMBODIMENTS

The following describes technical solutions in this application with reference to accompanying drawings.

The technical solutions in embodiments of this application may be applied to various communication systems, such as a global system for mobile communications (global system for mobile communications, GSM), a code division multiple access (code division multiple access, CDMA) system, a wideband code division multiple access (wideband code division multiple access, WCDMA) system, a general packet radio service (general packet radio service, GPRS), a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a 4th generation (4th generation, 4G) system, a 5th generation (5th generation, 5G) system, or a new radio (new radio, NR) system.

A terminal device is a device having a wireless transceiver function, and may send a signal to a network device or receive a signal from the network device. A terminal may be an access terminal, a subscriber unit, a subscriber station, a mobile station, a mobile console, a remote station, a remote terminal, a mobile device, a user terminal, user equipment (user equipment, UE), a wireless communication device, a user agent, or a user apparatus. The user equipment may alternatively be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a compute device or another processing device connected to a wireless modem, a vehicle-mounted device, a wearable device, a terminal in a 5G network, user equipment in any form in

a future network, or the like. This is not limited in embodiments of this application.

The network device in embodiments of this application may be a device configured to communicate with the terminal, and is configured to connect the terminal to a radio access network (radio access network, RAN). The network device may also be sometimes referred to as an access network device, an access network node, or a base station. It may be understood that in systems using different radio access technologies, names of devices having functions of the base station may be different. For ease of description, in embodiments of this application, apparatuses that provide a wireless communication access function for a terminal are collectively referred to as a network device. The network device may be a base transceiver station (Base transceiver station, BTS) in a global system for mobile communications (global system for mobile communications, GSM) or a code division multiple access (code division multiple access, CDMA) system, may be a NodeB (NodeB, NB) in a wideband code division multiple access (wideband code division multiple access, WCDMA) system, may be an evolved NodeB (evolved NodeB, eNB or eNodeB) in an LTE system, a gNodeB (gNodeB, gNB) in NR, a next-generation evolved NodeB (next-generation eNodeB, ng-eNB) or a transmission reception point (transmission receiving point/transmission reception point, TRP), a base station in the 3rd generation partnership project (3rd generation partnership project, 3GPP) subsequent evolution, or an access node, a wireless relay node, a wireless backhaul node, or the like in a wireless network communication technology (Wi-Fi) system, or may be a wireless controller in a cloud radio access network (cloud radio access network, CRAN) scenario. Alternatively, the network device may be a relay station, an access point, a vehicle-mounted device, a wearable device, a network device in a 5G network, a network device in a future evolved PLMN network, or one or a group of antenna panels (including a plurality of antenna panels) of a base station in a 5G system, or may be a network node that forms a next-generation node base station (next-generation Node Base station, gNB) or a transmission point, for example, a baseband unit (Baseband unit, BBU), a distributed unit (distributed unit, DU), or a central unit (Central unit, CU). This is not limited in embodiments of this application.

In embodiments of this application, the terminal or the network device includes a hardware layer, an operating system layer running above the hardware layer, and an application layer running above the operating system layer. The hardware layer includes hardware such as a central processing unit (central processing unit, CPU), a memory management unit (memory management unit, MMU), and a memory (also referred to as a main memory). The operating system may be any one or more computer operating systems that implement service processing through a process (process), for example, a Linux operating system, a Unix operating system, an Android operating system, an iOS operating system, or a Windows operating system. The application layer includes applications such as a browser, an address book, word processing software, and instant messaging software. In addition, a specific structure of an execution body of the method provided in embodiments of this application is not specifically limited in embodiments of this application, provided that a program that records code of the method provided in embodiments of this application can be run to perform communication according to the method provided in embodiments of this application. For example, the execution body of the method provided in embodiments of this application may be the terminal or the network device, or may be a functional module, for example, a chip or a processor, that is in the terminal or the network device and that can invoke the program and execute the program.

In addition, aspects or features of this application may be implemented as a method, an apparatus, or a product that uses standard programming and/or engineering technologies. For example, a computer-readable medium may include but is not limited to: a magnetic storage component (for example, a hard disk, a floppy disk, or a magnetic tape), an optical disc (for example, a compact disc (compact disc, CD) or a digital versatile disc (digital versatile disc, DVD)), a smart card, and a flash memory component (for example, an erasable programmable read-only memory (erasable programmable read-only memory, EPROM), a card, a stick, or a key drive). In addition, various storage media described in this specification may represent one or more devices and/or other machine-readable media that are configured to store information. The term "machine-readable media" may include but is not limited to a radio channel, and various other media that can store, contain and/or carry instructions and/or data.

For ease of understanding of embodiments of this application, several terms in this application are first briefly described.

A band (frequency band) is a frequency range of a radio wave in the field of communication.

Carrier aggregation (carrier aggregation, CA) is a wireless communication technology used to aggregate a plurality of component carriers (component carriers, CCs, or referred to as component carriers) to increase a transmission bandwidth.

Dual connectivity (dual connectivity, DC) is a communication technology in which a terminal device in a connected state can simultaneously use radio resources of at least two different base stations, to improve radio resource utilization of a wireless network system and reduce a handover delay.

A band combination (band combination, BC) usually indicates a capability that is supported by a terminal device and that is used for carrier aggregation or dual connectivity. Each band combination indicates a band included in the band combination. Even if the terminal device supports only one band, the band is reported by using the structure. Each band entry (band entry) in each band combination supports one or more component carriers.

A fallback band combination (fallback BC) means that in a carrier aggregation technology, one carrier is usually a

primary cell (primary cell, PCell), and another serving cell is a secondary cell (secondary cell, SCell). The secondary cell may be activated or deactivated during use. If no data is transmitted for a period of time, a network may deactivate the secondary cell, and the secondary cell may be reactivated when data is sent subsequently. Carrier aggregation includes aggregation of a plurality of carriers in a single band, and also includes aggregation of a plurality of carriers in a plurality of bands. A combination obtained by releasing at least one secondary cell, an uplink component carrier of the secondary cell, a secondary cell group (secondary cell group, SCG), or a supplementary uplink (supplementary uplink, SUL) from a band combination (parent band combination, parent band combination) is referred to as a fallback band combination.

Uplink transmit channel switching (UplinkTxSwitching) is a communication technology in multifrequency coordination, and implements time division uplink transmission of two carriers by switching an uplink transmit antenna of a terminal device, to increase an uplink capacity of a network.

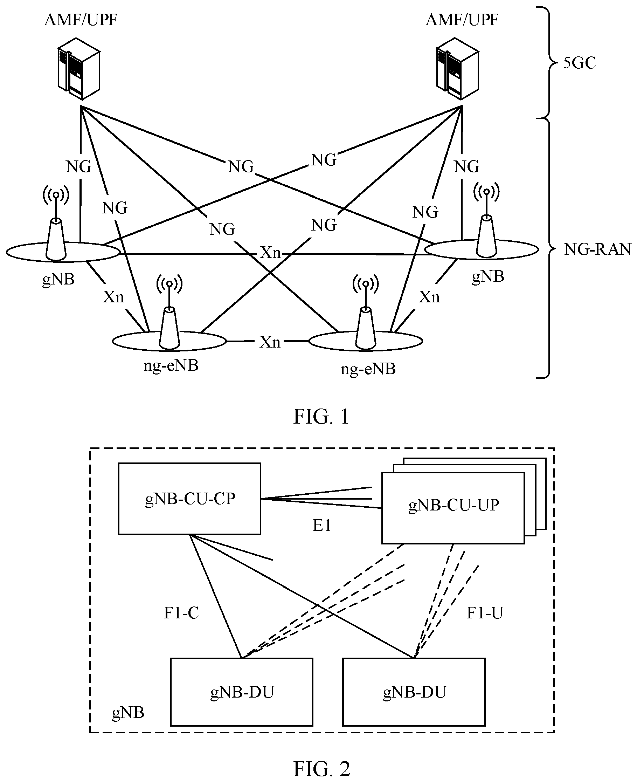

FIG. 1 is a diagram of an architecture of a 5G system. The 5G system 100 in FIG. 1 includes a 5G core (5G core, 5GC) network and a 5G radio access network (next-generation radio access network, NG RAN). The 5GC may include at least one access and mobility management function (Access and Mobility Management Function, AMF) network element/user plane function (user plane function, UPF) network element. The AMF network element mainly performs functions such as mobility management and access authentication/authorization, and may further transfer a user policy between a terminal device and a PCF network element. The UPF network element may be used as an interface UPF to a data network, and implements functions such as user plane data forwarding, session/flow level-based charging statistics collection, and bandwidth limitation.

Each gNB may provide a termination point for NR user plane and control plane protocols. Each ng-eNB may provide a termination point for evolved UMTS terrestrial radio access network (evolved UMTS terrestrial radio access network, E-UTRAN) user plane and control plane protocol stacks. Each gNB is connected to another gNB through an Xn interface, each gNB is connected to an ng-eNB through an Xn interface, and each ng-eNB is connected to another ng-eNB through an Xn interface. Each gNB is connected to the 5GC through an NG interface. Specifically, each gNB is connected to the AMF through an NG-C interface, and each gNB is connected to the UPF through an NR-U interface. Similarly, each ng-eNB is connected to the 5GC through an NG interface. Specifically, each ng-eNB is connected to the AMF through an NG-C interface, and each ng-eNB is connected to the UPF through an NR-U interface.

The NG RAN includes at least one gNB and/or at least one ng-eNB. FIG. 2 illustrates a diagram of a composition structure of a gNB.

The gNB may include a base station-a central unit-a control plane (control plane, CP), a plurality of base stations-a central unit-a user plane (user plane, UP), and a plurality of base stations-a distributed unit.

The gNB-CU-CP is connected to the gNB-DU through an F1-C interface. The gNB-CU-UP is connected to the gNB-DU through an F1-U interface. The gNB-CU-UP is connected to the gNB-CU-CP through an E1 interface. One gNB-DU is connected to only one gNB-CU-CP. One gNB-CU-UP is connected to only one gNB-CU-CP.

In a wireless communication system, a network device needs to know capability information of a terminal device, and perform proper configuration and scheduling based on a capability of the terminal device, to ensure correct data processing. Because terminal devices have different capabilities, and capability signaling is related to a large quantity of parameters, the terminal device reports capability information, for example, a band supported by the terminal device, a band combination supported by the terminal device, a carrier bandwidth, or a modulation order, to a base station after establishing a connection.

A carrier aggregation technology and/or a dual connectivity technology can improve radio resource utilization of a wireless network system, and improve efficiency of data transmission between the terminal device and the network device. In a conventional carrier aggregation operation, concurrent transmission is allowed between a plurality of carriers, and the terminal device may also perform single transmission and dual transmission during sending on one carrier. To reduce adverse impact of a limited quantity of transmit channels of the terminal device on a data transmission process, the terminal device may usually switch a transmit channel between a plurality of uplink bands.

There is a specific delay in an uplink transmit channel switching (UL Tx switching) process. The terminal device may report, to the network device, a switching period for band pairs that support uplink transmit channel switching. In this way, flexibility of a band combination that may be scheduled by the network device to send an uplink signal may be improved. For example, when channel quality of a carrier in a band dynamically changes, a network may select a better band, and quickly and dynamically switch a band for sending an uplink signal, to increase an uplink throughput.

In the capability information of the terminal device, the terminal device reports one or more band combinations (band combinations) supported by the terminal device to the network device. For a band combination that supports uplink transmit channel switching, the capability information further includes an uplink transmit channel switching capability supported by the band combination. The uplink transmit channel switching capability includes an uplink transmit channel switching period (uplink Tx switching period) of at least one band pair (band pair) in the band combination.

In addition, a concept of a fallback band combination (Fallback band combination) is described. The fallback band combination is a band combination obtained from another band combination (also referred to as a parent band combination) by releasing at least one secondary cell (secondary cell, SCell), an uplink configuration of the SCell, a

secondary cell group (secondary cell group, SCG), or a supplementary uplink (supplementary UL).

For a fallback band combination, the terminal device may not report the fallback band combination in the capability information, but report only a parent band combination of the fallback band combination. The network device considers that the terminal device supports any fallback band combination obtained from the parent band combination, that is, considers that the terminal device needs to support at least a same capability on a same band as the parent band combination in the fallback band combination.

An advantage of capability fallback is that signaling overheads for reporting a plurality of band combinations by the terminal device can be reduced. In addition, from a perspective of a network side, complexity of configuring a band combination by the network device can be reduced. To be specific, after releasing at least one SCell, an uplink configuration of the SCell, an SCG, or an SUL, the network device does not need to query for the capability information of the terminal device to determine a capability of another band combination (namely, the fallback band combination), and configures the terminal device based on the capability reported by the another band combination. Instead, the network device is allowed to determine a configuration of the fallback band combination based on a capability of the parent band combination of the fallback band combination. The terminal device separately reports capabilities of a plurality of band combinations. Different uplink transmit channel switching capabilities may be reported in the plurality of reported band combinations. However, these different band combinations may have a fallback band combination including a same band. For example, a combination #1 {band A+band B+band C+band D} and a combination #2 {band A+band B+band C+band E} that are reported by the terminal device both include a fallback band combination including a same band: the band A, the band B, and the band C. When configuring a switching period for uplink transmit channel switching for this type of fallback band combination, the network device may perform a configuration based on a switching period for uplink transmit channel switching in any parent band combination. In a possible case, the switching period (for example, referred to as a switching period A) that is for uplink transmit channel switching and that is configured by the network device for this type of fallback band combination is different from a switching period (for example, referred to as a switching period B) that is for uplink transmit channel switching and that is configured for the fallback band combination determined by the terminal device. For example, the switching period A may be shorter than the switching period B. For example, the switching period A is 35 μs, and the switching period B is 140 μs. In this case, the terminal device cannot send an uplink data block on a time-frequency domain resource on which the network schedules an uplink grant. Consequently, the network cannot correctly decode uplink data sent by the terminal device.

To resolve the foregoing problem that the network device and the terminal device have inconsistent understanding of the switching period (or referred to as a switching period ambiguity problem), in a feasible manner, the terminal device may additionally report a fallback band combination that can override (override) the parent band combination, and a switching period that is for uplink transmit switching and that is reported by the terminal device in the fallback band combination overrides a switching period for a same band in the parent band combination. However, a problem in this manner is that, because the terminal device reports a large quantity of band combinations in the capability information, when the network device selects and configures a carrier combination for communication, the network device needs to traverse all the band combinations reported by the terminal device, to determine whether the terminal device additionally reports the fallback band combination of the parent band combination in addition to the parent band combination reported by the terminal device. When determining that the capability information includes the fallback band combination that is additionally reported, the network device configures and schedules the terminal device based on a switching period for the fallback band combination that is additionally reported.

In another feasible manner, when switching periods for a same band pair included in a plurality of band combinations are different, a longest switching period is used to schedule the terminal device. However, a problem in this manner is that, to determine whether switching periods for a same band pair reported in different band combinations are different, the network device needs to traverse all band combinations reported by the terminal device, to determine whether switching periods for a same band pair included in two or more band combinations are inconsistent, then determine a longest switching period in the plurality of different switching periods for the same band pair, and configure and schedule the terminal device by using the longest switching period.

In the foregoing two solutions, the network device needs to perform a complex and time-consuming traversal operation. This increases network complexity and reduces efficiency of performing a radio resource configuration by the network device.

To reduce network complexity and improve flexibility and efficiency of performing a radio resource configuration by a network device while improving efficiency of data transmission between a terminal device and the network device and improving radio resource utilization, this application provides a communication method. The communication method is described below.

The terminal device may indicate, when reporting capability information, that the capability information includes whether one or more band combinations support fallback of an uplink transmit channel switching capability, and the network device may configure and schedule the terminal device based on the indication.

In this technical solution, the terminal device may support, in a fallback band combination, an uplink transmit

channel switching capability different from that of a parent band combination, and indicate the uplink transmit channel switching capability to the network device, to improve implementation flexibility of the terminal device. For example, the terminal device may support, in the fallback band combination, an uplink transmit channel switching capability (for example, a longer switching period) weaker than that of the fallback band combination. For another example, switching periods for uplink transmit channel switching supported in a plurality of parent band combinations are different, and the fallback band combination supports only fallback of an uplink transmit channel switching capability of one of the parent band combinations.

S110: The network device sends a capability query message, and correspondingly, the terminal device receives the capability query message.

In some examples, the capability query information is used to request to obtain a radio access capability of the terminal device. After receiving the capability query information, the terminal device may report information related to the radio access capability of the terminal device.

In some examples, when the terminal device initially establishes a connection to the network device, the network device may send the capability query information to the terminal device.

In some examples, when the network device needs to re-query for the capability information of the terminal device, or the terminal device sends, to the network device, a mobility registration update request carrying a capability update indication, the network device may send the capability query information to the terminal device.

S120: The terminal device sends the capability information, and correspondingly, the network device receives the capability information.

The capability information (UE capability information) may indicate the radio access capability of the terminal device. After receiving the capability information of the terminal device, the network device may configure and schedule the terminal device based on the radio access capability of the terminal device. In some scenarios, the capability information may also be referred to as the capability information, radio access capability information, or the like of the terminal device.

For example, the capability information may include one or more of capabilities of the terminal device, such as a band supported by the terminal device, a band combination supported by the terminal device, a carrier bandwidth, a quantity of multiple-input multiple-output (multiple-input multiple-output, MIMO) layers, or a modulation order.

In some examples, the capability information may include one or more band combinations supported by the terminal device. In other words, the capability information may include information about one or more band combinations supported by the terminal device. The one or more band combinations may be band combinations for uplink transmit channel switching. The uplink transmit channel switching may also be referred to as dynamic uplink transmit switching (dynamic UL Tx switching), uplink transmission channel switching, or the like.

In some examples, the information about the band combination may include one or more of the following: an identifier of one or more bands included in the band combination, identifiers of bands included in one or more band pairs that are for uplink transmit channel switching and that are included in the band combination (for example, one band pair includes two bands, and bandIndexUL1 and bandIndexUL2 respectively indicate identifiers of the bands), a switching period for uplink transmit channel switching supported by each band pair, and the like.

In some examples, a plurality of types of information about a same band combination may be included in the capability information as one information element.

For example, the capability information may include capability information of a first band combination, capability information of a second band combination, capability information of a third band combination, and the like. Capability information of a band combination usually indicates a carrier aggregation or dual connectivity capability supported by the terminal device, or may indicate a non-carrier aggregation capability, for example, a single-carrier capability. The capability information of the first band combination may include an identifier of one or more bands included in the first band combination, a bandwidth class (ca-bandwidthClass) of each of the one or more bands included in the first band combination, a power class (power class) of the first band combination, an identifier of a feature set combination (feature set combination) of the first band combination, one or more band pairs that support uplink transmit channel switching and that are included in the first band combination (for example, a band pair includes two bands, and bandIndexUL1 and bandIndexUL2 respectively indicate identifiers of the bands), a switching period for uplink transmit channel switching supported by each band pair, and the like. Similarly, the capability information of the second band combination and the capability information of the third band combination each may also correspondingly include the foregoing information.

In some scenarios, the capability information of the band combination may also be referred to as information about the band combination, the band combination, or the like, and is referred to as the capability information of the band combination below for ease of description.

In some examples, the capability information may further include first information, and the first information may indicate whether the first band combination supports fallback of an uplink transmit channel switching capability.

In other words, the first information may indicate whether an uplink transmit channel switching capability of the second band combination is the same as or different from an uplink transmit channel switching capability of the first band combination.

In other words, the first information indicates whether the uplink transmit channel switching capability of the second band combination can be determined based on the uplink transmit channel switching capability of the first band combination.

In other words, the first information may indicate whether a switching period for uplink transmit channel switching in the second band combination is the same as or different from a switching period for uplink transmit channel switching in the first band combination.

In other words, the first information indicates whether the switching period for the uplink transmit channel switching in the second band combination can be determined based on the switching period for the uplink transmit channel switching in the first band combination.

In other words, the first information indicates, for band pairs including a same band, whether a fallback band combination of the first band combination supports a same uplink transmit channel switching period as the first band combination.

In some examples, both the first band combination and the second band combination support uplink transmit channel switching. In other words, the first information is applicable to a band combination that supports uplink transmit channel switching.

Herein, the second band combination is a fallback band combination of the first band combination. In other words, the first band combination is a parent band combination of the second band combination.

Second band combinations obtained by releasing at least one of the following: a secondary cell, an uplink component carrier of the secondary cell, a secondary cell group, or a supplementary uplink from the first band combination may be referred to as fallback band combinations of the first band combination.

In some examples, the fallback band combination may be a band combination obtained by deleting at least one band from the parent band combination, in other words, a quantity of bands in the fallback band combination is less than a quantity of bands in the parent band combination.

For example, the fallback band combination may be a band combination obtained by removing one band from the parent band combination. For example, the parent band combination includes four bands, and the fallback band combination includes three bands. For another example, the parent band combination includes three bands, and the fallback band combination includes two bands.

For example, the fallback band combination may be a fallback band combination obtained by removing a plurality of bands from the parent band combination. For example, the parent band combination includes four bands, and the fallback band combination includes two bands or one band. For another example, the parent band combination includes three bands, and the fallback band combination includes one band.

For example, a band combination {A, B, C, D} indicates a band combination including a band A, a band B, a band C, and a band D. All the following band combinations: a band combination {A, B, C}, a band combination {B, C, D}, a band combination {B, C}, a band combination {A}, and the like may be referred to as fallback band combinations of the band combination {A, B, C, D}.

For example, a band G in a band combination #1 {E, F, G} supports both a first component carrier and a second component carrier, and a band G in a band combination #2 {E, F, G} supports only the first component carrier or the second component carrier, or the band G in the band combination #2 {E, F, G} does not support the second component carrier or the first component carrier. In these cases, the band combination #1 {E, F, G} may also be referred to as a parent band combination of the band combination #2 {E, F, G}, and the band combination #2 {E, F, G} may also be referred to as a fallback band combination of the band combination #1 {E, F, G}.

In some examples, an uplink transmit channel switching capability of a band combination may include one or more of a switching period for uplink transmit channel switching in the band combination, a switching option (for example, switchedUL, dualUL, or both, where both indicates that both switchedUL and dualUL are supported) of the uplink transmit channel switching in the band combination, an identifier of a band in which downlink receiving is affected by uplink transmit channel switching, a capability of supporting an uplink codebook (for example, supporting a full-coherent full-coherent codebook subset or a non-coherent non-coherent codebook subset), or the like.

The switching period may alternatively include a switching period (for example, indicated by using a switchingPeriodFor1T field) for switching between one uplink transmit channel (1Tx) and one uplink transmit channel (1Tx), or the switching period may include a switching period (for example, indicated by using a switchingPeriodFor1T field) for switching between one uplink transmit channel (1Tx) and two uplink transmit channels (2Tx), or the switching period may include a switching period (for example, indicated by using a switchingPeriodFor2T field) for switching between two uplink transmit channels (2Tx) and two uplink transmit channels (2Tx), or the switching period may include a plurality of the foregoing three switching periods.

In some examples, the uplink transmit channel switching may alternatively be switching between more uplink transmit channels, for example, switching between four uplink transmit channels and another four uplink transmit channels. The switching period may alternatively indicate a switching period for switching between more uplink transmit channels, for example, a switching period for switching between three uplink transmit channels and another four uplink

transmit channels. This is not limited in this application.

In this case, that the uplink transmit channel switching capability of the first band combination is the same as the uplink transmit channel capability of the second band combination may be understood as that the switching period for the uplink transmit channel switching in the first band combination is the same as the switching period for the uplink transmit channel switching in the second band combination, switching periods for uplink transmit channel switching between a same quantity of transmit channels of the first band combination and the second band combination are the same, and other uplink transmit channel switching capabilities are the same.

That the uplink transmit channel switching capability of the first band combination is different from the uplink transmit channel switching capability of the second band combination may be understood as that at least one of the following uplink transmit channel switching-related capabilities is different: the switching period for the uplink transmit channel switching in the first band combination and the switching period for the uplink transmit channel switching in the second band combination, switching periods for uplink transmit channel switching between a same quantity of transmit channels of the first band combination and the second band combination, a switching option of the first band combination and the first band combination, or the like.

In some examples, the uplink transmit channel switching capability of the band combination may be a switching period for uplink transmit channel switching in the band combination. The switching period for the uplink transmit channel switching in the band combination may be a switching period for uplink transmit channel switching between one or more band pairs including any two bands included in the band combination, or may be a switching period for uplink transmit channel switching between one band pair and another band pair or another band.

In this case, whether the uplink transmit channel switching capability of the first band combination is different from the uplink transmit channel capability of the second band combination or whether the switching period for the uplink transmit channel switching in the second band combination is different from the switching period for the uplink transmit channel switching in the first band combination may be understood in the following manner:

For example, the first band combination includes a first band pair, the second band combination includes a second band pair, and the first band pair and the second band pair include a same band.

When a switching period (or referred to as a switching capability) of an uplink transmit channel for the first band pair is different from a switching period (or referred to as a switching capability) of an uplink transmit channel for the second band pair, the uplink transmit channel switching capability of the first band combination is different from the uplink transmit channel switching capability of the second band combination.

The first band combination and the second band combination may include one or more band pairs including a same band. When uplink transmit channel switching capabilities of these band pairs are the same, the uplink transmit channel switching capability of the first band combination is the same as the uplink transmit channel switching capability of the second band combination.

In some examples, the capability information may further include the second band combination and the uplink transmit channel switching capability of the second band combination.

For example, the uplink transmit channel switching capability of the second band combination may include one or more of the switching period for the uplink transmit channel switching in the second band combination, a switching option of the uplink transmit channel switching in the second band combination, and the like.

Similarly, for example, the uplink transmit channel switching capability of the second band combination may include only the switching period for the uplink transmit channel switching in the second band combination, in other words, the uplink transmit channel switching capability of the second band combination may be the switching period for the uplink transmit channel switching in the second band combination.

Similar to the uplink transmit channel switching capability of the first band combination, the switching period for the uplink transmit channel switching in the second band combination may be understood as a switching period for one or more band pairs included in the second band combination.

In some examples, the first information may further include index information, and the index information may indicate a position of the second band combination in at least one band combination that is for uplink transmit channel switching and that is supported by the terminal device.

For example, the terminal device may report, in a form of band combination set (for example, band combination list), one or more band combinations supported by the terminal device. Band combinations in the band combination set may be arranged in a specific sequence. In other words, each band combination in the band combination set has an implicitly corresponding sequence number. The index information may be a sequence number of each band combination in the band combination set.

In some examples, the first information further indicates the position of the second band combination in the at least one band combination that is for uplink transmit channel switching and that is supported by the terminal device. In other words, the first information may be the index information.

In some examples, the second band combination includes a plurality of band combinations, the first information may include a plurality of pieces of index information, and the plurality of pieces of index information may respectively

indicate positions of the plurality of band combinations in the at least one band combination that is for uplink transmit channel switching and that is supported by the terminal device.

In some examples, the first information may be included in the capability information of the first band combination, in other words, the first indication information may be reported in each band combination dimension.

In some examples, the first information may be an identifier field or an identifier bit, and the identifier field or the identifier bit indicates whether the first band combination supports the fallback of the uplink transmit channel switching capability.

For example, the first information is 1 bit. If the bit exists or the bit is set to {true} or the bit is set to 1, it indicates that the first band combination does not support the fallback of the uplink transmit channel switching capability, or the uplink transmit channel switching capability of the second band combination is different from the uplink transmit channel switching capability of the first band combination, or the uplink transmit channel switching capability of the second band combination cannot be determined based on the uplink transmit channel switching capability of the first band combination, or the switching period for the uplink transmit channel switching in the second band combination cannot be determined based on the switching period for the uplink transmit channel switching in the first band combination, or for band pairs including a same band, a band pair in the fallback band combination of the first band combination and a band pair in the first band combination have different uplink transmit channel switching periods.

If the bit does not exist (is absent) or the bit is set to 0, it indicates that the first band combination supports the fallback of the uplink transmit channel switching capability, or the uplink transmit channel switching capability of the second band combination is the same as the uplink transmit channel switching capability of the first band combination, or the uplink transmit channel switching capability of the second band combination can be determined based on the uplink transmit channel switching capability of the first band combination, or the switching period for the uplink transmit channel switching in the second band combination can be determined based on the switching period for the uplink transmit channel switching in the first band combination, or for band pairs including a same band, a band pair in the fallback band combination of the first band combination and a band pair in the first band combination have a same uplink transmit channel switching period.

The first information explicitly indicates whether the first band combination supports the fallback of the uplink transmit channel switching capability. This helps improve efficiency of configuring, by the network device, the uplink transmit channel switching capability of the fallback band combination of the first band combination, reduce a probability of a switching period ambiguity problem, and improve reliability of communication between the network device and the terminal device.

In addition, the network device may not need to perform a complex information traversal operation due to the first information. This helps reduce complexity of scheduling and configuring the terminal device by the network device.

When uplink transmit channel switching capabilities of a same fallback band combination of a plurality of band combinations are different, this technical solution helps reduce and avoid a decoding failure caused by inconsistent understanding of an applied switching period by the terminal device and the network device.

When a capability of the fallback band combination supported by the terminal is different from that of the parent band combination, this solution can effectively reduce complexity caused by requiring the network device to blindly traverse all band combinations to determine whether the terminal device additionally reports a fallback band combination, and then determining a configuration based on a capability of the reported fallback band combination. The network device may determine, based on the parent band combination, whether the capability of the parent band combination can be used to determine a configuration and scheduling manner of uplink transmit channel switching in the fallback band combination with a smaller quantity of bands. If the terminal device reports the first information, the network device may learn that when a quantity of bands in a carrier aggregation combination that needs to be configured is less than that in a band combination reported by the terminal device (or when a fallback band combination is configured), the fallback band combination needs to be configured based on another band combination.

In addition, the network device may determine, based on the first information, that the uplink transmit channel capability of the second band combination supported by the terminal device is different from the uplink transmit channel switching capability of the parent band combination of the second band combination. In this way, the switching period that is for the uplink transmit channel switching in the second band combination and that is determined by the network device is different from the switching period for the uplink transmit channel switching in the first band combination. In other words, the terminal device may support an uplink transmit channel switching capability different from that of the parent band combination in the fallback band combination, to improve flexibility of the terminal device.

In some examples, the capability information of the first band combination may include the second band combination and the uplink transmit channel switching capability of the second band combination.

When the capability information of the first band combination includes the second band combination and the uplink transmit channel switching capability of the second band combination, the second band combination and/or the uplink transmit channel switching capability of the second band combination may indicate that the first band combination does not support the fallback of the uplink transmit channel switching capability. In other words, that the capability information of the first band combination includes the second band combination and the uplink transmit channel switching

capability of the second band combination indicates that the first band combination does not support the fallback of the uplink transmit channel switching capability.

If the capability information of the first band combination does not include the second band combination and/or the uplink transmit channel switching capability of the second band combination, or a field of the second band combination and/or the uplink transmit channel switching capability of the second band combination in the capability information of the first band combination is empty, it indicates that the first band combination supports the fallback of the uplink transmit channel switching capability.

In some examples, the first information may include an identifier of a band included in the second band combination, and the first information may further include a switching period for each band pair included in the second band combination.

For example, the identifier that is of the band included in the second band combination and that is included in the first information may be a sequence number of the band in the parent band combination (namely, the first band combination) of the second band combination.

In some examples, the second band combination may include a plurality of band combinations, and the capability information of the first band combination may include a plurality of band combinations and uplink transmit channel switching capabilities of the plurality of band combinations. In other words, the first information may include a plurality of fallback band combinations of a same parent band combination and uplink transmit channel switching capabilities of the plurality of fallback band combinations.

In some examples, the capability information may include capability information of a plurality of different parent band combinations. The capability information of the different parent band combinations each may include the first information. In other words, the capability information of the different parent band combinations each may include one or more fallback band combinations and an uplink transmit channel switching capability corresponding to the fallback band combination.

The capability information of the first band combination includes a band combination whose uplink transmit channel switching capability is different from that of the first band combination and an uplink transmit channel switching capability of the band combination. This helps improve efficiency of configuring, by the network device, the uplink transmit channel switching capability of the fallback band combination of the first band combination, reduce a probability of a switching period ambiguity problem, and improve reliability of communication between the network device and the terminal device.

In addition, the network device may not need to perform a complex information traversal operation due to the first information. This helps reduce complexity of scheduling and configuring the terminal device by the network device.

When uplink transmit channel switching capabilities of a same fallback band combination of a plurality of band combinations are different, this technical solution helps reduce and avoid a decoding failure caused by inconsistent understanding of an applied switching period by the terminal device and the network device.

When the terminal device supports different uplink transmit channel switching capabilities in the fallback band combination, the terminal device reports uplink transmit channel switching capabilities of different fallback band combinations in the parent band combination of the fallback band combination, and does not need to additionally report another fallback band combination entry, so that signaling overheads for capability reporting can be reduced, and network implementation complexity can be reduced. To be specific, when a network configures a carrier aggregation/dual connectivity combination, the network may configure the fallback band combination based on only one parent band combination, and does not need to perform a configuration based on capabilities of a plurality of band combinations.

In addition, the network device may directly determine the switching period for the uplink transmit channel switching in the second band combination based on the switching period that is for the uplink transmit channel switching in the second band combination and that is included in the capability information of the first band combination. However, the switching period for the uplink transmit channel switching in the second band combination is different from the switching period for the uplink transmit channel switching in the first band combination. In other words, the terminal device may support an uplink transmit channel switching capability different from that of the parent band combination in the fallback band combination, to improve flexibility of the terminal device.

In some examples, the first information further indicates that the switching period for the uplink transmit channel switching in the second band combination is a target switching period, and the target switching period may be a longest switching period for uplink transmit channel switching in all band pairs included in the first band combination, or the target switching period may be a longest switching period for uplink transmit channel switching in all band pairs included in the second band combination.

In some examples, the first information may be included in capability information of each parent band combination, in other words, the first information may be reported in each band combination dimension.

In some examples, the capability information may include a plurality of pieces of first information, and the plurality of pieces of first information may respectively indicate target switching periods corresponding to a plurality of different band combinations.

In some examples, the first information may include an identifier field and an identifier bit. For example, the first information may be an identifier bit whose length is 1 bit.

The first information is directly indicated in the capability information of the first band combination, and the network device may determine, based on the indication information, a switching period for uplink transmit channel switching in the fallback band combination. This helps improve efficiency of configuring, by the network device, uplink transmit channel switching in the fallback band combination of the first band combination, reduce a probability of a switching period ambiguity problem, and improve reliability of communication between the network device and the terminal device.

In addition, the network device may not need to perform a complex information traversal operation due to the indication information. This helps reduce complexity of scheduling and configuring the terminal device by the network device.

When uplink transmit channel switching capabilities of a same fallback band combination of a plurality of band combinations are different, this technical solution provided in this embodiment helps reduce and avoid a decoding failure caused by inconsistent understanding of an applied switching period by the terminal device and the network device, and reduce implementation complexity caused by blindly traversing, by the network device, band combinations to determine a case in which a maximum value needs to be used for switching.

In addition, the network device may determine, based on the target switching period indicated by the first information, the switching period for the uplink transmit channel switching in the second band combination. The switching period that is for the uplink transmit channel switching in the second band combination and that is determined by using the method may be different from the switching period for the uplink transmit channel switching in the first band combination. In other words, the terminal device may support an uplink transmit channel switching capability different from that of the parent band combination in the fallback band combination, to improve flexibility of the terminal device.

S110 and S120 provide a solution to a problem caused by inconsistent understanding of an applied switching period by the terminal device and the network device. To be specific, the terminal device sends the first information to the network device, to indicate whether the first band combination supports the fallback of the uplink transmit channel switching capability.

In a possible implementation, the network device may alternatively send indication information to the terminal device when configuring the uplink transmit channel switching in the second band combination for the terminal device. For example, the indication information may be referred to as target indication information, and the target indication information may indicate that the switching period for the uplink transmit channel switching in the second band combination is determined based on the switching period for the uplink transmit channel switching in the first band combination. Herein, the second band combination is the fallback band combination of the first band combination.

For example, the target indication information indicates an identifier of a band included in the first band combination. In a possible implementation, a band list (for example, indicated by using uplinkTxSwitchingbandList) for uplink transmit channel switching is indicated in configuration information (for example, indicated by using uplinkTxSwitchingMoreBands) for uplink transmit channel switching. The band list includes identifiers of all bands included in the first band combination. For example, the identifiers of the bands are indicated by using a FreqBandIndicatorNR field. For example, a carrier aggregation or dual connectivity combination configured by the network device for the terminal device for communication is {A, B, C}. In other words, a serving cell configured by the network device is located on carriers in bands A, B, and C. However, the network device indicates, by using the target indication information in the configuration information for uplink transmit channel switching, that bands for uplink transmit channel switching include A, B, C, and E. However, in communication, the network device does not schedule uplink transmit channel switching in the band E, that is, actual communication does not occur on a carrier in the band E. By indicating A, B, C, and E in the configuration information for uplink transmit channel switching, the terminal device may learn that the network device schedules, based on an uplink transmit channel switching capability of a band combination {A, B, C, E}, uplink transmit channel switching that occurs in the combination {A, B, C}. In this way, the switching period ambiguity problem can be effectively avoided.

For example, the target indication information may include switching periods for uplink transmit channel switching in a plurality of band pairs included in the second band combination and the first band combination. After receiving the target indication information, the terminal device may determine, based on the uplink transmit channel switching capability of the first band combination, the switching period that is for the uplink transmit channel switching in the second band combination and that is determined by the network device.

For example, when configuring uplink transmit channel switching in the band combination {A, B, C} for the terminal device, the network device determines a switching period for the uplink transmit channel switching in the band combination {A, B, C} based on the uplink transmit channel switching capability of the band combination {A, B, C, E}. In this case, the target indication information sent by the network device to the terminal device may include uplink transmit channel switching periods for a plurality of band pairs (for example, (A, B), (A, C), and (B, C)) included in the band combination {A, B, C}.

After receiving the target indication information, the terminal device may perform a corresponding operation

based on the target indication information and a switching period for uplink transmit channel switching in a band pair supported by the terminal device. The terminal device performs uplink transmit channel switching based on a configuration delivered by the network device.

The network device indicates, to the terminal device, a configuration manner of uplink transmit channel switching in the fallback band combination determined by the network device (that is, the switching period for the uplink transmit channel switching in the second band combination is determined based on the uplink transmit channel switching capability of the first band combination). The terminal device may perform a corresponding operation based on different indication information. This technical solution also helps reduce and avoid a decoding failure caused by inconsistent understanding of an applied switching period by the terminal device and the network device.

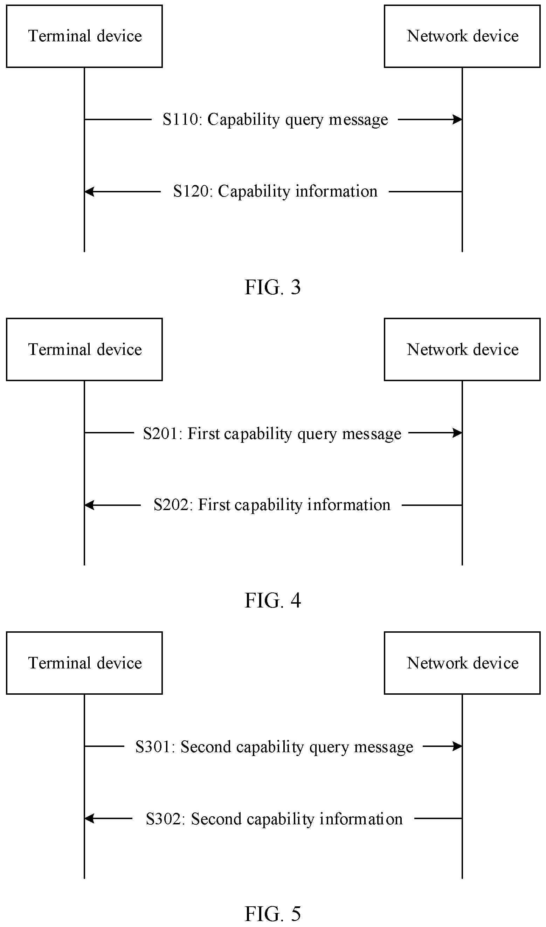

FIG. 4 shows another communication method according to an embodiment of this application. Capability information of a first band combination reported by a terminal device may include information that may indicate whether the first band combination supports fallback of an uplink transmit channel switching capability, and the information helps a network device more efficiently determine a manner of scheduling and/or configuring the terminal device.

S201: The network device sends a first capability query message, and correspondingly, the terminal device receives the first capability query message.

The first capability query information is used to request to obtain a radio access capability of the terminal device. After receiving the first capability query information, the terminal device may report information related to the radio access capability of the terminal device.

In some examples, when the terminal device initially establishes a connection to the network device, the network device may send the first capability query information to the terminal device.

In some examples, when the network device needs to re-query for the capability information of the terminal device, or the terminal device sends, to the network device, a mobility registration update request carrying a capability update indication, the network device may send the first capability query information to the terminal device.

S202: The terminal device sends first capability information, and correspondingly, the network device receives the first capability information.

The first capability information may indicate the radio access capability of the terminal device. After receiving the first capability information, the network device may configure and schedule the terminal device based on the radio access capability of the terminal device. In some scenarios, the first capability information may also be referred to as the first capability information, first radio access capability information, or the like of the terminal device.

For example, the first capability information may include one or more of capabilities of the terminal device, such as a band supported by the terminal device, a band combination supported by the terminal device, a carrier bandwidth, a quantity of multiple-input multiple-output layers, or a modulation order.

In some examples, the first capability information may include information about one or more band combinations supported by the terminal device, for example, information about a band combination #1, information about a band combination #2, and information about a band combination #3. These band combinations may include different quantities of bands. For example, the band combination #1 and the band combination #2 may include four bands, and the band combination #3 may include three bands, two bands, or the like.

The one or more band combinations may be band combinations for uplink transmit channel switching. The uplink transmit channel switching may also be referred to as dynamic uplink transmit switching (dynamic UL Tx switching), uplink transmission channel switching, or the like.

For example, the information about the band combination may include one or more of a band pair identifier of one or more band pairs included in the band combination, a switching period for uplink transmit channel switching in the one or more band pairs included in the band combination, and the like.

In some examples, the information about the band combination may be included in the first capability information as one information element.

For example, a plurality of types of information about the band combination #1 may be included in capability information of the band combination #1. Capability information of a band combination usually indicates a carrier aggregation or dual connectivity capability supported by the terminal device, or may indicate a non-carrier aggregation capability, for example, a single-carrier capability. In other words, the first capability information may include the capability information of the band combination #1, and the capability information of the band combination #1 may include one or more of the following:

an identifier of one or more bands included in the band combination #1, a bandwidth class (ca-bandwidthClass) of each of the one or more bands included in the band combination #1, a power class (power class) of the band combination #1, an identifier of a feature set combination (feature set combination) of the band combination #1, one or more band pairs that support uplink transmit channel switching and that are included in the band combination #1 (for example, a band pair includes two bands, and bandIndexUL1 and bandIndexUL2 respectively indicate identifiers of the bands), a switching period for uplink transmit channel switching supported by each band pair, or the like.

When the first capability information includes a plurality of band combinations supported by the terminal device,

the first capability information may include capability information of a plurality of band pairs.

For example, the first capability information may include the capability information of the band combination #1, capability information of the band combination #2, capability information of the band combination #3, and the like. The capability information of the band combination #2 and the capability information of the band combination #3 may also include information content similar to information content included in the capability information of the band combination #1.

In some scenarios, the capability information of the band combination may also be referred to as information about the band combination, the band combination, or the like. For example, the capability information of the band combination #1 may also be referred to as the information about the band combination #1, the band combination #1, or the like. For ease of description, the capability information of the band combination is referred to as the capability information of the band combination below.

In some examples, the first capability information may include first indication information, and the first indication information may indicate whether an uplink transmit channel switching capability of a second band combination is the same as or different from an uplink transmit channel switching capability of the first band combination.

In other words, the first indication information may indicate whether the first band combination supports the fallback of the uplink transmit channel switching capability.

In other words, the first indication information indicates whether the uplink transmit channel switching capability of the second band combination can be determined based on the uplink transmit channel switching capability of the first band combination.

In other words, the first indication information may indicate whether a switching period for uplink transmit channel switching in the second band combination is the same as or different from a switching period for uplink transmit channel switching in the first band combination.

In other words, the first indication information indicates whether the switching period for the uplink transmit channel switching in the second band combination can be determined based on the switching period for the uplink transmit channel switching in the first band combination.

In other words, the first information indicates, for band pairs including a same band, whether a fallback band combination of the first band combination supports a same uplink transmit channel switching period as the first band combination.

In some examples, both the first band combination and the second band combination support uplink transmit channel switching. In other words, the first indication information is applicable to a band combination that supports uplink transmit channel switching.

Herein, the second band combination is a fallback band combination of the first band combination. In other words, the first band combination is a parent band combination of the second band combination.

Second band combinations obtained by releasing at least one of the following: a secondary cell, an uplink component carrier of the secondary cell, a secondary cell group, or a supplementary uplink from the first band combination may all be referred to as fallback band combinations of the first band combination.

In some examples, the fallback band combination may be a band combination obtained by deleting at least one band from the parent band combination, in other words, a quantity of bands in the fallback band combination is less than a quantity of bands in the parent band combination. For example, the parent band combination includes four bands, and the fallback band combination includes three bands.

For related descriptions of the fallback band combination or the parent band combination, refer to related descriptions of S120. For brevity, details are not described herein again. It should be noted that the technical solution provided in this embodiment is applicable to but is not limited to a case in which the parent band combination includes four bands and the fallback band combination includes two or three bands.

In some examples, the first indication information may further indicate that there is at least one fallback band combination that is in all fallback band combinations of the first band combination and whose uplink transmit channel switching capability is different from an uplink transmit channel switching capability of the parent band combination.

For example, the first band combination including four bands includes four different fallback band combinations, and the first indication information may indicate that there is at least one fallback band combination that is in the four different fallback band combinations and whose uplink transmit channel switching capability is different from the uplink transmit channel switching capability of the first band combination.

In some examples, the first indication information may indicate that uplink transmit channel switching capabilities of all fallback band combinations of the first band combination are different from the uplink transmit channel switching capability of the first band combination. In other words, the first indication information may indicate that the first band combination does not include a fallback band combination whose uplink transmit channel switching capability is the same as the uplink transmit channel switching capability of the first band combination.

For example, the first band combination including four bands includes four different fallback band combinations, and the first indication information may indicate that uplink transmit channel switching capabilities of the four different fallback band combinations are all different from the uplink transmit channel switching capability of the first band

combination.

In some examples, an uplink transmit channel switching capability of a band combination may include one or more of a switching period for uplink transmit channel switching in the band combination, a switching option of the uplink transmit channel switching in the band combination, an identifier of a band in which downlink receiving is affected by uplink transmit channel switching, a capability of supporting an uplink codebook, or the like.

For example, the switching option of the uplink transmit channel switching may be switchedUL, dualUL, or both, where both indicates that both switchedUL and dualUL are supported.

For example, the capability of supporting the uplink codebook may be supporting a full-coherent (full-coherent) codebook subset or a non-coherent (non-coherent) codebook subset.

The switching period may include a switching period (for example, indicated by using a switchingPeriodFor1T field) for switching between one uplink transmit channel (1Tx) and one uplink transmit channel (1Tx), or the switching period may include a switching period (for example, indicated by using a switchingPeriodFor1T field) for switching between one uplink transmit channel (1Tx) and two uplink transmit channels (2Tx), or the switching period may include a switching period (for example, indicated by using a switchingPeriodFor2T field) for switching between two uplink transmit channels (2Tx) and two uplink transmit channels (2Tx), or the switching period may include a plurality of the foregoing three switching periods.

In some examples, the uplink transmit channel switching may alternatively be switching between more uplink transmit channels, for example, switching between four uplink transmit channels and another four uplink transmit channels. The switching period may alternatively indicate a switching period for switching between more uplink transmit channels, for example, a switching period for switching between three uplink transmit channels and another four uplink transmit channels. This is not limited in this application.

In a case in which the uplink transmit channel switching capability of the band combination includes one or more of the switching period for the uplink transmit channel switching in the band combination, the switching option of the uplink transmit channel switching in the band combination, the identifier of the band in which downlink receiving is affected by uplink transmit channel switching, the capability of supporting the uplink codebook, or the like, that the uplink transmit channel switching capability of the first band combination is the same as the uplink transmit channel capability of the second band combination may be understood as that the switching period for the uplink transmit channel switching in the first band combination is the same as the switching period for the uplink transmit channel switching in the second band combination, switching periods for uplink transmit channel switching between a same quantity of transmit channels of the first band combination and the second band combination are the same, and other uplink transmit channel switching capabilities are the same.

That the uplink transmit channel switching capability of the first band combination is different from the uplink transmit channel switching capability of the second band combination may be understood as that at least one of the following uplink transmit channel switching-related capabilities or the like is different: the switching period for the uplink transmit channel switching in the first band combination and the switching period for the uplink transmit channel switching in the second band combination, switching periods for uplink transmit channel switching between a same quantity of transmit channels of the first band combination and the second band combination, a switching option of the first band combination and the first band combination, or the like.

In some examples, the uplink transmit channel switching capability of the band combination may be a switching period for uplink transmit channel switching in the band combination. The switching period for the uplink transmit channel switching in the band combination may be a switching period for uplink transmit channel switching between one or more band pairs including any two bands included in the band combination, or may be a switching period for uplink transmit channel switching between one band pair and another band pair or another band.

In this case, whether the uplink transmit channel switching capability of the first band combination is different from the uplink transmit channel capability of the second band combination or whether the switching period for the uplink transmit channel switching in the second band combination is different from the switching period for the uplink transmit channel switching in the first band combination may be understood in the following manner.

Table 1 provides an example of two band combinations. A band combination {A, B, C, D} indicates that the band combination includes a band A, a band B, a band C, and a band D. Similarly, a band combination {A, B, C} indicates that the band combination includes the band A, the band B, and the band C.

Table 1

| Band combination | Included band pairs | Band pairs including a same band |
|---|---|---|
| {A, B, C, D} | (A, B), (A, C), (A, D), (B, C), (B, D), (C, D) | (A, B), (A, C), (B, C) |
| {A, B, C} | (A, B), (A, C), (B, C) | |

If results of a switching period for uplink transmit channel switching in any band pair in band pairs (A, B), (A, C), and (B, C), respectively determined based on the band combination {A, B, C, D} and the band combination {A, B, C}, are different, an uplink transmit channel switching capability of the band combination {A, B, C, D} is different from an uplink transmit channel switching capability of the band combination {A, B, C}.

If results of switching periods for uplink transmit channel switching in the three band pairs (A, B), (A, C), and (B, C), respectively determined based on the band combination {A, B, C, D} and the band combination {A, B, C}, are the same, the uplink transmit channel switching capability of the band combination {A, B, C, D} is the same as the uplink transmit channel switching capability of the band combination {A, B, C}.

In some examples, the first capability information may further include the second band combination and the uplink transmit channel switching capability of the second band combination.

For example, the uplink transmit channel switching capability of the second band combination may include one or more of the switching period for the uplink transmit channel switching in the second band combination, a switching option of the uplink transmit channel switching in the second band combination, and the like.

Similarly, for example, the uplink transmit channel switching capability of the second band combination may include only the switching period for the uplink transmit channel switching in the second band combination, in other words, the uplink transmit channel switching capability of the second band combination may be the switching period for the uplink transmit channel switching in the second band combination.

Similar to the uplink transmit channel switching capability of the first band combination, the switching period for the uplink transmit channel switching in the second band combination may be understood as a switching period for one or more band pairs included in the second band combination.

For example, a switching period for uplink transmit channel switching in the band combination {A, B, C} may be understood as a switching period for the band pair (A, B), a switching period for the band pair (A, C), and a switching period for the band pair (B, C).

In some examples, the first indication information may be included in capability information of each parent band combination, in other words, the first indication information may be reported in each band combination dimension.

In some examples, the first indication information may be an identifier field or an identifier bit, and the identifier field or the identifier bit indicates whether the first band combination supports the fallback of the uplink transmit channel switching capability. A length of the identifier field or the identifier bit may be 1 bit, 2 bits, or the like. This is not limited in this application.

For example, when the capability information of the first band combination reported by the terminal device includes the identifier field or the identifier bit, the first band combination and the fallback band combination of the first band combination have different uplink transmit channel switching capabilities, or the uplink transmit channel switching capability of the second band combination is different from the uplink transmit channel switching capability of the first band combination, or the uplink transmit channel switching capability of the second band combination cannot be determined based on the uplink transmit channel switching capability of the first band combination, or the switching period for the uplink transmit channel switching in the second band combination cannot be determined based on the switching period for the uplink transmit channel switching in the first band combination, or for band pairs including a same band, a band pair in the fallback band combination of the first band combination and a band pair in the first band combination have different uplink transmit channel switching periods.

When the capability information of the first band combination reported by the terminal device does not include the identifier field or the identifier bit (or is absent or is 0), or when the identifier field or the identifier bit in the first band combination reported by the terminal device is empty, the first band combination and the fallback band combination of the first band combination have a same uplink transmit channel switching capability, or the uplink transmit channel switching capability of the second band combination is the same as the uplink transmit channel switching capability of the first band combination, or the uplink transmit channel switching capability of the second band combination can be determined based on the uplink transmit channel switching capability of the first band combination, or the switching period for the uplink transmit channel switching in the second band combination can be determined based on the switching period for the uplink transmit channel switching in the first band combination, or for band pairs including a same band, a band pair in the fallback band combination of the first band combination and a band pair in the first band combination have a same uplink transmit channel switching period.

For example, when a value of the identifier field or the identifier bit in the capability information of the first band combination reported by the terminal device is "true (true)", the first band combination and the fallback band combination of the first band combination have different uplink transmit channel switching capabilities, or the uplink transmit channel switching capability of the second band combination is different from the uplink transmit channel switching capability of the first band combination, or the uplink transmit channel switching capability of the second band combination cannot be determined based on the uplink transmit channel switching capability of the first band combination, or the switching period for the uplink transmit channel switching in the second band combination cannot be determined based on the switching period for the uplink transmit channel switching in the first band combination, or for band pairs including a same band, a

band pair in the fallback band combination of the first band combination and a band pair in the first band combination have different uplink transmit channel switching periods.

When the value of the identifier field or the identifier bit in the capability information of the first band combination reported by the terminal device is "false (false)", the first band combination and the fallback band combination of the first band combination have a same uplink transmit channel switching capability, or the uplink transmit channel switching capability of the second band combination is the same as the uplink transmit channel switching capability of the first band combination, or the uplink transmit channel switching capability of the second band combination can be determined based on the uplink transmit channel switching capability of the first band combination, or the switching period for the uplink transmit channel switching in the second band combination can be determined based on the switching period for the uplink transmit channel switching in the first band combination, or for band pairs including a same band, a band pair in the fallback band combination of the first band combination and a band pair in the first band combination have a same uplink transmit channel switching period.

In some examples, the first indication information may further indicate that the uplink transmit channel switching capability of the fallback band combination of the first band combination needs to be determined based on an uplink transmit channel switching capability of a fallback band combination that is additionally reported.

In some examples, the first indication information may further include index information, and the index information may indicate a position of the second band combination in at least one band combination that is for uplink transmit channel switching and that is supported by the terminal device.

For example, the terminal device may report, in a form of band combination set, one or more band combinations supported by the terminal device. Band combinations in the band combination set may be arranged in a specific sequence. In other words, each band combination in the band combination set has an implicitly corresponding sequence number. The index information may be a sequence number of each band combination in the band combination set.

For example, the terminal device may report a first band combination list including band combinations supported by the terminal device, and the index information may indicate positions of different band combinations in the first band combination list. For example, index information of a band combination ranked in a first position in the first band combination list is 1, and index information of a band combination ranked in a second position in the first band combination list is 2.

For example, the terminal device may report a second band combination list including a band combination that supports uplink transmit channel switching and that is in the band combination supported by the terminal device, and the index information may indicate positions of different band combinations in the second band combination list. For example, index information of a band combination ranked in a first position in the second band combination list is 1, and index information of a band combination ranked in a second position in the second band combination list is 2.

In some examples, there are a plurality of second band combinations, in other words, the second band combination includes a plurality of band combinations. In this case, the first indication information may include a plurality of pieces of index information, and the plurality of pieces of index information may respectively indicate positions of the plurality of band combinations in at least one band combination that is for uplink transmit channel switching and that is supported by the terminal device.

For example, for a band combination {A, B, C, D}, uplink transmit channel switching capabilities of a fallback band combination {A, B, C} and a fallback band combination {A, B, D} are different from an uplink transmit channel switching capability of the parent band combination, and an uplink transmit channel switching capability of a fallback band combination {B, C, D} is the same as the uplink transmit channel switching capability of the parent band combination. Index information of the fallback band combination {A, B, C} in a band combination list is 3, index information of the fallback band combination {A, B, D} in the band combination list is 8, and index information of the fallback band combination {B, C, D} in the band combination list is 12. The first indication information reported by the terminal device may include the index information 3 and the index information 8, but does not include the index information 12.

In some examples, the first indication information further indicates the position of the second band combination in the at least one band combination that is for uplink transmit channel switching and that is supported by the terminal device. In other words, the first indication information may be the index information.

In some examples, the first capability information may further include a band combination entry (BC entry) of a fallback band combination. In other words, the terminal device may report, when reporting the capability information to the network device, a fallback band combination that has an uplink transmit channel switching capability different from that of the parent band combination.

For example, Table 2 shows switching periods for uplink transmit channel switching in two parent band combinations reported by the terminal device. The two parent band combinations may be respectively denoted as a parent band combination {A, B, C, D} and a parent band combination {A, B, C, E}, and the two parent band combinations each include four bands.

Table 2

| Band combination | Switching period for (A, B) (unit: μs) | Switching period for (A, C) (unit: μs) | Switching period for (B, C) (unit: μs) |
|---|---|---|---|
| {A, B, C, D} | 35 | 140 | 140 |
| {A, B, C, E} | 140 | 35 | 140 |

Both the parent band combination {A, B, C, D} and the parent band combination {A, B, C, E} include a same band combination {A, B, C}. As a fallback band combination of the parent band combination {A, B, C, D}, the band combination {A, B, C} includes three band pairs (band pairs (A, B), (A, C), and (B, C)) with switching periods for uplink transmit channel switching being 35 μs, 140 μs, and 140 μs respectively. As a fallback band combination of the parent band combination {A, B, C, D}, the band combination {A, B, C} includes three same band pairs with switching periods for uplink transmit channel switching being 140 μs, 35 μs, and 140 μs respectively.

In the band combination {A, B, C}, it is assumed that switching periods supported by the terminal device are respectively 35 μs for the band pair (A, B), 140 μs for the band pair (A, C), and 140 μs for the band pair (B, C). In this case, in the first capability information, capability information of the band combination {A, B, C, D} may not include the first indication information, and capability information of the band combination {A, B, C, E} may include the first indication information. The first indication information may indicate that the band combination {A, B, C, E} does not support the fallback of the uplink transmit channel switching capability. In other words, the first indication information may indicate that the uplink transmit channel switching capability of the band combination {A, B, C, E} is different from that of the band combination {A, B, C}. In other words, the uplink transmit channel switching capability of the band combination {A, B, C} cannot be determined based on the uplink transmit channel switching capability of the band combination {A, B, C, E}.

As described above, in this case, the first capability information may further include the band combination {A, B, C} and capability information of the band combination {A, B, C}. The information may be used by the network device to determine the switching period for the uplink transmit channel switching in the band combination {A, B, C}.

After receiving the first capability information reported by the terminal device, if the network device needs to configure uplink transmit channel switching in the band combination {A, B, C} based on the uplink transmit channel switching capability of the band combination {A, B, C, D}, because the capability information of the band combination {A, B, C, D} does not include the first indication information, the network device may directly configure the uplink transmit channel switching in the band combination {A, B, C} based on the uplink transmit channel switching capability in the capability information of the band combination {A, B, C, D}. In other words, switching periods for uplink transmit channel switching in a plurality of band pairs in the band combination {A, B, C} configured by the network device are the same as switching periods for uplink transmit channel switching in corresponding band pairs in the band combination {A, B, C, D}.

If the network device needs to configure the uplink transmit channel switching in the band combination {A, B, C} based on the uplink transmit channel switching capability of the band combination {A, B, C, E}, because the capability information of the band combination {A, B, C, E} includes the first indication information, the network device may determine, based on the first indication information, that the switching periods for the uplink transmit channel switching in the plurality of band pairs in the band combination {A, B, C} need to be determined based on an uplink transmit channel switching capability of a band combination {A, B, C} that is additionally reported. In this case, the network device may determine a position and the uplink transmit channel switching capability of the band combination {A, B, C} based on the first indication information or the index information included in the capability information of the band combination {A, B, C, E}.

The capability information of the first band combination includes the first indication information, and the first indication information explicitly indicates whether the first band combination supports the fallback of the uplink transmit channel switching capability. This helps improve efficiency of configuring, by the network device, the uplink transmit channel switching capability of the fallback band combination of the first band combination, helps keep a switching period for uplink transmit channel switching in the fallback band combination of the first band combination supported by the terminal device to be consistent with a switching period that is for uplink transmit channel switching in the fallback band combination of the first band combination and that is determined by the network device, helps reduce a probability of a switching period ambiguity problem, and helps improve reliability of communication between the network device and the terminal device.

In addition, the network device may not need to perform a complex information traversal operation due to the first indication information. This helps reduce complexity of scheduling and configuring the terminal device by the network device.

When uplink transmit channel switching capabilities of a same fallback band combination of a plurality of band combinations are different, this technical solution provided in this embodiment helps reduce and avoid a decoding failure caused by inconsistent understanding of an applied switching period by the terminal device and the network device.

When a capability of the fallback band combination supported by the terminal is different from that of the parent band combination, this solution can effectively reduce complexity caused by requiring the network device to blindly traverse all band combinations to determine whether the terminal device additionally reports a fallback band combination, and then determining a configuration based on a capability of the reported fallback band combination. The network device may determine, based on the parent band combination, whether the capability of the parent band combination can be used to determine a configuration and scheduling manner of uplink transmit channel switching in the fallback band combination with a smaller quantity of bands. If the terminal device reports the first indication information, the network device may learn that when a quantity of bands in a carrier aggregation combination that needs to be configured is less than that in a band combination reported by the terminal device (or when a fallback band combination is configured), the fallback band combination needs to be configured based on another band combination.

In addition, the network device may determine, based on the first information, that the uplink transmit channel capability of the second band combination supported by the terminal device is different from the uplink transmit channel switching capability of the parent band combination of the second band combination. In this way, the switching period that is for the uplink transmit channel switching in the second band combination and that is determined by the network device is different from the switching period for the uplink transmit channel switching in the first band combination. In other words, the terminal device may support an uplink transmit channel switching capability different from that of the parent band combination in the fallback band combination, to improve flexibility of the terminal device.

FIG. 5 shows another communication method according to an embodiment of this application. Capability information of a first band combination reported by a terminal device may include a second band combination and an uplink transmit channel switching capability of the second band combination.

S301: A network device sends a second capability query message, and correspondingly, the terminal device receives the second capability query message.

In some examples, the second capability query information is used to request to obtain a radio access capability of the terminal device. After receiving the second capability query information, the terminal device may report information related to the radio access capability of the terminal device.

In some examples, when the terminal device initially establishes a connection to the network device, the network device may send the second capability query information to the terminal device.

In some examples, when the network device needs to re-query for capability information of the terminal device, or the terminal device sends, to the network device, a mobility registration update request carrying a capability update indication, the network device may send the second capability query information to the terminal device.

S302: The terminal device sends second capability information, and correspondingly, the network device receives the second capability information.

The second capability information may indicate the radio access capability of the terminal device. After receiving the second capability information, the network device may configure and schedule the terminal device based on the radio access capability of the terminal device. In some scenarios, the second capability information may also be referred to as the second capability information, second radio access capability information, or the like of the terminal device.

For example, the second capability information may include one or more of capabilities of the terminal device, such as a band supported by the terminal device, a band combination supported by the terminal device, a carrier bandwidth, a quantity of multiple-input multiple-output layers, or a modulation order.

In some examples, the second capability information may include information about one or more band combinations supported by the terminal device, for example, information about a band combination #1, information about a band combination #2, and information about a band combination #3. These band combinations may include different quantities of bands. For example, the band combination #1 and the band combination #2 may include four bands, and the band combination #3 may include three bands, two bands, or the like.

The one or more band combinations may be band combinations for uplink transmit channel switching. The uplink transmit channel switching may also be referred to as dynamic uplink transmit switching (dynamic UL Tx switching), uplink transmission channel switching, or the like.

For example, the information about the band combination may include one or more of a band pair identifier of one or more band pairs included in the band combination, a switching period for uplink transmit channel switching in the one or more band pairs included in the band combination, and the like.

In some examples, the information about the band combination may be included in the second capability information as one information element.

For example, a plurality of types of information about the band combination #1 may be included in capability information of the band combination #1. Capability information of a band combination usually indicates a carrier aggregation or dual connectivity capability supported by the terminal device, or may indicate a non-carrier aggregation capability, for example, a single-carrier capability. In other words, the first capability information may include the capability information of the band combination #1. The capability information of the band combination #1 may include one or more of the following:

an identifier of one or more bands included in the band combination #1, a bandwidth class (ca-bandwidthClass) of each of the one or more bands included in the band combination #1, a power class (power class) of the band combination #1, an identifier of a feature set combination (feature set combination) of the band combination #1, one or more band pairs that support uplink transmit channel switching and that are included in the band combination #1 (for example, a band pair includes two bands, and bandIndexUL1 and bandIndexUL2 respectively indicate identifiers of the bands), a switching period for uplink transmit channel switching supported by each band pair, or the like.

When the first capability information includes a plurality of band combinations supported by the terminal device, the first capability information may include capability information of a plurality of band pairs.

For example, the first capability information may include the capability information of the band combination #1, capability information of the band combination #2, capability information of the band combination #3, and the like. The capability information of the band combination #2 and the capability information of the band combination #3 may also include information content similar to information content included in the capability information of the band combination #1.

In some scenarios, the capability information of the band combination may also be referred to as information about the band combination, the band combination, or the like. For example, the capability information of the band combination #1 may also be referred to as the information about the band combination #1, the band combination #1, or the like. For ease of description, the capability information of the band combination is referred to as the capability information of the band combination below.

In some examples, the capability information of the first band combination may include the second band combination and the uplink transmit channel switching capability of the second band combination, the second band combination is a fallback band combination of the first band combination, and an uplink transmit channel switching capability of the first band combination is different from the uplink transmit channel switching capability of the second band combination.

In some scenarios, the foregoing technical solution may also be understood as that the second capability information includes the capability information of the first band combination, the capability information of the first band combination may include second indication information, and the second indication information may indicate the second band combination and the uplink transmit channel switching capability of the second band combination.

For example, in a band combination {A, B, C, D}, switching periods for uplink transmit channel switching in a band pair (A, B), a band pair (A, C), and a band pair (B, C) that are supported by the terminal device are sequentially 35 μs, 140 μs, and 140 μs. In a fallback band combination {A, B, C}, switching periods for uplink transmit channel switching in the band pair (A, B), the band pair (A, C), and the band pair (B, C) that are supported by the terminal device are sequentially 140 μs, 35 μs, and 140 μs.

In this case, the second indication information may include an uplink transmit channel switching capability of the band combination {A, B, C}. Specifically, the second indication information may include a band pair included in the band combination {A, B, C} and a switching period for uplink transmit channel switching corresponding to the band pair.

In some examples, the second indication information may include an identifier of a band included in the second band combination, and the second indication information may further include a switching period for each band pair included in the second band combination.

For example, an identifier that is of a band included in a band combination and that is included in the second indication information may be a sequence number of the band in a parent band combination (namely, the first band combination) of the second band combination.

For example, sequence numbers of a band A, a band B, a band C, and a band D in the band combination {A, B, C, D} may be 1, 2, 3, and 4 respectively, and an uplink transmit channel switching capability of the band combination {A, B, C} is different from an uplink transmit channel switching capability of the band combination {A, B, C, D}. In this case, the second indication information may include sequence numbers 1, 2, and 3, to indicate bands included in the band combination {A, B, C}.

For example, if one band combination includes a maximum of 32 bands, a band identifier may be represented by using a 5-bit binary number.

In the foregoing example, the second indication information may further include switching periods for uplink transmit channel switching in the band pair (A, B), the band pair (A, C), and the band pair (B, C) that are included in the band combination {A, B, C}.

In some examples, when a first capability of the second band combination is the same as a first capability of the first band combination, and only uplink transmit channel switching capabilities are different, the second capability information may include the second indication information.

Herein, the first capability may include one or more of a feature set combination (feature set combination), a carrier aggregation capability, and the like.

When the capability information of the first band combination includes the second band combination and the uplink transmit channel switching capability of the second band combination, the second band combination and/or the uplink transmit channel switching capability of the second band combination may indicate that the first band combination

does not support the fallback of the uplink transmit channel switching capability. In other words, that the capability information of the first band combination includes the second band combination and the uplink transmit channel switching capability of the second band combination indicates that the first band combination does not support the fallback of the uplink transmit channel switching capability.

If the capability information of the first band combination does not include the second band combination and/or the uplink transmit channel switching capability of the second band combination, or a field of the second band combination and/or the uplink transmit channel switching capability of the second band combination in the capability information of the first band combination is empty, it indicates that the first band combination supports the fallback of the uplink transmit channel switching capability.

In some examples, both the first band combination and the second band combination support uplink transmit channel switching. In other words, the second indication information is applicable to a band combination that supports uplink transmit channel switching.

The second band combination is a fallback band combination of the first band combination. In other words, the first band combination is a parent band combination of the second band combination.

Second band combinations obtained by releasing at least one of the following: a secondary cell, an uplink component carrier of the secondary cell, a secondary cell group, or a supplementary uplink from the first band combination may all be referred to as fallback band combinations of the first band combination.

In some examples, the fallback band combination may be a band combination obtained by deleting at least one band from the parent band combination, in other words, a quantity of bands in the fallback band combination is less than a quantity of bands in the parent band combination. For example, the parent band combination includes four bands, and the fallback band combination includes three bands.

For related descriptions of the fallback band combination or the parent band combination, refer to related descriptions of S120. For brevity, details are not described herein again. It should be noted that the technical solution provided in this embodiment is applicable to but is not limited to a case in which the parent band combination includes four bands and the fallback band combination includes two or three bands.

In some examples, an uplink transmit channel switching capability of a band combination may include one or more of a switching period for uplink transmit channel switching in the band combination, a switching option of the uplink transmit channel switching in the band combination, an identifier of a band in which downlink receiving is affected by uplink transmit channel switching, a capability of supporting an uplink codebook, or the like.

For example, the switching option of the uplink transmit channel switching may be switchedUL, dualUL, or both, where both indicates that both switchedUL and dualUL are supported.

For example, the capability of supporting the uplink codebook may be supporting a full-coherent full-coherent codebook subset or a non-coherent non-coherent codebook subset.

The switching period may include a switching period (for example, indicated by using a switchingPeriodFor1T field) for switching between one uplink transmit channel (1Tx) and one uplink transmit channel (1Tx), or the switching period may include a switching period (for example, indicated by using a switchingPeriodFor1T field) for switching between one uplink transmit channel (1Tx) and two uplink transmit channels (2Tx), or the switching period may include a switching period (for example, indicated by using a switchingPeriodFor2T field) for switching between two uplink transmit channels (2Tx) and two uplink transmit channels (2Tx), or the switching period may include a plurality of the foregoing three switching periods.

In some examples, the uplink transmit channel switching may alternatively be switching between more uplink transmit channels, for example, switching between four uplink transmit channels and another four uplink transmit channels. The switching period may alternatively indicate a switching period for switching between more uplink transmit channels, for example, a switching period for switching between three uplink transmit channels and another four uplink transmit channels. This is not limited in this application.

In a case in which the uplink transmit channel switching capability of the band combination includes one or more of the switching period for the uplink transmit channel switching in the band combination, the switching option of the uplink transmit channel switching in the band combination, the identifier of the band in which downlink receiving is affected by uplink transmit channel switching, the capability of supporting the uplink codebook, or the like, for understanding of that the uplink transmit channel switching capability of the first band combination is the same as or different from the uplink transmit channel switching capability of the second band combination, refer to related descriptions in S202. For brevity, details are not described herein again.

In some examples, the uplink transmit channel switching capability of the band combination may be a switching period for uplink transmit channel switching in the band combination. The switching period for the uplink transmit channel switching in the band combination may be a switching period for uplink transmit channel switching between one or more band pairs including any two bands included in the band combination, or may be a switching period for uplink transmit channel switching between one band pair and another band pair or another band.

In this case, whether the uplink transmit channel switching capability of the first band combination is different from

the uplink transmit channel capability of the second band combination or whether the switching period for the uplink transmit channel switching in the second band combination is different from the switching period for the uplink transmit channel switching in the first band combination may be understood in a manner in related descriptions in S202. For brevity, details are not described herein.

In some examples, the capability information of the first band combination may include a plurality of band combinations and uplink transmit channel switching capabilities of the plurality of band combinations.

In some examples, the second capability information may include capability information of a plurality of different band combinations. The capability information of the different band combinations each may include the second indication information. In other words, the capability information of the different band combinations each may include one or more band combinations and an uplink transmit channel switching capability corresponding to the band combination. The plurality of pieces of second indication information may respectively indicate that none of the plurality of parent band combinations supports the fallback of the uplink transmit channel switching capability, and the plurality of pieces of second indication information may also indicate a fallback band combination whose uplink transmit channel switching capability is different from that of each parent band combination, and an uplink transmit channel switching capability of the fallback band combination.

For example, for the band combination {A, B, C, D}, uplink transmit channel switching capabilities of the fallback band combination {A, B, C} and the fallback band combination {A, B, D} are different from an uplink transmit channel switching capability of the parent band combination, and an uplink transmit channel switching capability of a fallback band combination {B, C, D} is the same as the uplink transmit channel switching capability of the parent band combination.

In this case, capability information of the band combination {A, B, C, D} may include the band combination {A, B, C}, the uplink transmit channel switching capability of the band combination {A, B, C}, the band combination {A, B, D}, and the uplink transmit channel switching capability of the band combination {A, B, D}, but does not include the band combination {B, C, D} or the uplink transmit channel switching capability of the band combination {B, C, D}.

When the network device configures the carrier aggregation combination as the band combination {A, B, C} or the band combination {A, B, D}, if the network device configures and schedules the terminal device based on a capability of the band combination {A, B, C, D}, for the uplink transmit channel switching capability of the band combination {A, B, C} or the band combination {A, B, D}, the network device may configure and schedule, based on the uplink transmit channel switching capability of the band combination {A, B, C} or the uplink transmit channel switching capability of the band combination {B, C, D} in the capability information of the band combination {A, B, C, D}, the terminal device to perform uplink transmit channel switching communication.

When the network device configures the carrier aggregation combination as the band combination {B, C, D}, if the network device configures and schedules the terminal device based on the capability of the band combination {A, B, C, D}, for the uplink transmit channel switching capability of the band combination {B, C, D}, because the capability information of the band combination {A, B, C, D} reported by the terminal device does not include the band combination {B, C, D} or the uplink transmit channel switching capability of the band combination {B, C, D}, the network device may directly configure uplink transmit channel switching in the band combination {B, C, D} based on an uplink transmit channel switching capability of the band combination {A, B, C, D}. In other words, the network device may determine that an uplink transmit channel switching period for the band combination {B, C, D} is the same as an uplink transmit channel switching period for the parent band combination {A, B, C, D}.

The capability information of the first band combination includes the second indication information and/or a band combination whose uplink transmit channel switching capability is different from that of the first band combination and an uplink transmit channel switching capability of the band combination. This helps improve efficiency of configuring, by the network device, uplink transmit channel switching in the fallback band combination of the first band combination, helps keep a switching period for uplink transmit channel switching in the fallback band combination of the first band combination supported by the terminal device to be consistent with a switching period that is for uplink transmit channel switching in the fallback band combination of the first band combination and that is determined by the network device, helps reduce a probability of a switching period ambiguity problem, and helps improve reliability of communication between the network device and the terminal device.

In addition, the network device may not need to perform a complex information traversal operation due to the second indication information. This helps reduce complexity of scheduling and configuring the terminal device by the network device.

When uplink transmit channel switching capabilities of a same fallback band combination of a plurality of band combinations are different, this technical solution provided in this embodiment helps reduce and avoid a decoding failure caused by inconsistent understanding of an applied switching period by the terminal device and the network device.

When the terminal device supports different uplink transmit channel switching capabilities in the fallback band combination, the terminal device reports uplink transmit channel switching capabilities of different fallback band combinations in the parent band combination of the fallback band combination, and does not need to additionally report another fallback band combination entry, so that signaling overheads for capability reporting can be reduced, and network

implementation complexity can be reduced. To be specific, when a network configures a carrier aggregation/dual connectivity combination, the network may configure the fallback band combination based on only one parent band combination, and does not need to perform a configuration based on capabilities of a plurality of band combinations.

In addition, the network device may directly determine the switching period for the uplink transmit channel switching in the second band combination based on the switching period that is for the uplink transmit channel switching in the second band combination and that is included in the capability information of the first band combination. However, the switching period for the uplink transmit channel switching in the second band combination is different from the switching period for the uplink transmit channel switching in the first band combination. In other words, the terminal device may support an uplink transmit channel switching capability different from that of the parent band combination in the fallback band combination, to improve flexibility of the terminal device.

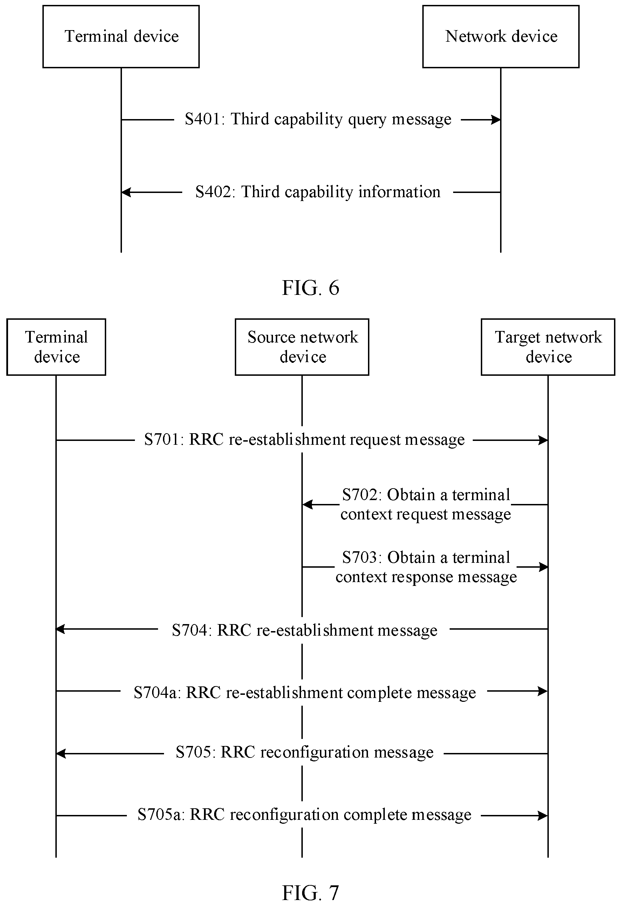

FIG. 6 shows another communication method according to an embodiment of this application. Capability information reported by a terminal device may include indication information indicating a target switching period. Based on the indication information, a network device may determine an uplink transmit channel switching capability of a fallback band combination. Existence of the indication information helps reduce complexity of configuring the uplink transmit channel switching capability of the fallback band combination by the network device.

S401: The network device sends a third capability query message, and correspondingly, the terminal device receives the third capability query message.

The third capability query information is used to request to obtain a radio access capability of the terminal device. After receiving the third capability query information, the terminal device may report information related to the radio access capability of the terminal device.

In some examples, when the terminal device initially establishes a connection to the network device, the network device may send the third capability query information to the terminal device.

In some examples, when the network device needs to re-query for capability information of the terminal device, or the terminal device sends, to the network device, a mobility registration update request carrying a capability update indication, the network device may send the third capability query information to the terminal device.

S402: The terminal device sends third capability information, and correspondingly, the network device receives the third capability information.

The third capability information may indicate the radio access capability of the terminal device. After receiving the third capability information, the network device may configure and schedule the terminal device based on the radio access capability of the terminal device. In some scenarios, the third capability information may also be referred to as the third capability information, third radio access capability information, or the like of the terminal device.

For example, the third capability information may include one or more of capabilities of the terminal device, such as a band supported by the terminal device, a band combination supported by the terminal device, a carrier bandwidth, a quantity of multiple-input multiple-output layers, or a modulation order.

In some examples, the third capability information may include information about one or more band combinations supported by the terminal device, for example, information about a band combination #1, information about a band combination #2, and information about a band combination #3. These band combinations may include different quantities of bands. For example, the band combination #1 and the band combination #2 may include four bands, and the band combination #3 may include three bands, two bands, or the like.

The one or more band combinations may be band combinations for uplink transmit channel switching. The uplink transmit channel switching may also be referred to as dynamic uplink transmit switching (dynamic UL Tx switching), uplink transmission channel switching, or the like.

For example, the information about the band combination may include one or more of a band pair identifier of one or more band pairs included in the band combination, a switching period for uplink transmit channel switching in the one or more band pairs included in the band combination, and the like.

In some examples, a plurality of types of information about a same band combination may be included in the third capability information as one information element.

For example, a plurality of types of information about the band combination #1 may be included in capability information of the band combination #1. Capability information of a band combination usually indicates a carrier aggregation or dual connectivity capability supported by the terminal device, or may indicate a non-carrier aggregation capability, for example, a single-carrier capability. In other words, the third capability information may include the capability information of the band combination #1. The capability information of the band combination #1 may include one or more of the following:

an identifier of one or more bands included in the band combination #1, a bandwidth class (ca-bandwidthClass) of each of the one or more bands included in the band combination #1, a power class (power class) of the band combination #1, an identifier of a feature set combination (feature set combination) of the band combination #1, one or more band pairs that support uplink transmit channel switching and that are included in the band combination #1 (for example, a band pair includes two bands, and bandIndexUL1 and bandIndexUL2 respectively indicate identifiers of the bands), a switching

period for uplink transmit channel switching supported by each band pair, or the like.

When the third capability information includes a plurality of band combinations supported by the terminal device, the third capability information may include capability information of the plurality of band combinations.

For example, the third capability information may include the capability information of the band combination #1, capability information of the band combination #2, capability information of the band combination #3, and the like. The capability information of the band combination #2 and the capability information of the band combination #3 may also include information content similar to information content included in the capability information of the band combination #1.

In some scenarios, the capability information of the band combination may also be referred to as information about the band combination, the band combination, or the like. For example, the capability information of the band combination #1 may also be referred to as the information about the band combination #1, the band combination #1, or the like. For ease of description, the capability information of the band combination is referred to as the capability information of the band combination below.

In some examples, the third capability information may further include third indication information. The third indication information indicates that a switching period for uplink transmit channel switching in a second band combination is a target switching period, and the target switching period may be a longest switching period for uplink transmit channel switching in all band pairs included in a first band combination, or the target switching period may be a longest switching period for uplink transmit channel switching in all band pairs included in the second band combination.

For example, the target switching period may be a longest switching period for uplink transmit channel switching in all band pairs included in the second band combination.

For example, for a band combination {A, B, C, D}, switching periods for uplink transmit channel switching in band pairs (A, B), (A, C), and (B, C) in the band combination reported by the terminal device are 35 μs, 140 μs, and 140 μs respectively. For a fallback band combination {A, B, C} of the band combination {A, B, C, D}, switching periods for uplink transmit channel switching in band pairs (A, B), (A, C), and (B, C) supported by the terminal device are 140 μs, 35 μs, and 140 μs respectively.

In this case, the target switching period may be a longest switching period, namely, 140 μs, for uplink transmit channel switching in the band pairs (A, B), (A, C), and (B, C) included in the band combination {A, B, C}.

After receiving the indication information, the network device may determine that a switching period for uplink transmit channel switching in the band combination {A, B, C} is a longest switching period, namely, 140 μs, in switching periods for uplink transmit channel switching in the band pair (A, B), the band pair (A, C), and the band pair (B, C). When configuring a band combination for carrier aggregation or a band combination for dual connectivity as the band combination {A, B, C}, the network device may determine that switching periods for uplink transmit channel switching in a plurality of band combinations in the band combination are all 140 μs.

For example, the target switching period may be a longest switching period for uplink transmit channel switching in all band pairs included in the first band combination.

For example, for the band combination {A, B, C, D}, the terminal device may report switching periods for uplink transmit channel switching in a plurality of band pairs included in the band combination. For example, switching periods for uplink transmit channel switching in band pairs (A, B), (A, C), (B, C), (A, D), (B, C), and (B, D) are 35 μs, 140 μs, 140 μs, 210 μs, 140 μs, and 140 μs respectively.

In this case, the target switching period may be a longest switching period, namely, 210 μs, for uplink transmit channel switching in the plurality of band pairs included in the band combination {A, B, C, D}.

When the terminal device sends the third indication information, the network device may determine, based on the third indication information, that in all fallback band combinations of the band combination {A, B, C, D}, for example, the band combination {A, B, C}, a band combination {A, B, D}, and a band combination {B, C, D}, a switching period for uplink transmit channel switching in each band pair supported by the terminal device is 210 μs, namely, a largest value in 35 μs, 140 μs, 140 μs, 210 μs, 140 μs, and 140 μs.

In some examples, both the first band combination and the second band combination support uplink transmit channel switching. In other words, the first indication information is applicable to a band combination that supports uplink transmit channel switching.

The second band combination is a fallback band combination of the first band combination. In other words, the first band combination is a parent band combination of the second band combination.

Second band combinations obtained by releasing at least one of the following: a secondary cell, an uplink component carrier of the secondary cell, a secondary cell group, or a supplementary uplink from the first band combination may be referred to as fallback band combinations of the first band combination.

In some examples, the fallback band combination may be a band combination obtained by deleting at least one band from the parent band combination, in other words, a quantity of bands in the fallback band combination is less than a quantity of bands in the parent band combination. For example, the parent band combination includes four bands, and the fallback band combination includes three bands.

For related descriptions of the fallback band combination or the parent band combination, refer to related

descriptions of S120. For brevity, details are not described herein again. It should be noted that the technical solution provided in this embodiment is applicable to but is not limited to a case in which the parent band combination includes four bands and the fallback band combination includes two or three bands.

In some examples, an uplink transmit channel switching capability of a band combination may include one or more of a switching period for uplink transmit channel switching in the band combination, a switching option of the uplink transmit channel switching in the band combination, an identifier of a band in which downlink receiving is affected by uplink transmit channel switching, a capability of supporting an uplink codebook, or the like.

For example, the switching option of the uplink transmit channel switching may be switchedUL, dualUL, or both, where both indicates that both switchedUL and dualUL are supported.

For example, the capability of supporting the uplink codebook may be supporting a full-coherent full-coherent codebook subset or a non-coherent non-coherent codebook subset.

The switching period may include a switching period (for example, indicated by using a switchingPeriodFor1T field) for switching between one uplink transmit channel (1Tx) and one uplink transmit channel (1Tx), or the switching period may include a switching period (for example, indicated by using a switchingPeriodFor1T field) for switching between one uplink transmit channel (1Tx) and two uplink transmit channels (2Tx), or the switching period may include a switching period (for example, indicated by using a switchingPeriodFor2T field) for switching between two uplink transmit channels (2Tx) and two uplink transmit channels (2Tx), or the switching period may include a plurality of the foregoing three switching periods.

In some examples, the uplink transmit channel switching may alternatively be switching between more uplink transmit channels, for example, switching between four uplink transmit channels and another four uplink transmit channels. The switching period may alternatively indicate a switching period for switching between more uplink transmit channels, for example, a switching period for switching between three uplink transmit channels and another four uplink transmit channels. This is not limited in this application.

In a case in which the uplink transmit channel switching capability of the band combination includes one or more of the switching period for the uplink transmit channel switching in the band combination, the switching option of the uplink transmit channel switching in the band combination, the identifier of the band in which downlink receiving is affected by uplink transmit channel switching, the capability of supporting the uplink codebook, or the like, for understanding of that the uplink transmit channel switching capability of the first band combination is the same as or different from the uplink transmit channel switching capability of the second band combination, refer to related descriptions in S202. For brevity, details are not described herein again.

In some examples, the uplink transmit channel switching capability of the band combination may be a switching period for uplink transmit channel switching in the band combination.

In this case, whether the uplink transmit channel switching capability of the first band combination is different from the uplink transmit channel capability of the second band combination or whether the switching period for the uplink transmit channel switching in the second band combination is different from the switching period for the uplink transmit channel switching in the first band combination may be understood in a manner in related descriptions in S202. For brevity, details are not described herein.

In some examples, the third indication information may be included in capability information of each parent band combination, in other words, the third indication information may be reported in each band combination dimension.

In some examples, the third capability information may include a plurality of pieces of third indication information, and the plurality of pieces of third indication information may respectively indicate target switching periods corresponding to a plurality of different band combinations.

For example, the third capability information includes the capability information of the band combination #1, the capability information of the band combination #2, and the capability information of the band combination #3. Neither the band combination #1 nor the band combination #2 supports fallback of an uplink transmit channel switching capability, and the band combination #3 supports the fallback of the uplink transmit channel switching capability. In this case, the third capability information may further include indication information #1 and indication information #2. The indication information #1 may indicate that an uplink transmit channel switching period for a fallback band combination of the band combination #1 is a first target switching period, and the indication information #2 may indicate that an uplink transmit channel switching period for a fallback band combination of the band combination #2 is a second target switching period. A manner of determining the first target switching period and the second target switching period is similar to the foregoing manner of determining the target switching period. For details, refer to the foregoing descriptions. For brevity, details are not described herein again.

For an uplink transmit channel switching period for a fallback band combination of the band combination #3, because the third capability information does not include indication information corresponding to the band combination #3, the network device may determine, based on an uplink transmit channel switching capability of the band combination #3, the uplink transmit channel switching period for the fallback band combination of the band combination #3.

In some examples, the third indication information may include an identifier field and an identifier bit. For example,

the third indication information may be an identifier bit whose length is 1 bit.

A switching period for uplink transmit channel switching is directly indicated in the capability information, so that the network device may configure uplink transmit channel switching in the fallback band combination based on the indication information. This helps improve efficiency of configuring, by the network device, uplink transmit channel switching in the fallback band combination of the first band combination, helps keep a switching period for uplink transmit channel switching in the fallback band combination of the first band combination supported by the terminal device to be consistent with a switching period that is for uplink transmit channel switching in the fallback band combination of the first band combination and that is determined by the network device, helps reduce a probability of a switching period ambiguity problem, and helps improve reliability of communication between the network device and the terminal device.

In addition, the network device may not need to perform a complex information traversal operation due to the indication information. This helps reduce complexity of scheduling and configuring the terminal device by the network device.

When uplink transmit channel switching capabilities of a same fallback band combination of a plurality of band combinations are different, this technical solution provided in this embodiment helps reduce and avoid a decoding failure caused by inconsistent understanding of an applied switching period by the terminal device and the network device, and reduce implementation complexity caused by blindly traversing, by the network device, band combinations to determine a case in which a maximum value needs to be used for switching.

In addition, the network device may determine, based on the target switching period indicated by the third indication information, the switching period for the uplink transmit channel switching in the second band combination. The switching period that is for the uplink transmit channel switching in the second band combination and that is determined by using the method may be different from the switching period for the uplink transmit channel switching in the first band combination. In other words, the terminal device may support an uplink transmit channel switching capability different from that of the parent band combination in the fallback band combination, to improve flexibility of the terminal device.

The following describes some related procedures of RRC (Radio Resource Control) reconfiguration and RRC re-establishment.

RRC reconfiguration (RRC reconfiguration):

An objective of the RRC reconfiguration is to modify an RRC connection, for example, establish/modify/release a radio bearer (radio bearer, RB), establish/modify/release a backhaul (Backhaul, BH) RLC channel, establish/modify/release a Uu relay RLC channel, establish/modify/release a PC5 relay RLC channel, set/modify/release measurement, add/modify/release a secondary cell (secondary cell, SCell) and a cell group, or add/modify/release a conditional handover configuration.

In an RRC reconfiguration procedure, after a network device sends an RRC reconfiguration (RRCReconfiguration) message to a terminal, if a configuration succeeds, the terminal returns an RRC reconfiguration complete (RRCReconfigurationComplete) message. Alternatively, if the configuration fails, the terminal triggers an RRC re-establishment procedure (triggered when a prerequisite of the RRC re-establishment procedure is met).

That the configuration succeeds may be understood as that the terminal accepts or supports the configuration of the network device. That the configuration fails may be understood as that the terminal does not accept or support the configuration of the network device.

The RRC reconfiguration is classified into an incremental-configuration-based RRC reconfiguration and a full-configuration-based RRC reconfiguration. The incremental-configuration-based RRC reconfiguration means that a new configuration is obtained by adding, deleting, or modifying a current sending configuration based on a current RRC configuration of the terminal. The incremental-configuration-based RRC reconfiguration needs to carry only a part different from the current RRC configuration of the terminal. When receiving an incremental RRC reconfiguration, the terminal applies a configuration in the incremental RRC reconfiguration based on the current RRC configuration. The full-configuration-based RRC reconfiguration (term Full configuration) means that an RRC reconfiguration carrying a configuration is an RRC reconfiguration performed based on a absent RRC configuration. After receiving an RRC reconfiguration with a full configuration, the terminal clears the current RRC configuration, applies the absent RRC configuration, and applies a configuration in a full RRC reconfiguration based on the absent RRC configuration.

RRC re-establishment (RRC re-establishment):

Generally, when an RRC layer of the terminal is in an RRC connected (RRC_CONNECTED) state, a NAS layer is in a configuration management (Configuration management, CM) connected (CM-CONNECTED) state, an access stratum (Access stratum, AS) of the terminal is securely activated, and a signaling radio bearer (signaling radio bearer, SRB) 2 and a data radio bearer (data radio bearer, DRB) are configured, if an RRC reconfiguration failure or a radio link failure occurs, the terminal may trigger an RRC re-establishment procedure. FIG. 7 shows a cross-base-station RRC re-establishment process. For example, the RRC re-establishment procedure may include the following steps.

S701: The terminal sends an RRC re-establishment request (RRCReestablishmentReq terminal st) message to a target network device. Correspondingly, the target network device receives the RRC re-establishment request message from the terminal.

Before step S701, the terminal may perform cell selection, and perform step S701 after selecting a target cell. The target network device is a network device to which the target cell belongs. In other words, the target network device is configured to manage the target cell.

Optionally, the target network device may be the same as or different from a source network device. The source network device may be understood as a last serving network device (Last Serving gNB), or may be understood as a network device that last serves the terminal before the terminal selects the target cell.

Optionally, the RRC re-establishment request message may include an identifier of the terminal and a cause for requesting RRC re-establishment. The identifier of the terminal is used by the target network device to search for a context of the terminal. The cause for requesting RRC re-establishment indicates a type of an exception that occurs on the terminal, for example, a reconfiguration failure, a handover failure, or another failure.

S702: The target network device sends a retrieve terminal context request (Retrieve Terminal Context Req terminal st) message to the source network device. Correspondingly, the source network device receives the Retrieve Terminal Context Req terminal st message from the target network device. The Retrieve Terminal Context Req terminal st is used to request the context of the terminal.

S703: The source network device sends a retrieve terminal context response (Retrieve Terminal Context Response) message to the target network device. Correspondingly, the target network device receives the Retrieve Terminal Context Response message from the source network device. The Retrieve Terminal Context Response message includes the context of the terminal.

S704: The target network device sends an RRC re-establishment (RRCReestablishment) message to the terminal. Correspondingly, the terminal receives the RRC re-establishment message from the target network device.

The RRC re-establishment message is a response message of the RRC re-establishment request message, and may be understood as a reply of the target network device to an RRC re-establishment request of the terminal.

Optionally, the RRC re-establishment message may include a next hop chaining count (nextHopChainingCount), used by the terminal to update an AS security parameter.

S704a: The terminal sends an RRC re-establishment complete (RRCReestablishmenComplete) message to the target network device. Correspondingly, the target network device receives the RRC re-establishment complete message from the terminal.

S705: The target network device sends an RRC reconfiguration message to the terminal. Correspondingly, the terminal receives the RRC reconfiguration message from the target network device.

For example, the RRC reconfiguration message is used for configuration based on a previously established RRC connection between the terminal and the source network device. In other words, the RRC reconfiguration inherits an RRC connection configuration before re-establishment.

S705a: The terminal sends an RRC reconfiguration complete message to the target network device. Correspondingly, the target network device receives the RRC reconfiguration complete message from the terminal.

It should be noted that FIG. 7 merely illustrates the RRC re-establishment procedure. For detailed descriptions of the procedure, refer to related descriptions in a protocol. Details are not described herein again. In addition, the foregoing procedure may be understood as a procedure in a scenario in which RRC re-establishment succeeds.

The current procedure has the following problems:

After a network device sends an RRC reconfiguration message to the terminal, the terminal needs to send an RRC reconfiguration complete message to the network device after applying the reconfiguration message. If a radio link failure occurs between the terminal and the network device after the terminal receives the RRC reconfiguration message, the RRC reconfiguration complete message sent by the terminal may be sent to the network device, or may not be sent to the network device. If the network device receives the RRC reconfiguration complete message, the network device may learn that the terminal has applied a configuration in the RRC reconfiguration message. After the terminal subsequently triggers RRC re-establishment, the network device may send a new RRC reconfiguration message by using the configuration corresponding to the RRC reconfiguration message as a baseline, to update an RRC configuration of the terminal. If the network device does not receive the RRC reconfiguration complete message, the network device cannot determine whether the terminal applies the configuration in the RRC reconfiguration message. After the terminal subsequently triggers RRC re-establishment, the network device can only fall back to an RRC configuration existing before the RRC reconfiguration message is sent, and send a new incremental RRC reconfiguration message to update the RRC configuration of the terminal. However, because the terminal has applied the configuration in the RRC reconfiguration message in this case, after the RRC re-establishment, the terminal receives a new incremental RRC reconfiguration message, and uses a configuration in the RRC reconfiguration message as a configuration baseline to update the RRC configuration by using the configuration in the new RRC reconfiguration message. Consequently, RRC configurations of the terminal and a base station are inconsistent.

To resolve the foregoing problem, an embodiment of this application provides a communication method. Details are described as follows.

S801: A terminal sends a first message to a first network device. Correspondingly, the first network device

receives the first message from the terminal.

The first message is used to request to re-establish an RRC connection. For example, the first message may be an RRC re-establishment request (RRCReestablishmentRequest) message. The first message carries a terminal identifier of the terminal. For implementation of the RRC re-establishment request message, refer to related descriptions in the procedure shown in FIG. 7. Details are not described herein again.

Before this, the terminal detects a radio link failure, and the terminal is triggered to select a cell and send the first message. Before the terminal detects the radio link failure, the terminal receives a first RRC reconfiguration message, and configures an RRC parameter of the terminal based on the reconfiguration message. Time from a moment at which the terminal receives the first RRC reconfiguration message to a moment at which the terminal sends the first message or detects the radio link failure is less than a first time length.

S802: The first network device sends a context request message to a second network device, to request the second network device to send a context of the terminal to the first network device.

After receiving the RRC re-establishment request message, the first network device determines, based on the terminal identifier of the terminal, that the terminal belongs to the second network device, and sends the context request message to the second network device, to request the second network device to send the context of the terminal to the first network device.

S803: The second network device receives the context request message sent by the first network device, and sends a third message to the first network device, so that the first network device sends a full RRC reconfiguration message to the terminal based on the third message.

The second network device receives the context request message, and determines, based on the context request message, whether a first condition is met. The first condition is that the second network device has previously sent an RRC reconfiguration message to the terminal, and has not received an acknowledgment message for the reconfiguration message. The acknowledgment message may be an RRC reconfiguration complete message or a layer 2 acknowledgment message for an RLC (radio link control radio link control layer) PDU (protocol data unit protocol data unit) in which the RRC reconfiguration message is located. If the first condition is met, the second network device sends the third message to the first network device, so that the first network device sends the full RRC reconfiguration message to the terminal based on the third message. Specifically, if the second network device has sent an RRC reconfiguration message to the terminal before, and does not receive an acknowledgment message for the reconfiguration message, an RRC configuration of the terminal may be inconsistent with an RRC configuration of the network device for the terminal. Therefore, the first network device needs to be notified to use a full RRC reconfiguration to avoid a communication fault caused by inconsistent RRC configurations after an incremental RRC reconfiguration. Because the full RRC reconfiguration is performed based on a absent configuration and does not depend on RRC configuration information currently used by the terminal, a problem of inconsistent RRC configurations after the incremental RRC reconfiguration can be avoided.

The third message includes first indication information. Specifically, the third message is a context request acknowledgment message or a context request failure message, and the first indication information may be an indication indicating that the terminal once had an unacknowledged RRC reconfiguration message, an indication indicating that there may be a risk of inconsistence between the RRC configuration of the terminal and the RRC configuration of the network device, an indication information indicating that the RRC configuration of the terminal is unavailable, or an indication indicating that the context of the terminal exists.

S804: The first network device receives the third message, and sends the full RRC reconfiguration message to the terminal based on the third message.

The first network device sends the full RRC reconfiguration message to the terminal based on the received third message. Specifically, the first network device sends the RRC re-establishment message to the terminal before or while sending the full RRC reconfiguration message.

That the first network device sends the full RRC reconfiguration message to the terminal based on the third message specifically includes: The third message includes the first indication information, and the first network device sends the full RRC reconfiguration message to the terminal based on the first indication information. Specifically, the third message is a context request acknowledgment message or a context request failure message, and the first indication information may be an indication indicating that the terminal once had an unacknowledged RRC reconfiguration message, an indication indicating that there may be a risk of inconsistence between the RRC configuration of the terminal and the RRC configuration of the network device, indication information indicating that the RRC configuration of the terminal is unavailable, or an indication indicating that the context of the terminal exists.

The full RRC reconfiguration message is specifically an RRC reconfiguration message including a full configuration indication.

After receiving the full reconfiguration message, the terminal device deletes a stored RRC configuration, applies the absent configuration, and then configures and updates an RRC configuration parameter based on the full reconfiguration message.

Based on this solution, the first network device may determine, after the RRC re-establishment, that the full RRC

reconfiguration message needs to be used. This avoids a problem of context inconsistence between the terminal and a network caused by the incremental RRC reconfiguration, thereby avoiding a potential risk of a communication failure.

The following describes CG resources.

(1) SDT small data transmission

To resolve a problem of excessively high overheads caused by transmitting/receiving very small data by a terminal device in an RRC_CONNECTED state, the terminal device may not enter the RRC_CONNECTED state to transmit/receive small data. This data transmission mechanism is small data transmission (small data transmission, SDT). For example, the terminal device may communicate with a network device in an inactive state or an idle state.

For example, in embodiments of this application, data less than a preset value may be referred to as small data. For example, the preset value may be set as required, for example, may be 500 bytes or 300 bytes. The network device and the terminal device may determine, based on a data label or a data type, whether data is small data. Specifically, the network device and the terminal device may negotiate the data label or the data type based on a data size. For example, the data label may include big data or small data. For another example, data whose data type is heartbeat packet, instant message, or periodic data is small data, and data whose data type is file, video, or audio is big data.

(2) Brief description of a time unit in NR

In a communication system, time domain resources include a hyper frame (hyper frame), a radio frame (radio frame) (also referred to as a system frame, and referred to as a frame (frame) for short), a subframe (subframe), a slot (slot), and a symbol (symbol) (for example, an orthogonal frequency division multiplexing (orthogonal frequency division multiplexing, OFDM) symbol).

Duration of one frame is 10 ms, and each frame may have one system frame number (system frame number, SFN) (which may also be referred to as an index of the frame). For example, a range of the SFN is 0 to 1023. For example, a periodicity of the frame is 1024× 10 ms=10240 ms. In a 5G NR system, a group of frames whose SFNs are 0 to 1023 is referred to as a hyper frame (for example, a hyper system frame or a hyper frame). In other words, one hyper frame is equal to 1024 frames, and is equal to 10240 ms. For example, each hyper frame may have a hyper frame number (hyper system frame number, H-SFN, or hyper frame number, HFN). For example, the network device may include information about the H-SFN in system information (for example, a SIB 1). For example, the information about the H-SFN included in the system information may occupy 10 bits. For example, a range of the H-SFN may be 0 to 1023. For example, a periodicity of a hyper frame (or a hyper frame periodicity) is 1024 hyper frames=1024×1024×10 ms. For example, the terminal device obtains the information about the H-SFN included in the system information, and the terminal device may determine an H-SFN of a hyper frame in which the system information is received. For example, when the SFN is flipped, the H-SFN changes. For example, H-SFN of a next hyper frame=(H-SFN of a previous hyper frame+1) mod 1024. For example, if the H-SFN of the previous hyper frame is not equal to 1023 or is less than 1023, the H-SFN of the next hyper frame is equal to the H-SFN of the previous hyper frame+1. For example, if the H-SFN of the previous hyper frame is equal to 1023, the H-SFN of the next hyper frame is equal to 0. For example, that the SFN is flipped may be understood as that the SFN changes from 1023 to 0. For example, 1024 hyper frames may be referred to as a hyper frame periodicity or one hyper frame periodicity.

In addition, one frame includes 10 subframes, and duration of each subframe is 1 ms. One subframe may include one or more slots. It should be noted that when subcarrier spacings (subcarrier spacings, SCSs) are different, a quantity of slots included in each frame is different, a quantity of slots included in each subframe is also different, and duration of each slot is also different. Details are shown in Table 3. $N_{symb}^{slot}$ is a quantity of symbols included in one slot, $N_{slot}^{frame,u}$ is a quantity of slots included in one frame, $N_{slot}^{subframe,u}$ is a quantity of slots included in one subframe, and $\Delta f = 2^{u} \cdot 15$ indicates a subcarrier spacing in a unit of kHz. Optionally, $\mu$ indicates an index corresponding to the subcarrier spacing, and indicates the subcarrier spacing.

Table 3

| $\mu$ | $\Delta f = 2^{\mu} \cdot 15$ | $N_{symb}^{slot}$ | $N_{slot}^{frame,\mu}$ | Duration of each slot | $N_{slot}^{subframe,\mu}$ |
|---|---|---|---|---|---|
| 0 | 15 | 14 | 10 | 1 ms | 1 |
| 1 | 30 | 14 | 20 | 0.5 ms | 2 |
| 2 | 60 | 14 or 12 | 40 | 0.25 ms | 4 |
| 3 | 120 | 14 | 80 | 0.125 ms | 8 |

(continued)

| $\mu$ | $\Delta f = 2^{\mu} \cdot 15$ | $N_{symb}^{slot}$ | $N_{slot}^{frame,\mu}$ | Duration of each slot | $N_{slot}^{subframe,\mu}$ |
|---|---|---|---|---|---|
| 4 | 240 | 14 | 160 | 0.0625 ms | 16 |
| 5 | 480 | 14 | 320 | 0.03125 ms | 32 |
| 6 | 960 | 14 | 640 | 0.015625 ms | 64 |

(3) Configured grant (configured grant, CG)

For example, an uplink resource may include a dynamic grant (dynamic grant, DG) and a CG.

For example, the DG is a resource dynamically scheduled by the network device for the terminal device by using downlink control information (downlink control information, DCI). In an uplink, the network device may dynamically allocate a resource to the terminal device on a physical downlink control channel (physical downlink control channel, PDCCH) (for example, by using a cell-radio network temporary identity (cell-radio network temporary identity, C-RNTI) or a configured scheduling-radio network temporary identity (configured scheduling-radio network temporary identity, CS-RNTI)). For example, when downlink reception of the terminal device is enabled (for example, when DRX is configured, the DRX controls the behavior), the terminal device monitors the PDCCH to find a possible uplink resource for uplink transmission.

For example, the CG is a resource configured by the network device for the terminal device. For example, the CG may include a type 1 CG and/or a type 2 CG.

For example, for the type 1 CG, the network device may directly provide a configured uplink grant (for example, the configured uplink grant may be a periodic resource) for the terminal device by using RRC signaling.

For example, for the type 1 CG, the network device may indicate, to the terminal device by using RRC signaling, any one or more of the following items related to the CG: a time reference frame (*timeReferenceSFN*), a time domain offset (*timeDomainOffset*), a periodicity (*periodicity*), and time domain resource allocation (*timeDomainAllocation*). For example, the *timeDomainAllocation* may indicate any one or more of a start symbol S, a length L, and a PUSCH mapping type (*PUSCH mapping type*). For example, S is a start symbol. For example, L is a quantity of symbols occupied by an uplink resource.

For example, for the type 2 CG, the network device may configure a periodicity of the CG for the terminal device by using RRC signaling, and then activate the configured uplink grant by using a PDCCH scrambled by using a CS-RNTI.

For example, the network device may indicate the periodicity (*periodicity*) of the CG to the terminal device by using RRC signaling.

For example, the network device activates the type 2 CG by using the DCI, and the terminal device may determine an $SFN_{start\ time}$, a $slot_{start\ time}$, a $symbol_{start\ time}$, S, and L. For example, the $SFN_{start\ time}$, the $slot_{start\ time}$, and the $symbol_{start\ time}$ are respectively an *SFN*, a *slot*, and a *symbol* (or a *start SFN*, a *start slot*, and a *start symbol*) of a first transmission opportunity of a PUSCH for which the configured uplink grant is initialized or re-initialized.

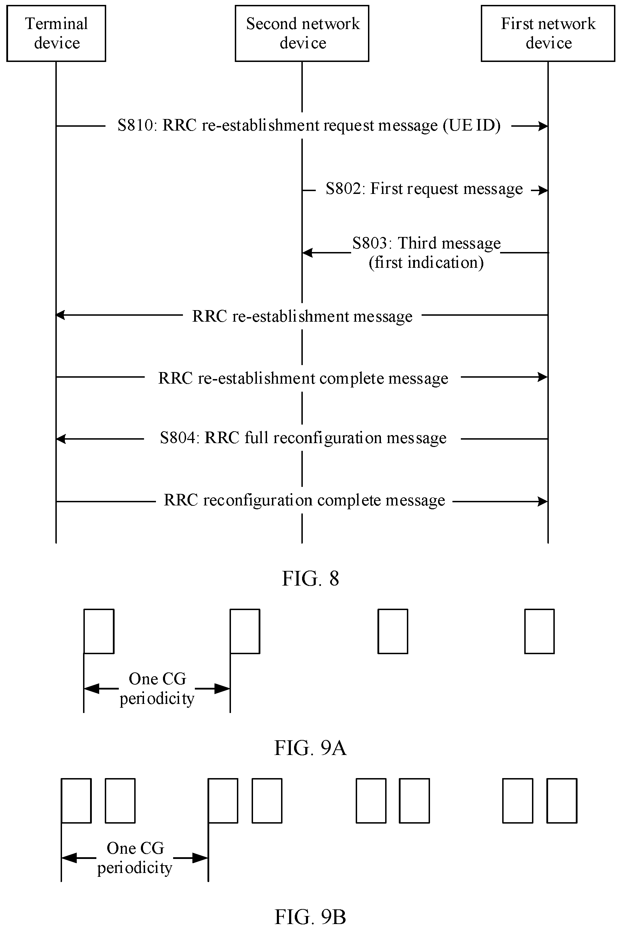

Optionally, the CG resource is periodic, and is appropriate for a periodic service. In this way, the network device does not need to schedule an uplink resource for the terminal device by using the DCI each time. For descriptions of the CG, refer to FIG. 9A and FIG. 9B.

For example, the CG may include/be replaced with a CG-SDT (Configured Grant-based SDT).

(4) CG Occasion (CG occasion)

For example, the CG occasion may be a resource unit. For example, the resource unit may include a resource represented in time domain and frequency domain.

For example, the CG occasion may be a PUSCH resource. For example, the CG occasion may be a configured uplink grant.

For example, one CG occasion may be one PUSCH resource. For example, one CG occasion may be one configured uplink grant.

For example, the CG occasion may be used by the terminal device to send uplink information. For example, the uplink information may include uplink data and/or uplink signaling. For example, the uplink signaling may include at least one of the following: signaling at a physical layer, control information (for example, a MAC CE) at a medium access control (medium access control, MAC) layer, control information (for example, a control PDU) at an RLC layer, control information (for example, a control PDU) at a PDCP layer, control information (for example, a control PDU) at an SDAP layer, signaling at an RRC layer, and signaling at a NAS layer.

(5) Formula for calculating the CG occasion

For example, for the type 1 CG, an N[th] CG occasion is located (or appears) in a symbol (or an SFN, a slot, or a symbol) calculated according to the following formula:

[(SFN×*numberOfSlotsPerFrame*×*numberOfSymbolsPerSlot*) +(slot number in the frame×*numberOfSymbolsPerSlot*)+symbol number in the slot]= (*timeReferenceSFN*×*numberOfSlotsPerFrame*×*numberOfSymbolsPerSlot* +*timeDomainOffset*×*numberOfSymbolsPerSlot*+S+N×*periodicity*) modulo(1024×*numberOfSlotsPerFrame*×*numberOfSymbolsPerSlot*) Formula (1-1)

For example, N≥0.

For example, the *numberOfSlotsPerFrame* indicates a quantity of slots included in one frame.

For example, the *numberOfSymbolsPerSlot* indicates a quantity of symbols included in one slot.

For example, the slot number in the frame indicates an index of a slot, or an index of a slot in a frame (or a frame corresponding to an SFN).

For example, in embodiments of this application, the index may include/be replaced with a serial number or a number.

For example, the symbol number in the slot indicates an index of a symbol or an index of a symbol in a slot (or a slot corresponding to the slot number in the frame).

For example, when subcarrier spacings (subcarrier spacings, SCSs) are different, value ranges of the slot number in the frame are also different. For example, when the *numberOfSymbolsPerSlot* is different, value ranges of the symbol number in the slot are also different. Details are shown in Table 4. For example, a symbol 10 may correspond to a symbol A, a symbol 11 may correspond to a symbol B, a symbol 12 may correspond to a symbol C, and a symbol 13 may correspond to a symbol D.

Table 4

| $\mu$ | $\Delta f = 2^{\mu} \cdot 15$ | $N_{symb}^{slot}$ | $N_{slot}^{frame,\mu}$ | Value range of slot number in the frame | Value range of symbol number in the slot |
|---|---|---|---|---|---|
| 0 | 15 | 14 | 10 | 0 to 9 | 0 to 13 |
| 1 | 30 | 14 | 20 | 0 to 19 | 0 to 13 |
| 2 | 60 | 14 | 40 | 0 to 39 | 0 to 13 |
| | | 12 | 40 | 0 to 39 | 0 to 11 |
| 3 | 120 | 14 | 80 | 0 to 79 | 0 to 13 |
| 4 | 240 | 14 | 160 | 0 to 159 | 0 to 13 |
| 5 | 480 | 14 | 320 | 0 to 319 | 0 to 13 |
| 6 | 960 | 14 | 640 | 0 to 639 | 0 to 13 |

For example, the *timeReferenceSFN* indicates an SFN used to determine an offset of a resource in time domain. For example, the *timeReferenceSFN* may be 0 or 512.

For example, the *timeDomainOffset* indicates an offset of a resource with respect to SFN=*timeReferenceSFN* in time domain. For example, a unit of the *timeDomainOffset* is a slot.

For example, S indicates an index of the start symbol.

For example, the *periodicity* indicates the periodicity of the CG. For example, a unit of the *periodicity* is a symbol.

For example, for the type 2 CG, an N[th] CG occasion is located (or appears) in a symbol (or an SFN, a slot, or a symbol) calculated according to the following formula:

[(SFN×*numberOfSlotsPerFrame*×*numberOfSymbolsPerSlot*) +(slot number in the frame×*numberOfSymbolsPerSlot*)+symbol number in the slot]= [($SFN_{start\ time}$×*numberOfSlotsPerFrame*×*numberOfSymbolsPerSlot* +$slot_{start\ time}$×*numberOfSymbolsPerSlot*+$symbol_{start\ time}$)+N×*periodicity*] modulo (1024×*numberOfSlotsPerFrame*×*numberOfSymbolsPerSlot*) Formula (1-2)

For example, N≥0.

For example, the *numberOfSlotsPerFrame* indicates a quantity of slots included in one frame.

For example, the *numberOfSymbolsPerSlot* indicates a quantity of symbols included in one slot.

For example, the slot number in the frame indicates an index of a slot, or an index of a slot in a frame (or a frame corresponding to an SFN).

For example, the symbol number in the slot indicates an index of a symbol or an index of a symbol in a slot (or a slot corresponding to the slot number in the frame).

For example, the $SFN_{start\ time}$ indicates a start SFN, or an SFN (or a start SFN) of a first transmission opportunity of a PUSCH for which a configured uplink grant is initialized or re-initialized.

For example, the $slot_{start\ time}$ indicates a start slot, or a slot and a symbol (or a start slot) of the first transmission opportunity of the PUSCH for which the configured uplink grant is initialized or re-initialized.

For example, the $symbol_{start\ time}$ indicates a start symbol, or a symbol (or a start symbol) of the first transmission opportunity of the PUSCH for which the configured uplink grant is initialized or re-initialized.

For example, the *periodicity* indicates the periodicity of the CG. For example, a unit of the *periodicity* is a symbol.

It should be noted that the foregoing formula calculation may be performed by the network device, or may be performed by the terminal device, or may be performed by both the network device and the terminal device. For example, a position of the CG occasion (or CG occasion) may be calculated by a MAC entity of the network device, or may be calculated by a MAC entity of the terminal device. It should be understood that this is not limited in embodiments of this application.

For example, different subcarrier spacings SCSs may support different CG periodicities. For example, Table 5 shows CG periodicities respectively corresponding to five subcarrier spacings.

Table 5 CG periodicities respectively corresponding to different subcarrier spacings

| Subcarrier spacing (kHz) | CG periodicity (symbol) |
|---|---|
| 15 | 2, 7, or (1 to 640)×14 |
| 30 | 2, 7, or (1 to 1280)×14 |
| 60 (normal CP length) | 2, 7, or (1 to 2560)×14 |
| 60 (extended CP length) | 2, 6, or (1 to 2560)×12 |
| 120 | 2, 7, or (1 to 5120)×14 |

For example, S and L configured by the network device ensure that a resource of one PUSCH does not cross a slot (slot). For example, a sum of S and L does not exceed 14 or 12.

FIG. 9A and FIG. 9B are diagrams of a CG according to an embodiment of this application. For example, one CG may be shown in FIG. 9A, and one CG periodicity includes one CG occasion. For example, one block is one CG occasion. For example, one CG may be shown in FIG. 9B, and one CG periodicity includes a plurality of CG occasions.

For example, if the CG periodicity can be exactly divided by a hyper frame periodicity (or if a hyper frame periodicity can exactly divide the CG periodicity), for example, the CG periodicity in Table 5, a CG occasion (or a first CG occasion in each CG periodicity) that can be obtained through calculation by using Formula (1-1) or (1-2) is periodic. However, if the CG periodicity cannot be exactly divided by a hyper frame periodicity (or if a hyper frame periodicity cannot exactly divide the CG periodicity), for example, the CG periodicity may be any one of the following: 61,440 ms (or 6 hyper frames), 122,880 ms (or 12 hyper frames), 307,200 ms (or 30 hyper frames), 604,160 ms (or 59 hyper frames), 1,208,320 ms (or 118 hyper frames), 1,802,240 ms (or 176 hyper frames), or 3,604,480 ms (or 352 hyper frames), the CG occasion (or the first CG occasion in each CG periodicity) obtained through calculation by using Formula (1-1) or (1-2) is no longer periodic (or the CG occasion (or the first CG occasion in each CG periodicity) obtained through calculation by using Formula (1-1) or (1-2) is no longer periodic in a case of a cross-hyper-frame periodicity). This may cause a mismatch between a CG resource and a service, and may increase a transmission delay of the service and power consumption of the terminal device, thereby affecting user experience. When the CG periodicity cannot be exactly divided by a hyper frame periodicity, how to determine the CG occasion to enable the CG resource to match the service, or enable the CG occasion (or the first CG occasion in each CG periodicity) obtained through calculation to be periodic.

It should be noted that, in this application, the H-SFN may also include/be replaced with an HFN.

In this application, the "indicate" may include: directly indicate, indirectly indicate, explicitly indicate, or implicitly indicate.

In this application, "include" may include: directly include, indirectly include, explicitly include, or implicitly include.

It should be noted that different embodiments of this application or a part of steps (for example, any one or more steps) in different embodiments may be combined with each other to form a new embodiment. It should be noted that, a part of steps or any one or more steps in different embodiments may include an optional step in an embodiment, may include a

mandatory step in an embodiment, or may include an optional step and a mandatory step in an embodiment. This is not limited in this application.

It should be noted that, unless otherwise specified or there is a logic conflict, terms and/or descriptions in different embodiments are consistent and may be mutually referenced.

It should be noted that a sequence of the steps in embodiments of this application is not limited in this application.

It should be noted that a determining sequence of different conditions in embodiments of this application is not limited in this application.

It should be noted that "after" and "when" in this application do not strictly limit a time point.

It should be noted that nouns, terms, and the like in this application are merely examples, and other names may be used. This is not limited in this application.

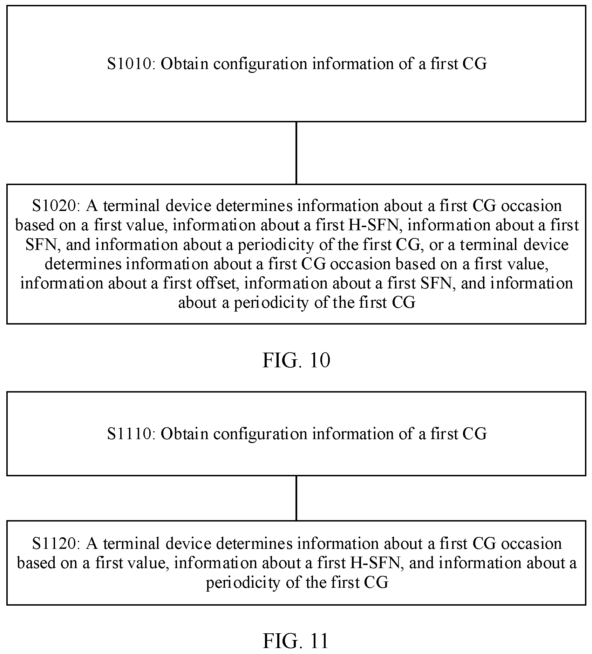

The following describes in detail a communication method 1000 provided in this application with reference to a specific embodiment. As shown in FIG. 10, FIG. 10 is a schematic flowchart of a communication method according to an embodiment of this application. The method includes at least the following steps.

S1010: A terminal device obtains configuration information of a first CG.

For example, that the terminal device obtains the configuration information of the first CG may include/be replaced with: The terminal device receives the configuration information of the first CG.

For example, "obtaining" may be understood as/replaced with determining, receiving, decoding, or parsing out.

For example, correspondingly, a network device sends the configuration information of the first CG to the terminal device.

For example, the configuration information of the first CG may include information about a periodicity of the first CG.

Optionally, the periodicity of the first CG or the first CG is associated with an extended periodicity or an SDT-related extended periodicity.

Optionally, the periodicity of the first CG may not be exactly divided by a hyper frame periodicity or one hyper frame periodicity.

For example, the first CG may include/be replaced with a first CG-SDT.

For example, the hyper frame periodicity or the one hyper frame periodicity is equal to a first coefficient of hyper frames, or a first coefficient×10,240 ms. For example, the first coefficient is a quantity of hyper frames included in the hyper frame periodicity or the one hyper frame periodicity. For example, the first coefficient may be 1024 or another value. This is not limited.

For example, the periodicity of the first CG includes/is any one or more of the following: 61,440 ms (or 6 hyper frames), 122,880 ms (or 12 hyper frames), 307,200 ms (or 30 hyper frames), 604,160 ms (or 59 hyper frames), 1,208,320 ms (or 118 hyper frames), 1,802,240 ms (or 176 hyper frames), or 3,604,480 ms (or 352 hyper frames).

Optionally, the first CG is associated with an SDT service.

Optionally, in addition to information about the periodicity of the first CG, the configuration information of the first CG may further include other information.

Optionally, for different CG types, for example, a type 1 CG or a type 2 CG, the configuration information of the first CG may be different or may be the same. This is not limited.

For example, for the type 1 CG, the configuration information of the first CG may include but is not limited to any one or more of a time reference frame (*timeReferenceSFN*), a time domain offset (*timeDomainOffset*), a periodicity (*periodicity*), time domain resource allocation (*timeDomainAllocation*), a start symbol S, and a length L. For example, the *timeDomainAllocation* may indicate any one or more of the start symbol S, the length L, and a PUSCH mapping type (*PUSCH mapping type*). For example, S is a start symbol. For example, L is a quantity of symbols occupied by an uplink resource.

For example, for the type 2 CG, the configuration information of the first CG may include but is not limited to any one or more of an $SFN_{start\ time}$, a $slot_{start\ time}$, a $symbol_{start\ time}$, a *periodicity*, and a length L.

For example, for related descriptions of the configuration information of the first CG, refer to the foregoing descriptions. For brevity, details are not described herein again. In addition, the configuration information of the first CG may alternatively be different from that described above. It should be understood that this is not limited in this application.

S1020: The terminal device determines information about a first CG occasion based on a first value, information about a first H-SFN, information about a first SFN, and the information about the periodicity of the first CG. Alternatively, the terminal device determines information about a first CG occasion based on a first value, information about a first offset, information about a first SFN, and the information about the periodicity of the first CG.

Optionally, in S1030, the network device determines the information about the first CG occasion based on the first value, the information about the first H-SFN, the information about the first SFN, and the information about the periodicity of the first CG. Alternatively, the network device determines the information about the first CG occasion based on the first value, the information about the first offset, the information about the first SFN, and the information about the periodicity of the first CG.

For example, the first value is associated with the hyper frame periodicity or the one hyper frame periodicity.

For example, First value=First coefficient×Second coefficient×numberOfSlotsPerFrame×numberOfSymbolsPerSlot.

For example, the first value may include/be/be replaced with: First coefficient×Second coefficient×numberOfSlotsPerFrame×numberOfSymbolsPerSlot.

For example, the first value is a quantity of symbols included in the hyper frame periodicity or the one hyper frame periodicity.

For example, the first coefficient is 1024 or a quantity of hyper frames included in the one hyper frame periodicity.

For example, the second coefficient is 1024 or a quantity of frames included in one hyper frame.

For example, the numberOfSlotsPerFrame is a quantity of slots included in one frame.

For example, the numberOfSymbolsPerSlot is a quantity of symbols included in one slot.

For example, the first offset is associated with a hyper frame whose H-SFN is equal to 0 and/or the first SFN.

For example, the first offset may be an offset with respect to a frame whose SFN is equal to the first SFN, an offset with respect to a boundary/position of a frame whose SFN is equal to the first SFN, an offset of a resource with respect to SFN=first SFN in time domain, an offset of a resource with respect to a frame (or a boundary/position of the frame) whose SFN is equal to the first SFN in time domain, an offset with respect to a frame whose SFN is equal to the first SFN in a hyper frame whose H-SFN is equal to 0, an offset with respect to a boundary/position of a frame whose SFN is equal to the first SFN in a hyper frame whose H-SFN is equal to 0, an offset of a resource with respect to SFN=first SFN in a hyper frame whose H-SFN is equal to 0 in time domain, or an offset of a resource with respect to a frame (or a boundary/position of the frame) whose SFN is equal to the first SFN in a hyper frame whose H-SFN is equal to 0 in time domain.

For example, the offset may include/be replaced with a time domain offset.

For example, the boundary/position of the frame may include/be replaced with a first symbol/subframe/slot in the frame, a boundary/position of the first symbol/subframe/slot in the frame, a first symbol in the first slot/subframe in the frame, or a boundary of the first symbol in the first slot/subframe in the frame.

For example, the boundary may include/be replaced with a start boundary.

For example, the position may include/be replaced with a start position, a time domain position, or a time domain start position.

Optionally, a value range of the first H-SFN is 0 to 1023. Optionally, a value of the first H-SFN is one of 0 to 1023. For example, the first H-SFN is a reference H-SFN. Optionally, the first H-SFN is 0 or 512.

Optionally, the first SFN is 0 or 512. For example, the first SFN is a reference SFN or a timeReferenceSFN.

Optionally, determining may include/be replaced with determining in sequence.

For example, in sequence may include/be replaced with sequentially.

For example, in sequence may be understood as in ascending order of N.

Optionally, the information about the first CG occasion includes one or more of the following information about the first CG occasion: a hyper frame, a frame, a slot, a symbol, or a subframe.

Optionally, in a possible implementation, the information about the first CG occasion includes information about a hyper frame, a frame, a slot, and a symbol of the first CG occasion.

For example, the information about the hyper frame, the frame, the slot, and the symbol of the first CG occasion may include/be replaced with information about a hyper frame, a frame, a slot, and a symbol in which the first CG occasion is located, information about a start hyper frame, a start frame, a start slot, and a start symbol of the first CG occasion, information about a hyper frame, a frame, a slot, and a symbol of a start position of the first CG occasion, or information about a hyper frame, a frame, a slot, and a symbol in which a start position of the first CG occasion is located.

Optionally, in a first possible implementation, the configuration information of the first CG may further include the information about the first H-SFN and the information about the first SFN.

Optionally, in the first possible implementation, the configuration information of the first CG does not include the information about the first offset.

Optionally, in the first possible implementation, the configuration information of the first CG may further include information about a second offset.

Optionally, the second offset is associated with the first SFN.

For example, the second offset may be an offset with respect to a frame whose SFN is equal to the first SFN, or an offset with respect to a boundary/position of a frame whose SFN is equal to the first SFN.

Optionally, the second offset is associated with the first H-SFN and/or the first SFN.

For example, the second offset may be an offset with respect to a frame whose SFN is equal to the first SFN in a hyper frame whose H-SFN is equal to the first H-SFN, an offset with respect to a boundary/position of a frame whose SFN is equal to the first SFN in a hyper frame whose H-SFN is equal to the first H-SFN, an offset of a resource with respect to SFN=first SFN in a hyper frame whose H-SFN is equal to the first H-SFN in time domain, an offset of a resource with respect to a frame (or a boundary/position of the frame) whose SFN is equal to the first SFN in a hyper frame whose H-SFN is equal to the first H-SFN in time domain, an offset with respect to a frame whose SFN is equal to the first SFN, an offset with respect

to a boundary/position of a frame whose SFN is equal to the first SFN, an offset of a resource with respect to SFN=first SFN in time domain, or an offset of a resource with respect to a frame (or a boundary/position of the frame) whose SFN is equal to the first SFN in time domain.

Optionally, in a second possible implementation, the configuration information of the first CG may further include the information about the first offset and the information about the first SFN.

Optionally, in the second possible implementation, the configuration information of the first CG does not include the information about the first H-SFN.

Optionally, in a third possible implementation, the configuration information of the first CG may further include the information about the first SFN. In addition, the terminal device determines the information about the first H-SFN based on the information about the first SFN and/or first time information.

For example, the first time information includes information about time at which the terminal device obtains the configuration information of the first CG.

Optionally, in the third possible implementation, the configuration information of the first CG does not include the information about the first offset and the information about the first H-SFN.

Optionally, in the third possible implementation, the configuration information of the first CG may further include the information about the second offset.

For example, that the terminal device determines the information about the first H-SFN based on the information about the first SFN and/or the first time information may include any one or more of the following:

If the information about the first SFN indicates 512, and the time at which the terminal device obtains the configuration information of the first CG is in a first half of one hyper frame (for example, a second hyper frame), the terminal device determines that the first H-SFN is an H-SFN 1.

If the time at which the terminal device obtains the configuration information of the first CG is in a second half of one hyper frame (for example, a second hyper frame), the terminal device determines that the first H-SFN is an H-SFN 2.

Alternatively, if the information about the first SFN indicates 0, the terminal device determines that the first H-SFN is an H-SFN 2.

For example, the H-SFN 1 is an H-SFN of a hyper frame (for example, a first hyper frame) previous to a hyper frame (for example, the second hyper frame) in which the terminal device obtains the configuration information of the first CG, or an H-SFN of a hyper frame (for example, the first hyper frame) in which the network device sends the configuration information of the first CG.

For example, the H-SFN 2 is an H-SFN of a hyper frame (for example, the second hyper frame) in which the terminal device obtains the configuration information of the first CG, or an H-SFN of a hyper frame (for example, the first hyper frame) in which the network device sends the configuration information of the first CG.

Optionally, the first CG occasion may be/include: an $N^{th}$ CG occasion, an $(N+1)^{th}$ CG occasion, a CG occasion in an $N^{th}$ CG periodicity, a CG occasion in an $(N+1)^{th}$ CG periodicity, a first CG occasion in an $N^{th}$ CG periodicity, or a first CG occasion in an $(N+1)^{th}$ CG periodicity.

For example, $N \geq 0$, $N \geq 1$, or $N>1$. For example, N is an integer.

Optionally, the first CG occasion may be/include a $K^{th}$ CG occasion in the $N^{th}$ CG periodicity or a $K^{th}$ CG occasion in the $(N+1)^{th}$ CG periodicity.

For example, $K \geq 1$. For example, K is an integer.

Optionally, determining the information about the first CG occasion based on the first value may include: determining the information about the first CG occasion based on mod (mod) the first value.

Optionally, determining the information about the first CG occasion based on the first value, the information about the first H-SFN, the information about the first SFN, and the information about the periodicity of the first CG may include: determining the information about the first CG occasion based on the first value, the information about the first H-SFN, the information about the first SFN, the information about the periodicity of the first CG, and the information about the second offset.

For example, if the first CG is a type 1 CG, the first CG occasion, the $N^{th}$ CG occasion, the $(N+1)^{th}$ CG occasion, the CG occasion in the $N^{th}$ CG periodicity (or the first CG occasion in the $N^{th}$ CG periodicity), or the CG occasion in the $(N+1)^{th}$ CG periodicity (or the first CG occasion in the $(N+1)^{th}$ CG periodicity) is located in (or appears in) a symbol (or an H-SFN, an SFN, a slot, or a symbol) calculated according to the following formula (2-1).

$$[((\text{H-SFN} \times 1024 + \text{SFN}) \times \textit{numberOfSlotsPerFrame} \times \textit{numberOfSymbolsPerSlot}) + (\text{slot number in the } \textit{frame} \times \textit{numberOfSymbolsPerSlot}) + \text{symbol number in the slot}] = ((\textit{timeReferenceH-SFN} \times 1024 + \textit{timeReferenceSFN}) \times \textit{numberOfSlotsPerFrame} \times \textit{numberOfSymbolsPerSlot} + \textit{timeDomainOffset} \times \textit{numberOfSymbolsPerSlot} + S + N \times \textit{periodicity}) \ \textit{modulo}(1024 \times 1024 \times \textit{numberOfSlotsPerFrame} \times \textit{numberOfSymbolsPerSlot}) \quad \text{Formula (2-1)}$$

For example, the H-SFN is a hyper frame number of a hyper frame in which the first CG occasion is located.

For example, located may include/be replaced with of.

For example, the SFN is a frame number of a frame in which the first CG occasion is located.

For example, slot number in the frame is an index of a slot, an index of a slot in a frame (or a frame corresponding to the SFN), an index of a slot of the first CG occasion, or an index of a slot of the first CG occasion in a frame (for example, a frame indicated by the SFN).

For example, the symbol number in the slot is an index of a symbol, an index of a symbol in a slot (or a slot corresponding to the slot number in the frame), an index of a symbol of the first CG occasion, or an index of a symbol in which the first CG occasion is located in a slot (for example, a frame indicated by the slot number in the frame).

For example, the timeReferenceH-SFN is the first H-SFN.

For example, the timeReferenceSFN is the first SFN.

For example, the timeDomainOffset is the second offset. For example, the timeDomainOffset in Formula (2-1) is the second offset. For example, a unit of the timeDomainOffset is a slot. It should be noted that if a unit of the information that is about the second offset and that is included in the configuration information of the first CG is not a slot, the information about the second offset needs to be converted into a slot for formula calculation.

For example, S is an index of the start symbol.

For example, the periodicity is the periodicity of the first CG. For example, a unit of the periodicity is a symbol. It should be noted that if a unit of the information that is about the periodicity of the first CG and that is included in the configuration information of the first CG is not a symbol, the information about the periodicity of the first CG needs to be converted into a symbol for formula calculation.

For example, if the first CG is a type 2 CG, the first CG occasion, the $N^{th}$ CG occasion, the $(N+1)^{th}$ CG occasion, the CG occasion in the $N^{th}$ CG periodicity (or the first CG occasion in the $N^{th}$ CG periodicity), or the CG occasion in the $(N+1)^{th}$ CG periodicity (or the first CG occasion in the $(N+1)^{th}$ CG periodicity) is located in (or appears in) a symbol (or an H-SFN, an SFN, a slot, or a symbol) calculated according to the following formula (2-2).

$$[((\text{H-SFN}\times 1024+\text{SFN})\times \mathit{numberOfSlotsPerFrame}\times \mathit{numberOfSymbolsPerSlot}) +(\text{slot number in the } \mathit{frame}\times \mathit{numberOfSymbolsPerSlot})+\text{symbol number in the slot}]= [(((\mathit{timeReferenceH\text{-}SFN}\times 1024 +\text{SFN}_{\text{start time}})\times \mathit{numberOfSlotsPerFrame}\times \mathit{numberOfSymbolsPerSlot} +\text{slot}_{\text{start time}}\times \mathit{numberOfSymbolsPerSlot}+\mathit{symbol}_{\text{start time}})+\text{N}\times \mathit{periodicity}]\ \mathit{modulo}(1024\times 1024\times \mathit{numberOfSlotsPerFrame}\times \mathit{numberOfSymbolsPerSlot}) \quad \text{Formula (2-2)}$$

For example, the $SFN_{start\ time}$ indicates a start SFN.

For example, the $slot_{start\ time}$ indicates a start slot.

For example, the $symbol_{start\ time}$ indicates a start symbol.

For example, if the first CG is a type 1 CG, the first CG occasion, the $N^{th}$ CG occasion, the $(N+1)^{th}$ CG occasion, the CG occasion in the $N^{th}$ CG periodicity (or the first CG occasion in the $N^{th}$ CG periodicity), or the CG occasion in the $(N+1)^{th}$ CG periodicity (or the first CG occasion in the $(N+1)^{th}$ CG periodicity) is located in (or appears in) a symbol (or an H-SFN, an SFN, a slot, or a symbol) calculated according to the following formula (3-1).

$$[((\text{H-SFN}\times 1024+\text{SFN})\times \mathit{numberOfSlotsPerFrame}\times \mathit{numberOfSymbolsPerSlot}) +(\text{slot number in the } \mathit{frame}\times \mathit{numberOfSymbolsPerSlot})+\text{symbol number in the slot}]= (\mathit{timeReferenceSFN}\times \mathit{numberOfSlotsPerFrame}\times \mathit{numberOfSymbolsPerSlot} +\mathit{timeDomainOffset}\times \mathit{numberOfSymbolsPerSlot}+\text{S} +\text{N}\times \mathit{periodicity})\ \mathit{modulo}(1024\times 1024\times \mathit{numberOfSlotsPerFrame}\times \mathit{numberOfSymbolsPerSlot}) \quad \text{Formula (3-1)}$$

For example, the timeDomainOffset is the first offset. For example, the timeDomainOffset in Formula (2-1) is the first offset. For example, a unit of the timeDomainOffset is a slot. It should be noted that if a unit of the information that is about the first offset and that is included in the configuration information of the first CG is not a slot, the information about the first offset needs to be converted into a slot for formula calculation.

For example, if the first CG is a type 2 CG, the first CG occasion, the $N^{th}$ CG occasion, the $(N+1)^{th}$ CG occasion, the CG occasion in the $N^{th}$ CG periodicity (or the first CG occasion in the $N^{th}$ CG periodicity), or the CG occasion in the $(N+1)^{th}$ CG periodicity (or the first CG occasion in the $(N+1)^{th}$ CG periodicity) is located in (or appears in) a symbol (or an H-SFN, an SFN, a slot, or a symbol) calculated according to the following formula (3-2).

$$[((\text{H-SFN}\times 1024+\text{SFN})\times \mathit{numberOfSlotsPerFrame}\times \mathit{numberOfSymbolsPerSlot}) +(\text{slot number in the } \mathit{frame}\times \mathit{numberOfSymbolsPerSlot})+\text{symbol number in the slot}]= [(\text{SFN}_{\text{start time}}\times \mathit{numberOfSlotsPerFrame}\times \mathit{numberOfSymbolsPerSlot} +\text{slot}_{\text{start time}} \times \mathit{numberOfSymbolsPerSlot}+\mathit{symbol}_{\text{start time}}) +\text{N}\times \mathit{periodicity}]\ \mathit{modulo}(1024\times 1024\times \mathit{numberOfSlotsPerFrame}\times \mathit{numberOfSymbolsPerSlot}) \quad \text{Formula (3-2)}$$

Optionally, this application may further include: If the periodicity of the first CG or the first CG is associated with the extended periodicity or the SDT-related extended periodicity, the terminal device and/or the network device perform/performs step 1020 and/or step 1030, or determine/determines the information about the first CG occasion based on step 1020 and/or step 1030.

Optionally, this application may further include: If the periodicity of the first CG or the first CG is not associated with the extended periodicity or the SDT-related extended periodicity, the terminal device and/or the network device determine/determines the information about the first CG occasion according to the conventional technology (or Formula 1-1 or Formula 1-1).

It should be noted that, in this application, the H-SFN may be replaced with a first parameter. For example, the first parameter is a parameter related to a hyper frame. For example, the first parameter may be a first counter. For example, a range of the first parameter may be 0 to (the first coefficient-1), or another range. The first parameter may not be the H-SFN. For example, when the SFN is flipped, the first parameter changes. For example, First parameter of a next hyper frame=First parameter of a previous hyper frame+1. For example, First parameter of a next hyper frame=(First parameter of a previous hyper frame+1) mod First coefficient. For example, if the first parameter of the previous hyper frame is not equal to (the first coefficient-1) or is less than (the first coefficient-1), the first parameter of the next hyper frame is equal to the first parameter of the previous hyper frame+1. For example, if the first parameter of the previous hyper frame is equal to (the first coefficient-1), the first parameter of the next hyper frame is equal to 0. For example, that the SFN is flipped may be understood as that the SFN changes from 1023 to 0. For example, the H-SFN 1 may be L+0 or L. For example, the H-SFN 2 may be L+1. For example, L may be configured by the network device for the terminal device, or preconfigured, or predefined in a protocol. This is not limited in this application.

According to the technical solution provided in this application, when a CG periodicity cannot be exactly divided by one hyper frame periodicity (or one hyper frame periodicity cannot exactly divide a CG periodicity), a CG occasion (or a first CG occasion in each CG periodicity) obtained through calculation is periodic (or periodic even in a case of a cross-hyper-frame periodicity), so that a CG resource can match a service. This helps reduce a service transmission delay, reduce power consumption of the terminal device, and improve user experience.

The following describes in detail another communication method 1100 provided in this application with reference to a specific embodiment. As shown in FIG. 11, FIG. 11 is a schematic flowchart of a communication method according to an embodiment of this application. The method includes at least the following steps.

S1110: A terminal device obtains configuration information of a first CG.

It should be noted that, for content in the embodiment shown in FIG. 11, refer to the content in the embodiment shown in FIG. 10. Details are not described herein again.

S1120: The terminal device determines information about a first CG occasion based on a first value, information about a first H-SFN, and information about a periodicity of the first CG.

Optionally, in S1130, a network device determines the information about the first CG occasion based on the first value, the information about the first H-SFN, and the information about the periodicity of the first CG.

Optionally, in a possible implementation, the configuration information of the first CG may further include information about a first SFN. In addition, the terminal device determines the information about the first H-SFN based on the information about the first SFN and/or first time information.

Optionally, the configuration information of the first CG does not include the information about the first H-SFN.

Optionally, the configuration information of the first CG may further include information about a third offset.

Optionally, the third offset is associated with the first H-SFN.

For example, the third offset may be an offset with respect to a hyper frame whose H-SFN is equal to the first H-SFN, an offset with respect to a boundary/position of a hyper frame whose H-SFN is equal to the first H-SFN, an offset of a resource with respect to H-SFN=0 in time domain, or an offset of a resource with respect to a hyper frame (or a boundary/position of a hyper frame) whose H-SFN is equal to 0 in time domain.

Optionally, determining the information about the first CG occasion based on the first value may include: determining the information about the first CG occasion based on mod (mod) the first value.

Optionally, determining the information about the first CG occasion based on the first value, the information about the first H-SFN, and the information about the periodicity of the first CG may include: determining the information about the first CG occasion based on the first value, the information about the first H-SFN, the information about the periodicity of the first CG, and the information about the third offset.

For example, if the first CG is a type 1 CG, the first CG occasion, an $N^{th}$ CG occasion, an $(N+1)^{th}$ CG occasion, a CG occasion in an $N^{th}$ CG periodicity (or a first CG occasion in the $N^{th}$ CG periodicity), or a CG occasion in an $(N+1)^{th}$ CG periodicity (or a first CG occasion in the $(N+1)^{th}$ CG periodicity) is located in (or appears in) a symbol (or an H-SFN, an SFN, a slot, or a symbol) calculated according to the following formula (4-1).

$$[((\text{H-SFN}\times 1024+\text{SFN})\times \mathit{numberOfSlotsPerFrame}\times \mathit{numberOfSymbolsPerSlot})+(\text{slot number in the frame}\times \mathit{numberOfSymbolsPerSlot})+\text{symbol number in the slot}]=(\mathit{timeReferenceH\text{-}SFN}\times 1024\times \mathit{numberOfSlotsPerFrame}\times \mathit{numberOfSymbolsPerSlot}+\mathit{timeDomainOffset}\times \mathit{numberOfSymbolsPerSlot}+S+N\times \mathit{periodicity})\ \text{modulo}(1024\times 1024\times \mathit{numberOfSlotsPerFrame}\times \mathit{numberOfSymbolsPerSlot}) \quad \text{Formula (4-1)}$$

For example, the timeDomainOffset is the third offset. For example, the timeDomainOffset in Formula (4-1) is the third offset. For example, a unit of the timeDomainOffset is a slot. It should be noted that if a unit of the information that is about the third offset and that is included in the configuration information of the first CG is not a slot, the information about the third offset needs to be converted into a slot for formula calculation.

For example, if the first CG is a type 2 CG, the first CG occasion, an $N^{th}$ CG occasion, an $(N+1)^{th}$ CG occasion, a CG occasion in an $N^{th}$ CG periodicity (or a first CG occasion in the $N^{th}$ CG periodicity), or a CG occasion in an $(N+1)^{th}$ CG periodicity (or a first CG occasion in the $(N+1)^{th}$ CG periodicity) is located in (or appears in) a symbol (or an H-SFN, an SFN, a slot, or a symbol) calculated according to the following formula (4-2).

$$[((\text{H-SFN}\times 1024+\text{SFN})\times \mathit{numberOfSlotsPerFrame}\times \mathit{numberOfSymbolsPerSlot})+(\text{slot number in the frame}\times \mathit{numberOfSymbolsPerSlot})+\text{symbol number in the slot}]=[((\mathit{timeReferenceH\text{-}SFN}\times 1024+\text{SFN}_{\text{start time}})\times \mathit{numberOfSlotsPerFrame}\times \mathit{numberOfSymbolsPerSlot}+\text{slot}_{\text{start time}}\times \mathit{numberOfSymbolsPerSlot}+\text{symbol}_{\text{start time}})+N\times \mathit{periodicity}]\ \text{modulo}(1024\times 1024\times \mathit{numberOfSlotsPerFrame}\times \mathit{numberOfSymbolsPerSlot}) \quad \text{Formula (4-2)}$$

Optionally, this application may further include: If the periodicity of the first CG or the first CG is associated with an extended periodicity or an SDT-related extended periodicity, the terminal device and/or the network device perform/performs step 1120 and/or step 1130, or determine/determines the information about the first CG occasion based on step 1120 and/or step 1130.

Optionally, this application may further include: If the periodicity of the first CG or the first CG is not associated with the extended periodicity or the SDT-related extended periodicity, the terminal device and/or the network device determine/determines the information about the first CG occasion according to the conventional technology (or Formula 1-1 or Formula 1-1).

It should be noted that, in this application, the H-SFN may be replaced with a first parameter.

According to the technical solution provided in this application, when a CG periodicity cannot be exactly divided by one hyper frame periodicity (or one hyper frame periodicity cannot exactly divide a CG periodicity), a CG occasion (or a first CG occasion in each CG periodicity) obtained through calculation is periodic (or periodic even in a case of a cross-hyper-frame periodicity), so that a CG resource can match a service. This helps reduce a service transmission delay, reduce power consumption of the terminal device, and improve user experience.

To reduce network complexity and improve flexibility and efficiency of performing a radio resource configuration by a network device while improving efficiency of data transmission between a terminal device and the network device and improving radio resource utilization, this application provides another communication method. The communication method is described below.

The terminal device may send fourth information to the network device, so that the network device may determine whether the terminal device supports an uplink transmit channel switching capability different from that reported in UE capability information. The network device may determine, based on the fourth information, to configure a shorter uplink transmit channel switching period for the terminal device. Implementation of this technical solution helps ensure that the terminal device and the network device have consistent understanding of a switching period, thereby helping avoid a bit error or a packet loss caused by inconsistent understanding. In addition, the fourth information may include a plurality of groups of switching periods for a same band pair, and the network device may determine, based on one of the plurality of groups of switching periods, a switching period for configuring and scheduling uplink transmit switching. This helps improve flexibility of the network device.

S1201: The network device obtains fourth capability information.

The fourth capability information may indicate a radio access capability of the terminal device, and the fourth capability information may include a switching period for uplink transmit channel switching in at least one band pair in a fourth band combination supported by the terminal device. In some scenarios, the fourth capability information may also be referred to as the fourth capability information, fourth radio access capability information, or the like of the terminal device.

For example, the fourth capability information may further include one or more of capabilities of the terminal device, such as a band supported by the terminal device, a band combination supported by the terminal device, a carrier bandwidth, a quantity of multiple-input multiple-output layers, or a modulation order.

In some examples, the network device may receive the fourth capability information from the terminal device. In

some examples, the network device may obtain the fourth capability information from a core network device.

In some examples, the fourth capability information may be one or more of the first capability information, the second capability information, or the third capability information in the foregoing embodiments.

In It may be understood that the fourth capability information may include a sixth band combination supported by the terminal device, and a fourth band combination may be a fallback band combination of the sixth band combination. The fourth band combination may be reported in the fourth capability information, or may not be explicitly reported in the fourth capability information. In other words, the fourth capability information may not include the fourth band combination, but include only the sixth band combination. The network device may determine a capability of the fourth band combination based on the sixth band combination.

For example, the fourth capability information includes the sixth band combination {A, B, C, D}, and does not include the fourth band combination {A, B, C}. Table 6 provides an example of a switching period for uplink transmit switching in a plurality of band pairs in the fallback band combination of the sixth band combination, namely, the fourth band combination.

For example, the fourth capability information may alternatively include the fourth band combination {A, B, C}.

Table 6

| Sequence number | Band pair | Switching period for uplink transmit channel switching (unit: μs) |
|---|---|---|
| 1 | (A, B) | 140 |
| 2 | (A, C) | 140 |
| 3 | (B, C) | 140 |

S1202: The network device sends first configuration information, and correspondingly, the terminal device receives the first configuration information.

The first configuration information may be used to configure uplink transmit channel switching in at least one band pair in the fourth band combination. For ease of description, the at least one band pair is referred to as a first band pair set below. It should be understood that the first band pair set may include one or more band pairs. In some scenarios, uplink transmit channel switching may also be referred to as uplink transmit switching.

For example, the fourth band combination may include a plurality of bands, and the first configuration information may be used to configure uplink transmit channel switching in one or more band pairs including the plurality of bands.

The fourth band combination may be replaced with a fourth band set, and indicates an uplink band related to uplink transmit channel switching.

For example, the fourth band combination may be a band combination {A, B, C}, in other words, the fourth band set related to the uplink transmit channel switching includes a band A, a band B, and a band C. The first configuration information may be used to configure uplink transmit switching in a plurality of band pairs including the foregoing three bands, for example, one or more of uplink transmit switching in the band A and the band B, uplink transmit switching in the band A and the band C, or uplink transmit switching in the band B and the band C.

In some examples, the first configuration information may further indicate a switching period for uplink transmit switching in one or more band pairs included in the fourth band combination.

For example, the first configuration information may indicate an uplink transmit switching period for one or more of the band pair (A, B), the band pair (A, C), or the band pair (B, C) shown in Table 6.

In some examples, the first configuration information may be determined based on the fourth capability information obtained in S1201. In other words, the network device may indicate, based on the fourth capability information, the switching period for uplink switching in the one or more band pairs in the fourth band combination.

In some examples, the first configuration information may be included in an RRC reconfiguration (RRCReconfiguration) message, and/or the first configuration information may be included in an RRC resume (RRCResume) message.

S1203: The terminal device sends the fourth information, and correspondingly, the network device receives the fourth information.

In response to the first configuration information in S1202, the terminal device may send the fourth information to the network device, or the terminal device may send the fourth information to the network device based on the first configuration information.

In some examples, the fourth information indicates a switching period for uplink transmit switching in a third band pair in the fourth band combination supported by the terminal device, the third band pair is included in the first band pair set, and there may be a plurality of third band pairs. In other words, the third band pair is one or more of the one or more band pairs included in the first band pair set.

When there are a plurality of third band pairs, the fourth information may separately indicate switching periods for

uplink transmit switching in the plurality of band pairs.

In some examples, a switching period that is for uplink transmit switching in the third band pair and that is indicated in the fourth information may be less than (shorter than) a switching period that is for uplink transmit switching in a corresponding band pair and that is included in the fourth capability information.

In this case, the terminal device may select a shorter switching period indicated in the fourth information as the switching period for uplink transmit channel switching, and use the switching period to send uplink data. In this way, S1204 may not be performed. In other words, the network device may not send second configuration information to the terminal device.

Because the fourth information indicates that the terminal device can support a stronger uplink transmit switching capability on the third band pair, when the terminal device sends the uplink data by using the capability, no bit error or packet loss caused by inconsistent understanding of the switching period by the terminal device and the network device occurs.

For example, Table 6 in S1201 is used as a comparison, and switching periods for uplink transmit channel switching in the band pair (A, B), the band pair (A, C), and the band pair (B, C) that are indicated in the fourth information may be shown in Table 7.

Table 7

| Sequence number | Band pair | Switching period for uplink transmit channel switching (unit: μs) |
|---|---|---|
| 1 | (A, B) | 35 |
| 2 | (A, C) | 140 |
| 3 | (B, C) | 140 |

It can be learned from a comparison between Table 6 and Table 7 that the switching period for uplink transmit switching in the band pair (A, B) indicated in the fourth information is less than the switching period for uplink transmit switching in the band pair (A, B) included in the fourth capability information.

In some examples, the fourth information may indicate a plurality of groups of switching periods for a same band pair.

For example, the terminal device supports a plurality of groups of switching periods for the band pair (A, B), the band pair (A, C), and the band pair (B, C). In this case, the fourth information may indicate a plurality of switching periods for uplink transmit channel switching in the band pair (A, B), the band pair (A, C), and the band pair (B, C) shown in Table 8.

Table 8

| | Sequence number | Band pair | Switching period for uplink transmit channel switching (unit: μs) |
|---|---|---|---|
| First group of switching periods | 1 | (A, B) | 35 |
| | 2 | (A, C) | 140 |
| | 3 | (B, C) | 140 |
| Second group of switching periods | 1 | (A, B) | 140 |
| | 2 | (A, C) | 35 |
| | 3 | (B, C) | 140 |

The network device may determine, based on one of the plurality of groups of switching periods for the same band pair included in the fourth information, a switching period for configuring and scheduling uplink transmit switching, to help improve flexibility of the network device.

The two groups of switching periods for uplink transmit channel switching in Table 8 are used as an example. The network device may configure and schedule the terminal device based on the first group of switching periods or the second group of switching periods.

In some examples, when the terminal device supports a plurality of groups of switching periods, the network device may determine a switching period for a band pair based on a priority of a band in the fourth band combination.

For example, the network device may determine a shorter switching period for a band pair with a higher priority. Priorities of different bands in a band combination may be determined based on a sequence of the different bands in the band combination. For example, a band with a higher priority is ranked in a higher position, and a band with a lower priority

is ranked in a lower position. In other words, a band with a highest priority in the band combination is ranked in a first position.

For example, the first configuration information may indicate a band included in the fourth band combination, and a plurality of bands in the fourth band combination are ranked in descending order of priorities. A band ranked in a first position has a highest priority, a band ranked in a second position has a second highest priority, and so on.

The band combination {A, B, C} is used as an example. In the band combination, a band A has a highest priority, a band B has a second highest priority, and a band C has a lowest priority. Refer to Table 8. The switching period for the band pair (A, B) in the first group of switching periods is shorter than the switching period for the band pair (A, B) in the second group of switching periods. In this case, the fourth information may indicate the first group of switching periods in Table 8.

A switching period for uplink transmit switching is configured and scheduled based on priorities of different bands in a band combination. This helps improve communication resource utilization and reduce a switching period for a band pair with a higher priority, thereby improving system performance.

In some examples, when the terminal device supports a plurality of groups of switching periods, the terminal device may select, based on priorities of bands in a band combination, a switching period for a band pair that needs to be reported. For example, the terminal device may report a group of shorter switching periods for a band pair with a higher priority.

In other words, when the terminal device supports a plurality of groups of switching periods, the fourth information may indicate one group of switching periods in a plurality of groups of switching periods for a same band pair, and the one group of switching periods may be determined based on priorities of bands in the band combination.

The fourth information includes a switching period selected by the terminal device. This helps improve efficiency of scheduling and configuring the terminal device by the network device.

In some examples, the fourth information may be included in one or more of the following messages: an RRC reconfiguration complete (RRCReconfigurationComplete) message, an RRC resume complete (RRCResumeComplete) message, or terminal device assistance information (UE assistance information).

S1204: The network device sends second configuration information, and correspondingly, the terminal device receives the second configuration information.

Optionally, the network device may send the second configuration information to the terminal device. The second configuration information may be used to configure uplink transmit switching in at least one band pair in the fourth band combination.

In some examples, after receiving the fourth information in S1203, the network device determines to schedule the terminal device based on the switching period indicated in the fourth capability information obtained in S1201. In this case, the network device may not send the second configuration information to the terminal device. In other words, if the network device determines not to update an uplink transmit channel switching configuration based on the fourth information, the network device may not send the second configuration information to the terminal device.

In some examples, after receiving the fourth information in S1203, the network device may schedule the terminal device based on the switching period indicated in the fourth information, and the network device may send the second configuration information to the terminal device.

In some examples, the second configuration information may be determined based on the fourth information received in S1203.

The network device may indicate, to the terminal device based on the fourth information sent by the terminal device, a switching period for a band pair configured by the network device. This helps ensure that the terminal device and the network device have consistent understanding of a switching period, thereby helping avoid a bit error or a packet loss caused by inconsistent understanding.

For example, when the fourth information indicates that the terminal device supports a plurality of groups of switching periods, the network device may determine the switching period for the configured band pair based on one of the plurality of groups of switching periods. The switching period configured by the network may be understood as a switching period applied when the network device schedules band pairs to perform uplink transmit channel switching.

In a possible implementation, the network device may determine the configured switching period based on priorities of bands in the band combination.

For example, the network device may determine a shorter switching period for a band pair with a higher priority. Priorities of different bands in a band combination may be determined based on a sequence of the different bands in the band combination. For details, refer to related content in S1203. For brevity, details are not described herein again.

In some examples, information about a switching period for a band pair used by the network device may be included in the second configuration information and sent to the terminal device.

The second configuration information may indicate a switching period for at least one band pair selected by the network device. For example, the second configuration information may indicate that a switching period for the band pair (A, B) is 35 μs, and a switching period for the band pair (A, C) is 140 μs.

In some examples, the second configuration information may indicate a group of switching periods selected by

the network device.

The first group of switching periods and the second group of switching periods in Table 8 are used as an example. The second configuration information may include an identifier of the first group of switching periods or an identifier of the second group of switching periods. For example, the identifier of the first group of switching periods is 1, and the identifier of the second group of switching periods is 2. The second configuration information may include the identifier 1 or the identifier 2, to indicate the first group of switching periods or the second group of switching periods.

The second configuration information explicitly indicates the switching period applied by the network device. This helps ensure that the terminal device and the network device have consistent understanding of a switching period, thereby helping avoid a bit error or a packet loss caused by inconsistent understanding.

In some examples, the second configuration information may not include related information of the switching period for the band pair used by the network device. In this case, after receiving the second configuration information, the terminal device may apply the switching period for the band pair based on the priorities of the bands in the band combination. For example, the terminal device may preferentially select a group of shorter switching periods for a band pair with a higher priority.

In some examples, the second configuration information may be included in the RRC reconfiguration message and/or the RRC resume message.

By receiving the second configuration information, the terminal device may determine whether the network device uses the switching period indicated in the fourth capability information or the switching period indicated in the fourth information. This helps the terminal device better determine hardware resource allocation based on the switching period configured by the network device, and helps ensure that the terminal device and the network device have consistent understanding of the switching period, thereby helping avoid a bit error or a packet loss caused inconsistent understanding.

In a possible implementation, in a scenario in which an uplink transmit switching capability of a fallback band combination supported by the terminal device is stronger than an uplink transmit switching capability of a same band pair in a parent band combination of the fallback band combination, a stronger uplink transmit capability, namely, a shorter uplink transmit switching period, in the fallback band combination may be indicated to the network device in the fourth information in this solution.

In a possible implementation, in a scenario in which an uplink transmit switching capability of a fallback band combination supported by the terminal device is weaker than an uplink transmit switching capability of a same band pair in a parent band combination of the fallback band combination, that is, when a same band pair in the fallback band combination has a longer switching period, a weaker capability (a longer switching period) may be reported in the fourth capability information for the parent band combination. When the network device configures the parent band combination, a stronger uplink transmit capability, namely, a shorter uplink transmit switching period, of the parent band combination is indicated to the network device in the fourth information in this solution. In this way, it can be ensured that a capability fallback rule in the conventional technology is followed, protocol impact is small, and network implementation complexity is reduced. According to this embodiment, a switching period ambiguity problem can be further avoided. When the terminal device has different switching periods for a same fallback band combination ABC in a band combination ABCD and a band combination ABCE (for example, switching periods for three band pairs in ABC are respectively 35 μs, 140 μs, 140 μs and 140 μs, 35 μs, 140 μs), the terminal device may report, in the capability information, that ABC in ABCD and ABCE has a same weaker switching period (for example, report that switching periods for the three band pairs in ABC are all 140 μs). When a combination configured by the network device is ABC, if the terminal device supports a shorter switching period (for example, 35 μs, 140 μs, 140 μs and/or 140 μs, 35 μs, 140 μs), the terminal device may report the shorter switching period to the network device by using the fourth information. In this way, the network device can accurately learn a stronger capability supported by the terminal device. In addition, a transmission bit error caused by inconsistence between switching periods for the terminal device and the network device can be avoided.

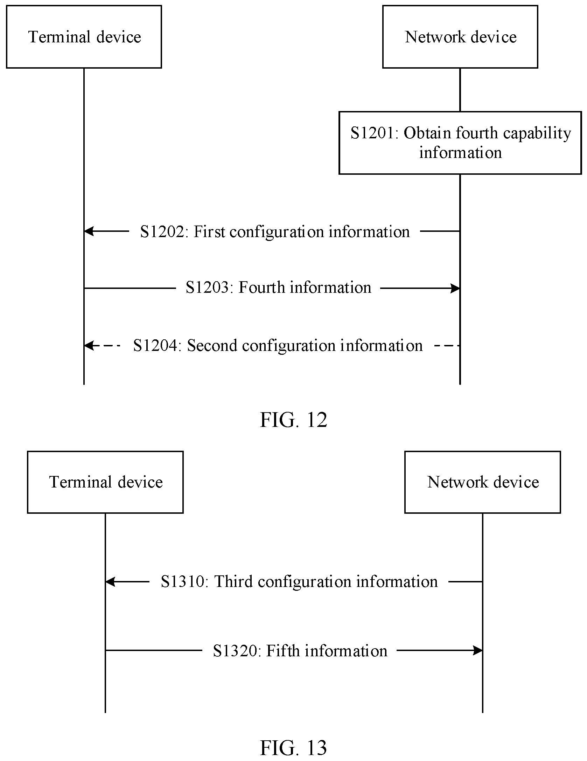

FIG. 13 shows another communication method according to an embodiment of this application. A terminal device may send fifth information to a network device, so that the network device may determine whether the terminal device supports an uplink transmit channel switching capability different from that configured by the network device. The network device may determine, based on the fifth information, to configure a stronger uplink transmit channel switching capability for the terminal device. Implementation of this technical solution helps ensure that the terminal device and the network device have consistent understanding of a switching period, thereby helping avoid a bit error or a packet loss caused by inconsistent understanding. In addition, the fifth information may include a plurality of groups of switching periods for a same band pair, and the network device may determine, based on one of the plurality of groups of switching periods, a switching period for configuring and scheduling uplink transmit switching. This helps improve flexibility of the network device.

S1310: The network device sends third configuration information, and correspondingly, the terminal device receives the third configuration information.

The third configuration information may be used to configure uplink transmit channel switching in at least one

band pair in a fifth band combination. The fifth band combination may be a band combination supported by the terminal device.

For ease of description, the at least one band pair in the fifth band combination is referred to as a second band pair set below. It should be understood that the second band pair set may include one or more band pairs.

For example, the fifth band combination may include a plurality of bands, and the third configuration information may be used to configure uplink transmit channel switching in one or more band pairs including the plurality of bands.

In some examples, the third configuration information may further indicate a switching period for uplink transmit switching in one or more band pairs included in the fifth band combination.

In some examples, the third configuration information may be determined based on capability information of the terminal device. The capability information of the terminal device may indicate a radio access capability of the terminal device, and the capability information of the terminal device may include a switching period for uplink transmit channel switching in at least one band pair in the fifth band combination supported by the terminal device. In other words, the network device may indicate, based on the capability information of the terminal device, the switching period for uplink switching in the one or more band pairs in the fifth band combination.

In some examples, the capability information of the terminal device may be determined based on one or more of the first capability information, the second capability information, or the third capability information in the foregoing embodiments.

In some examples, the third configuration information may be included in the RRC reconfiguration message and/or the RRC resume message.

S1320: The terminal device sends the fifth information, and correspondingly, the network device receives the fifth information.

In response to the third configuration information, the terminal device may send the fifth information to the network device, or the terminal device may send the fifth information to the network device based on the third configuration information.

In some examples, the fifth information indicates a switching period for uplink transmit switching in a fourth band pair in the fifth band combination supported by the terminal device, the fourth band pair is included in the second band pair set, and there may be a plurality of fourth band pairs. In other words, the fourth band pair is one or more of the one or more band pairs included in the second band pair set.

When there are a plurality of fourth band pairs, the fifth information may separately indicate switching periods for uplink transmit switching in the plurality of band pairs.

In some examples, a switching period that is for uplink transmit switching in the fourth band pair and that is indicated in the fifth information may be less than (shorter than) a switching period that is for uplink transmit switching in a corresponding band pair and that is included in the capability information of the terminal device.

In this case, the terminal device may select a shorter switching period indicated in the fifth information as the switching period for uplink transmit channel switching, and use the switching period to send uplink data.

In some examples, the fifth information may indicate a plurality of groups of switching periods for a same band pair.

The network device may determine, based on one of the plurality of groups of switching periods for the same band pair included in the fifth information, a switching period for configuring and scheduling uplink transmit switching, to help improve flexibility of the network device.

In some examples, when the terminal device supports a plurality of groups of switching periods, the network device may determine a switching period for a band pair based on a priority of a band in the fifth band combination.

For example, the network device may determine a shorter switching period for a band pair with a higher priority. Priorities of different bands in a band combination may be determined based on a sequence of the different bands in the band combination. For example, a band with a higher priority is ranked in a higher position, and a band with a lower priority is ranked in a lower position. In other words, a band with a highest priority in the band combination is ranked in a first position, and a band with a lowest priority is ranked in a last position.

For example, the third configuration information may indicate a band included in the fifth band combination, and a plurality of bands in the fifth band combination are ranked in descending order of priorities. A band ranked in a first position has a highest priority, a band ranked in a second position has a second highest priority, and so on.

A switching period for uplink transmit switching is configured and scheduled based on priorities of different bands in a band combination. This helps improve communication resource utilization and reduce a switching period for a band pair with a higher priority, thereby improving system performance.

In some examples, fourth information may be included in one or more of the following messages: an RRC reconfiguration complete message, an RRC resume complete message, or terminal device assistance information.

In some examples, the network device may send fourth configuration information to the terminal device. The fourth configuration information may be used to configure uplink transmit switching in at least one band pair in a fourth band combination.

In some examples, the fourth configuration information may be determined based on the fifth information.

In some examples, the fourth configuration information may indicate a group of switching periods selected by the network device. The group of switching periods may be determined based on priorities of bands in a band combination, to determine an applied switching period.

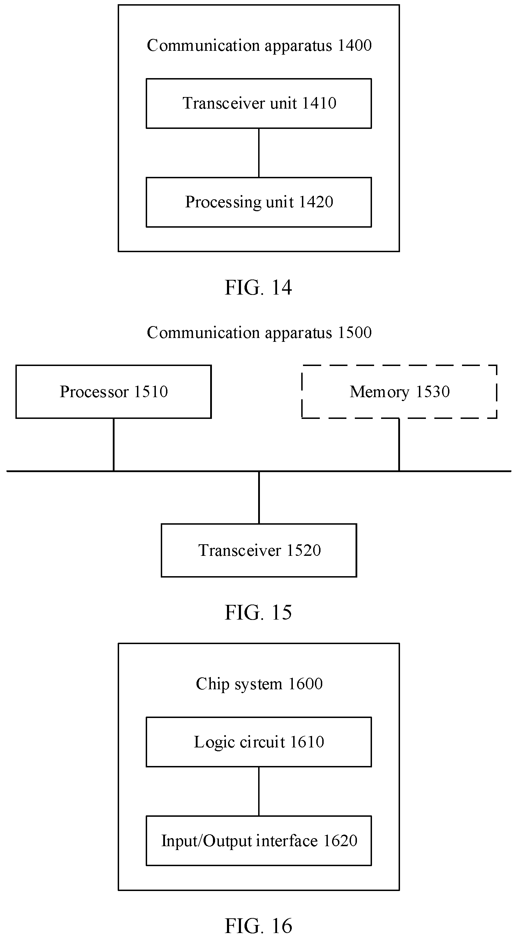

The foregoing describes in detail the communication methods provided in embodiments of this application with reference to FIG. 3 to FIG. 13. The following describes in detail apparatuses provided in embodiments of this application with reference to FIG. 14 to FIG. 16.

FIG. 14 is a block diagram of a communication apparatus according to an embodiment of this application. As shown in FIG. 14, the communication apparatus 1400 includes a transceiver unit 1410 and a processing unit 1420. The transceiver unit 1410 may implement a corresponding communication function, and the processing unit 1420 is configured to process data, so that the communication apparatus implements the foregoing method embodiments. The transceiver unit 1410 may also be referred to as a communication interface or a communication unit.

Optionally, the communication apparatus 1400 may further include a storage unit. The storage unit may be configured to store instructions and/or data. The processing unit 1420 may read the instructions and/or the data in the storage unit, to enable the communication apparatus to implement the foregoing method embodiments.

The communication apparatus 1400 may be configured to perform an action performed by the terminal device in the foregoing method embodiments. In this case, the communication apparatus 1400 may be the terminal device, or a component that may be configured in the terminal device. The transceiver unit 1410 is configured to perform a receiving/sending-related operation on a terminal device side in the foregoing method embodiments. The storage unit is configured to perform an operation related to data or instruction storage on the terminal device side in the foregoing method embodiments. The processing unit 1420 is configured to perform a processing-related operation on the terminal device side in the foregoing method embodiments.

Alternatively, the communication apparatus 1400 may be configured to perform an action performed by the network device in the foregoing method embodiments. In this case, the communication apparatus 1400 may be the network device, or a component that may be configured in the network device. The transceiver unit 1410 is configured to perform a receiving/sending-related operation on a network device side in the foregoing method embodiments. The storage unit is configured to perform an operation related to data or instruction storage on the network device side in the foregoing method embodiments. The processing unit 1420 is configured to perform a processing-related operation on the network device side in the foregoing method embodiments.

It should be understood that a specific process in which the units perform the foregoing corresponding steps is described in detail in the foregoing method embodiments. For brevity, details are not described herein.

The processing unit 1420 in the foregoing embodiment may be implemented by at least one processor or a processor-related circuit. The transceiver unit 1410 may be implemented by a transceiver or a transceiver-related circuit. The transceiver unit 1410 may also be referred to as a communication unit or a communication interface. The storage unit may be implemented by at least one memory.

FIG. 15 is a block diagram of another communication apparatus 1500 according to an embodiment of this application. As shown in the figure, the apparatus 1500 includes at least one processor 1510 and a transceiver 1520. The processor 1510 is coupled to a memory, and is configured to execute instructions stored in the memory, to send a signal and/or receive a signal. Optionally, the apparatus 1500 further includes a memory 1530, configured to store instructions. Optionally, the apparatus 1500 further includes the transceiver 1520, and the processor 1510 controls the transceiver 1520 to send a signal and/or receive a signal.

It should be understood that the processor 1510 and the memory 1530 may be integrated into one processing apparatus. The processor 1510 is configured to execute program code stored in the memory 1530 to implement the foregoing functions. During specific implementation, the memory 1530 may alternatively be integrated into the processor 1510, or may be independent of the processor 1510.

It should be further understood that the transceiver 1520 may include a transceiver (or referred to as a receive machine) and a transmitter (or referred to as a transmit machine). The transceiver may further include an antenna, and there may be one or more antennas. The transceiver 1520 may be a communication interface or an interface circuit.

For example, the transceiver 1520 in the apparatus 1500 may correspond to the transceiver unit in the foregoing embodiment, and the processor 1510 in the apparatus 1500 may correspond to the processing unit in the foregoing embodiment. It should be understood that a specific process in which the transceiver and the processor perform the foregoing corresponding steps is described in detail in the method embodiments. For brevity, details are not described herein again.

FIG. 16 is a block diagram of a chip system 1600 according to an embodiment of this application. The chip system 1600 (or may be referred to as a processing system) includes a logic circuit 1610 and an input/output interface (input/output interface) 1620.

The logic circuit 1610 may be a processing circuit in the chip system 1600. The logic circuit 1610 may be coupled to a storage unit, and invoke instructions in the storage unit, so that the chip system 1600 can implement the methods and

functions in embodiments of this application. The input/output interface 1620 may be an input/output circuit in the chip system 1600, and outputs information processed by the chip system 1600, or inputs to-be-processed data or signaling information to the chip system 1600 for processing.

In a solution, the chip system 1600 is configured to implement operations performed by the terminal device in the foregoing method embodiments.

For example, the logic circuit 1610 is configured to implement a processing-related operation performed by the terminal device in the foregoing method embodiments, and the input/output interface 1620 is configured to implement sending and/or receiving-related operations performed by the terminal device in the foregoing method embodiments.

In another solution, the chip system 1600 is configured to implement operations performed by the network device in the foregoing method embodiments.

For example, the logic circuit 1610 is configured to implement a processing-related operation performed by the network device in the foregoing method embodiments, and the input/output interface 1620 is configured to implement sending and/or receiving-related operations performed by the network device in the foregoing method embodiments.

An embodiment of this application further provides a computer-readable storage medium. The computer-readable storage medium stores computer instructions for implementing a method performed by a communication apparatus (for example, a terminal device or a network device) in the foregoing method embodiments.

An embodiment of this application further provides a computer program product, including instructions. When the instructions are executed by a computer, the method performed by a communication apparatus (for example, a terminal device or a network device) in the foregoing method embodiments is implemented.

An embodiment of this application further provides a communication system. The communication system includes the terminal device and the network device in the foregoing embodiments.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed apparatus and method may be implemented in other manners. For example, the foregoing apparatus embodiments are only examples. For example, division into the foregoing units is only logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces, and indirect couplings or communication connections between apparatuses or units may be implemented in an electrical, mechanical, or another form.

The foregoing units described as separate parts may or may not be physically separate, and parts displayed as units may or may not be physical units, may be located in one position, or may be distributed on a plurality of network units. A part or all of the units may be selected based on actual requirements to implement the solutions provided in this application.

In addition, functional units in embodiments of this application may be integrated into one unit, each of the units may exist alone physically, or two or more units may be integrated into one unit.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

When software is used to implement embodiments, all or a part of the embodiments may be implemented in a form of computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. For example, the computer may be a personal computer, a server, a network device, or the like. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner.

When the functions are implemented in a form of software functional unit and sold or used as an independent product, the functions may be stored in a computer-readable storage medium. Based on such an understanding, the technical solutions of this application essentially, the part contributing to the conventional technology, or a part of the technical solutions may be implemented in a form of software product. The computer software product is stored in a

storage medium, and includes several instructions for enabling a computer device (which may be a personal computer, a server, a network device, or the like) to perform all or a part of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

**1.** A communication method, wherein the method comprises:

obtaining configuration information of a first configured grant CG, wherein the configuration information of the first CG comprises information about a periodicity of the first CG; and

if the periodicity of the first CG or the first CG is associated with an extended periodicity or an SDT-related extended periodicity, determining information about a first CG occasion based on a first value, information about a first H-SFN, information about a first SFN, and the information about the periodicity of the first CG, wherein the first value is associated with one hyper frame periodicity.

**2.** The communication method according to claim 1, wherein that the first value is associated with the one hyper frame periodicity comprises:

$$\text{First value}=\text{First coefficient}\times\text{Second coefficient}\times\text{numberOfSlotsPerFrame}\times\text{numberOfSymbolsPerSlot};$$

or

the first value is a quantity of symbols comprised in the one hyper frame periodicity, wherein

the first coefficient is 1024 or a quantity of hyper frames comprised in the one hyper frame periodicity, the second coefficient is 1024 or a quantity of frames comprised in one hyper frame, the numberOfSlotsPerFrame is a quantity of slots comprised in one frame, and the numberOfSymbolsPerSlot is a quantity of symbols comprised in one slot.

**3.** The communication method according to claim 1 or 2, wherein the one hyper frame periodicity comprises 1024 hyper frames.

**4.** The communication method according to any one of claims 1 to 3, wherein that the first offset is associated with a hyper frame whose H-SFN is equal to 0 comprises:
the first offset is an offset with respect to a frame whose SFN is equal to the first SFN in the hyper frame whose H-SFN is equal to 0.

**5.** The communication method according to any one of claims 1 to 4, wherein
the configuration information of the first CG further comprises the information about the first H-SFN and the information about the first SFN.

**6.** The communication method according to any one of claims 1 to 5, wherein determining, by the terminal device, the information about the first H-SFN based on the information about the first SFN comprises any one or more of the following:

if the information about the first SFN indicates 512, and time at which the terminal device obtains the configuration information of the first CG is in a first half of one hyper frame, determining, by the terminal device, that the first H-SFN is an H-SFN 1; or

if time at which the terminal device obtains the configuration information of the first CG is in a second half of one hyper frame, determining, by the terminal device, that the first H-SFN is an H-SFN 2; or

if the information about the first SFN indicates 0, determining, by the terminal device, that the first H-SFN is an H-

SFN 2, wherein
the H-SFN 1 is an H-SFN of a hyper frame previous to a hyper frame in which the terminal device obtains the configuration information of the first CG, and the H-SFN 2 is an H-SFN of the hyper frame in which the terminal device obtains the configuration information of the first CG.

**7.** The communication method according to any one of claims 1 to 6, wherein determining the information about the first CG occasion based on the first value, the information about the first H-SFN, the information about the first SFN, and the information about the periodicity of the first CG comprises: determining the information about the first CG occasion according to the following formula:

[((H-SFN×1024+SFN)×*numberOfSlotsPerFrame*×*numberOfSymbolsPerSlot*)+(slot number in the frame×*numberOfSymbolsPerSlot*)+symbol number in the slot]=((*timeReferenceH-SFN*×1024+*timeReferenceSFN*)×*numberOfSlotsPerFrame*×*numberOfSymbolsPerSlot*+*timeDomainOffset*×*numberO fSymbolsPerSlot* +S+N×*periodicity*)modulo(1024×1024×*numberOfSlotsPerFrame*×*numberOfSymbolsPerSlot*), wherein
the H-SFN is a hyper frame number of a hyper frame in which the first CG occasion is located, the SFN is a frame number of a frame in which the first CG occasion is located, the slot number in the frame is an index of a slot in which the first CG occasion is located in one frame, the symbol number in the slot is an index of a symbol in which the first CG occasion is located in one slot, the timeReferenceH-SFN is the first H-SFN, the timeReferenceSFN is the first SFN, the timeDomainOffset is an offset with respect to a frame whose SFN is equal to the timeReferenceSFN, S is an index of a start symbol, the periodicity is the periodicity of the first CG, and N≥0.

**8.** The communication method according to any one of claims 1 to 7, wherein determining the information about the first CG occasion based on the first value, information about the first offset, the information about the first SFN, and the information about the periodicity of the first CG comprises: determining the information about the first CG occasion according to the following formula:

[((H-SFN×1024+SFN)×*numberOfSlotsPerFrame*×*numberOfSymbolsPerSlot*)+(slot number in the frame×*numberOfSymbolsPerSlot*)+symbol number in the slot]=(*timeReferenceSFN*×*numberOfSlotsPerFrame*×*numberOfSymbolsPerSlot*+*timeDomainOffset*×*numberOfSymb olsPerSlot*+S+N×*periodicity*)modulo(1024×1024×*numberOfSlotsPerFrame*×*numberOfSymbolsPerSlot*), wherein
the H-SFN is the hyper frame number of the hyper frame in which the first CG occasion is located, the SFN is the frame number of the frame in which the first CG occasion is located, the slot number in the frame is the index of the slot in which the first CG occasion is located in the one frame, the symbol number in the slot is the index of the symbol in which the first CG occasion is located in the one slot, the timeReferenceSFN is the first SFN, the timeDomainOffset is the first offset, S is the index of the start symbol, the periodicity is the periodicity of the first CG, and N≥0.

**9.** The communication method according to any one of claims 1 to 8, wherein
the information about the first CG occasion comprises information about one or more of the following: a hyper frame, a frame, a slot, a symbol, or a subframe.

**10.** The communication method according to any one of claims 1 to 9, wherein the first CG occasion is an $N^{th}$ CG occasion, and N≥0.

**11.** The communication method according to any one of claims 1 to 10, wherein the method further comprises:
if the periodicity of the first CG or the first CG is not associated with the extended periodicity or the SDT-related extended periodicity, determining information about the $N^{th}$ CG occasion according to the following formula:

[(SFN×*numberOfSlotsPerFrame*×*numberOfSymbolsPerSlot*)+(slot number in the frame×*numberOfSymbolsPerSlot*)+symbol number in the slot]=(*timeReferenceSFN*×*numberOfSlotsPerFrame*×*numberOfSymbolsPerSlot*+*timeDomainOffset*×*numberOfSymb olsPerSlot*+S+N×*periodicity*)modulo(1024×*numberOfSlotsPerFrame*×*numberOfSymbolsPerSlot*), wherein
the SFN is the frame number of the frame in which the first CG occasion is located, the slot number in the frame is the index of the slot in which the first CG occasion is located in the one frame, the symbol number in the slot is the index of the symbol in which the first CG occasion is located in the one slot, the timeReferenceSFN indicates an SFN used to determine an offset of a resource in time domain, the timeDomainOffset is the offset with respect to the frame whose SFN is equal to the timeReferenceSFN, S is the index of the start symbol, the periodicity is the periodicity of the first CG, and N≥0.

**12.** A communication method, wherein the method comprises:

sending configuration information of a first configured grant CG, wherein the configuration information of the first CG comprises information about a periodicity of the first CG; and
determining information about a first CG occasion based on a first value, information about a first H-SFN, information about a first SFN, and the information about the periodicity of the first CG; or
determining information about a first CG occasion based on a first value, information about a first offset, information about a first SFN, and the information about the periodicity of the first CG, wherein
the first value is associated with one hyper frame periodicity, and the first offset is associated with a hyper frame whose H-SFN is equal to 0 and the first SFN.

**13.** The communication method according to claim 12, wherein that the first value is associated with the one hyper frame periodicity comprises:

$$\text{First value} = \text{First coefficient} \times \text{Second coefficient} \times \text{numberOfSlotsPerFrame} \times \text{numberOfSymbolsPerSlot};$$

or

the first value is a quantity of symbols comprised in the one hyper frame periodicity, wherein
the first coefficient is 1024 or a quantity of hyper frames comprised in the one hyper frame periodicity, the second coefficient is 1024 or a quantity of frames comprised in one hyper frame, the numberOfSlotsPerFrame is a quantity of slots comprised in one frame, and the numberOfSymbolsPerSlot is a quantity of symbols comprised in one slot.

**14.** The communication method according to claim 12 or 13, wherein the one hyper frame periodicity comprises 1024 hyper frames.

**15.** The communication method according to any one of claims 12 to 14, wherein that the first offset is associated with the hyper frame whose H-SFN is equal to 0 comprises:
the first offset is an offset with respect to a frame whose SFN is equal to the first SFN in the hyper frame whose H-SFN is equal to 0.

**16.** The communication method according to any one of claims 12 to 15, wherein
the configuration information of the first CG further comprises the information about the first H-SFN and the information about the first SFN.

**17.** The communication method according to any one of claims 12 to 16, wherein determining, by the terminal device, the information about the first H-SFN based on the information about the first SFN comprises any one or more of the following:

if the information about the first SFN indicates 512, and time at which the terminal device obtains the configuration information of the first CG is in a first half of one hyper frame, determining, by the terminal device, that the first H-SFN is an H-SFN 1; or
if time at which the terminal device obtains the configuration information of the first CG is in a second half of one hyper frame, determining, by the terminal device, that the first H-SFN is an H-SFN 2; or
if the information about the first SFN indicates 0, determining, by the terminal device, that the first H-SFN is an H-SFN 2, wherein
the H-SFN 1 is an H-SFN of a hyper frame previous to a hyper frame in which the terminal device obtains the configuration information of the first CG, and the H-SFN 2 is an H-SFN of the hyper frame in which the terminal device obtains the configuration information of the first CG.

**18.** The communication method according to any one of claims 12 to 17, wherein determining the information about the first CG occasion based on the first value, the information about the first H-SFN, the information about the first SFN, and the information about the periodicity of the first CG comprises: determining the information about the first CG occasion according to the following formula:

[((H-SFN×1024+SFN)×*numberOfSlotsPerFrame*×*numberOfSymbolsPerSlot*)+(slot number in the frame×-

*numberOfSymbolsPerSlot*)+symbol number in the slot]=((*timeReferenceH-SFN*×1024+*timeReferenceSFN*)×*numberOfSlotsPerFrame*×*numberOfSymbolsPerSlot*+*timeDomainOffset*×*numberOfSymbolsPerSlot* +S+N×*periodicity*)modulo(1024×1024×*numberOfSlotsPerFrame*×*numberOfSymbolsPerSlot*), wherein
the H-SFN is a hyper frame number of a hyper frame in which the first CG occasion is located, the SFN is a frame number of a frame in which the first CG occasion is located, the slot number in the frame is an index of a slot in which the first CG occasion is located in one frame, the symbol number in the slot is an index of a symbol in which the first CG occasion is located in one slot, the timeReferenceH-SFN is the first H-SFN, the timeReferenceSFN is the first SFN, the timeDomainOffset is an offset with respect to a frame whose SFN is equal to the timeReferenceSFN, S is an index of a start symbol, the periodicity is the periodicity of the first CG, and N≥0.

**19.** The communication method according to any one of claims 12 to 18, wherein determining the information about the first CG occasion based on the first value, information about the first offset, the information about the first SFN, and the information about the periodicity of the first CG comprises: determining the information about the first CG occasion according to the following formula:

[((H-SFN×1024+SFN)×*numberOfSlotsPerFrame*×*numberOfSymbolsPerSlot*)+(slot number in the frame×*numberOfSymbolsPerSlot*)+symbol number in the slot]=(*timeReferenceSFN*×*numberOfSlotsPerFrame*×*numberOfSymbolsPerSlot*+*timeDomainOffset*×*numberOfSymbolsPerSlot*+S+N×*periodicity*)modulo(1024×1024×*numberOfSlotsPerFrame*×*numberOfSymbolsPerSlot*), wherein
the H-SFN is the hyper frame number of the hyper frame in which the first CG occasion is located, the SFN is the frame number of the frame in which the first CG occasion is located, the slot number in the frame is the index of the slot in which the first CG occasion is located in the one frame, the symbol number in the slot is the index of the symbol in which the first CG occasion is located in the one slot, the timeReferenceSFN is the first SFN, the timeDomainOffset is the first offset, S is the index of the start symbol, the periodicity is the periodicity of the first CG, and N≥0.

**20.** The communication method according to any one of claims 12 to 19, wherein
the information about the first CG occasion comprises information about one or more of the following: a hyper frame, a frame, a slot, a symbol, or a subframe.

**21.** The communication method according to any one of claims 12 to 20, wherein the first CG occasion is an $N^{th}$ CG occasion, and N≥0.

**22.** The communication method according to any one of claims 12 to 21, wherein the method further comprises:
if the periodicity of the first CG or the first CG is not associated with the extended periodicity or the SDT-related extended periodicity, determining information about the $N^{th}$ CG occasion according to the following formula:

[(SFN×*numberOfSlotsPerFrame*×*numberOfSymbolsPerSlot*)+(slot number in the frame×*numberOfSymbolsPerSlot*)+symbol number in the slot]=(*timeReferenceSFN*×*numberOfSlotsPerFrame*×*numberOfSymbolsPerSlot*+*timeDomainOffset*×*numberOfSymbolsPerSlot*+S+N×*periodicity*)modulo(1024×*numberOfSlotsPerFrame*×*numberOfSymbolsPerSlot*), wherein
the SFN is the frame number of the frame in which the first CG occasion is located, the slot number in the frame is the index of the slot in which the first CG occasion is located in the one frame, the symbol number in the slot is the index of the symbol in which the first CG occasion is located in the one slot, the timeReferenceSFN indicates an SFN used to determine an offset of a resource in time domain, the timeDomainOffset is the offset with respect to the frame whose SFN is equal to the timeReferenceSFN, S is the index of the start symbol, the periodicity is the periodicity of the first CG, and N≥0.

**23.** A communication method, applied to a terminal device and comprising:

receiving a capability query message; and
sending capability information, wherein the capability information comprises first information, and the first information indicates whether a first band combination supports fallback of an uplink transmit channel switching capability.

**24.** The communication method according to claim 23, wherein the first information further indicates whether an uplink transmit channel switching capability of a second band combination is the same as the uplink transmit channel switching capability of the first band combination, the uplink transmit channel switching capability comprises a

switching period for uplink transmit channel switching, and the second band combination is a fallback band combination of the first band combination.

**25.** The communication method according to claim 24, wherein the capability information further comprises the second band combination and the uplink transmit channel switching capability of the second band combination.

**26.** The communication method according to claim 24 or 25, wherein the first information further comprises index information, and the index information indicates a position of the second band combination in at least one band combination that is for uplink transmit channel switching and that is supported by the terminal device.

**27.** The communication method according to any one of claims 23 to 26, wherein the capability information comprises capability information of the first band combination, the capability information of the first band combination indicates the uplink transmit channel switching capability of the first band combination, and the capability information of the first band combination comprises the first information.

**28.** The communication method according to claim 23, wherein the first information indicates that the first band combination does not support the fallback of the uplink transmit channel switching capability;

the capability information comprises capability information of the first band combination, the capability information of the first band combination comprises second information and third information, the second information indicates the uplink transmit channel switching capability of the first band combination, and the third information indicates an uplink transmit channel switching capability of a second band combination; and
the second band combination is a fallback band combination of the first band combination, and the uplink transmit channel switching capability of the first band combination is different from the uplink transmit channel switching capability of the second band combination.

**29.** The communication method according to claim 23, wherein the first information indicates that the first band combination does not support the fallback of the uplink transmit channel switching capability; and
the first information further indicates that a switching period for uplink transmit channel switching in a second band combination is a target switching period, the second band combination is a fallback band combination of the first band combination, and the target switching period is a longest switching period for uplink transmit channel switching in all band pairs comprised in the first band combination or the second band combination.

**30.** The communication method according to any one of claims 24 to 29, wherein a quantity of bands comprised in the second band combination is less than a quantity of bands comprised in the first band combination.

**31.** A communication method, applied to a network device and comprising:

sending a capability query message; and
receiving capability information, wherein the capability information comprises first information, and the first information indicates whether a first band combination supports fallback of an uplink transmit channel switching capability.

**32.** The communication method according to claim 31, wherein the first information further indicates whether an uplink transmit channel switching capability of a second band combination is the same as the uplink transmit channel switching capability of the first band combination, the uplink transmit channel switching capability comprises a switching period for uplink transmit channel switching, and the second band combination is a fallback band combination of the first band combination.

**33.** The communication method according to claim 32, wherein the capability information further comprises the second band combination and the uplink transmit channel switching capability of the second band combination.

**34.** The communication method according to claim 32 or 33, wherein the first information further comprises index information, and the index information indicates a position of the second band combination in at least one band combination that is for uplink transmit channel switching and that is supported by a terminal device.

**35.** The communication method according to any one of claims 31 to 34, wherein the capability information comprises capability information of the first band combination, the capability information of the first band combination indicates

the uplink transmit channel switching capability of the first band combination, and the capability information of the first band combination comprises the first information.

**36.** The communication method according to claim 31, wherein the first information indicates that the first band combination does not support the fallback of the uplink transmit channel switching capability;

the capability information comprises capability information of the first band combination, the capability information of the first band combination comprises second information and third information, the second information indicates the uplink transmit channel switching capability of the first band combination, and the third information indicates an uplink transmit channel switching capability of the second band combination; and
the second band combination is a fallback band combination of the first band combination, and the uplink transmit channel switching capability of the first band combination is different from the uplink transmit channel switching capability of the second band combination.

**37.** The communication method according to claim 31, wherein the first information indicates that the first band combination does not support the fallback of the uplink transmit channel switching capability; and
the first information further indicates that a switching period for uplink transmit channel switching in a second band combination is a target switching period, the second band combination is a fallback band combination of the first band combination, and the target switching period is a longest switching period for uplink transmit channel switching in all band pairs comprised in the first band combination or the second band combination.

**38.** The communication method according to any one of claims 32 to 36, wherein a quantity of bands comprised in the second band combination is less than a quantity of bands comprised in the first band combination.

**39.** A communication apparatus, wherein the apparatus comprises a unit configured to perform the method according to any one of claims 1 to 11, or a unit configured to perform the method according to any one of claims 12 to 22, or a unit configured to perform the method according to any one of claims 23 to 30, or a unit configured to perform the method according to any one of claims 31 to 38.

**40.** A communication apparatus, comprising:
a processor, wherein the processor is coupled to a memory, the memory stores instructions, and when the instructions are run by the processor, the apparatus is enabled to perform the method according to any one of claims 1 to 11, or perform the method according to any one of claims 12 to 22, or perform the method according to any one of claims 23 to 30, or perform the method according to any one of claims 31 to 38.

**41.** A computer-readable storage medium, wherein the computer-readable storage medium is configured to store a computer program, and when the computer program is run on a computer, the computer is enabled to perform the method according to any one of claims 1 to 11, or perform the method according to any one of claims 12 to 22, or perform the method according to any one of claims 23 to 30, or perform the method according to any one of claims 31 to 38.

**42.** A computer program product, wherein the computer program product comprises computer program code, and when the computer program code is run by a communication apparatus, the method according to any one of claims 1 to 11 is implemented, or the method according to any one of claims 12 to 22 is performed, or the method according to any one of claims 23 to 30 is performed, or the method according to any one of claims 31 to 38 is performed.

AMF/UPF
AMF/UPF
5GC
NG
NG
NG
NG
NG
NG
NG
NG
Xn
Xn
Xn
Xn
gNB
gNB
ng-eNB
ng-eNB
NG-RAN

FIG. 1

gNB-CU-CP
gNB-CU-UP
E1
F1-C
F1-U
gNB-DU
gNB-DU
gNB

FIG. 2

Terminal device
Network device
S110: Capability query message
S120: Capability information

FIG. 3

Terminal device
Network device
S201: First capability query message
S202: First capability information

FIG. 4

Terminal device
Network device
S301: Second capability query message
S302: Second capability information

FIG. 5

Terminal device
Network device
S401: Third capability query message
S402: Third capability information

FIG. 6

Terminal device
Source network device
Target network device
S701: RRC re-establishment request message
S702: Obtain a terminal context request message
S703: Obtain a terminal context response message
S704: RRC re-establishment message
S704a: RRC re-establishment complete message
S705: RRC reconfiguration message
S705a: RRC reconfiguration complete message

FIG. 7

Terminal device
Second network device
First network device
S810: RRC re-establishment request message (UE ID)
S802: First request message
S803: Third message (first indication)
RRC re-establishment message
RRC re-establishment complete message
S804: RRC full reconfiguration message
RRC reconfiguration complete message
One CG periodicity
One CG periodicity

FIG. 8

FIG. 9A

FIG. 9B

S1010: Obtain configuration information of a first CG

S1020: A terminal device determines information about a first CG occasion based on a first value, information about a first H-SFN, information about a first SFN, and information about a periodicity of the first CG, or a terminal device determines information about a first CG occasion based on a first value, information about a first offset, information about a first SFN, and information about a periodicity of the first CG

FIG. 10

S1110: Obtain configuration information of a first CG

S1120: A terminal device determines information about a first CG occasion based on a first value, information about a first H-SFN, and information about a periodicity of the first CG

FIG. 11

Terminal device
Network device
S1201: Obtain fourth capability information
S1202: First configuration information
S1203: Fourth information
S1204: Second configuration information

FIG. 12

Terminal device
Network device
S1310: Third configuration information
S1320: Fifth information

FIG. 13

Communication apparatus 1400
Transceiver unit 1410
Processing unit 1420

FIG. 14

Communication apparatus 1500
Processor 1510
Memory 1530
Transceiver 1520

FIG. 15

Chip system 1600
Logic circuit 1610
Input/Output interface 1620

FIG. 16

## INTERNATIONAL SEARCH REPORT

International application No.
**PCT/CN2024/129352**

**A. CLASSIFICATION OF SUBJECT MATTER**

H04W 36/16(2009.01)i

According to International Patent Classification (IPC) or to both national classification and IPC

**B. FIELDS SEARCHED**

Minimum documentation searched (classification system followed by classification symbols)

IPC：H04W

Documentation searched other than minimum documentation to the extent that such documents are included in the fields searched

Electronic data base consulted during the international search (name of data base and, where practicable, search terms used)

CNABS; CNTXT; VEN; USTXT; EPTXT; WOTXT; CNKI; 3GPP: 授权, 许可, 配置, 周期, 扩展, 关联, 时隙, 时机, 超帧, 偏移, 小数据传输, 回退, CG, SDT, SFN, H-SFN, configur+, grant, offset, time, reference, domain, occasion, degrad

**C. DOCUMENTS CONSIDERED TO BE RELEVANT**

| Category* | Citation of document, with indication, where appropriate, of the relevant passages | Relevant to claim No. |
|---|---|---|
| X | CN 114916077 A (HUAWEI TECHNOLOGIES CO., LTD.) 16 August 2022 (2022-08-16) claims 1-23, and description, paragraphs [0055]-[0317] | 1-22, 39-42 |
| X | CN 116744392 A (HONOR DEVICE CO., LTD.) 12 September 2023 (2023-09-12) claims 1-14, and description, paragraphs [0032]-[0245] | 23-28, 39-42 |
| A | CN 115278653 A (CHINA TELECOM CORP., LTD.) 01 November 2022 (2022-11-01) entire document | 1-42 |
| A | CN 115315001 A (BEIJING SAMSUNG TELECOM R&D CENTER et al.) 08 November 2022 (2022-11-08) entire document | 1-42 |
| A | CN 115707110 A (HUAWEI TECHNOLOGIES CO., LTD.) 17 February 2023 (2023-02-17) entire document | 1-42 |
| A | CN 116326104 A (BEIJING XIAOMI MOBILE SOFTWARE CO., LTD.) 23 June 2023 (2023-06-23) entire document | 1-42 |

☐ Further documents are listed in the continuation of Box C.   ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **17 January 2025** | **29 January 2025** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | Telephone No. |

Form PCT/ISA/210 (second sheet) (July 2022)

**INTERNATIONAL SEARCH REPORT**
**Information on patent family members**

International application No.
**PCT/CN2024/129352**

| Patent document cited in search report | Publication date (day/month/year) | Patent family member(s) | Publication date (day/month/year) |
|---|---|---|---|
| CN 114916077 A | 16 August 2022 | None | |
| CN 116744392 A | 12 September 2023 | None | |
| CN 115278653 A | 01 November 2022 | None | |
| CN 115315001 A | 08 November 2022 | None | |
| CN 115707110 A | 17 February 2023 | None | |
| CN 116326104 A | 23 June 2023 | None | |

Form PCT/ISA/210 (patent family annex) (July 2022)

## REFERENCES CITED IN THE DESCRIPTION

*This list of references cited by the applicant is for the reader’s convenience only. It does not form part of the European patent document. Even though great care has been taken in compiling the references, errors or omissions cannot be excluded and the EPO disclaims all liability in this regard.*

### Patent documents cited in the description


- CN 202311455326
- CN 202311541640